# EUROPEAN PATENT SPECIFICATION

(11) **EP 1 524 673 B1**
(45) Date of publication and mention of the grant of the patent: **19.01.2011**
(21) Application number: 03788014.3
(22) Date of filing: 23.07.2003
(51) Int. Cl.: G21C 19/32, G21F 5/00, G21F 9/36

(54) **CASK AND METHOD OF PRODUCING THE SAME**
FASS UND VERFAHREN ZU SEINER HERSTELLUNG
CHATEAU DE TRANSPORT ET SON PROCEDE DE PRODUCTION

(30) Priority: 23.07.2002 JP 2002214587
(43) Date of publication of application: 20.04.2005
(73) Proprietor: MITSUBISHI HEAVY INDUSTRIES, LTD., Tokyo 108-8215 (JP)
(72) Inventor: TAMAKI, Hiroki c/o KOBE Shipyard & Machinery Works, 1-chome Hyogo-ku, Kobe, Hyogo 652-8585 (JP)
(74) Representative: HOFFMANN EITLE
(86) International application number: PCT/JP2003/009343
(87) International publication number: WO 2004/017331

(56) References cited:
- EP-A- 0 843 318
- EP-A1- 0 087 350
- EP-A1- 0 843 318
- EP-A2- 1 246 204
- WO-A1-02/059904
- DE-A1- 4 032 343
- FR-A1- 2 791 805
- JP-A- 2 024 599
- JP-A- 2 098 700
- JP-A- 3 002 695
- JP-A- 4 036 697
- JP-A- 4 357 498
- JP-A- 9 512 334
- JP-A- 11 295 483
- JP-A- 48 058 299
- JP-A- 55 059 394
- JP-A- 58 202 899
- JP-A- 59 182 396
- JP-A- 61 102 596
- JP-A- 2001 074 884
- JP-A- 2001 201 595
- JP-A- 2001 318 187
- JP-A- 2003 240 890
- JP-U- 60 129 700
- JP-U- 61 203 398
- US-A- 3 851 179

## Description

The present invention relates to a cask for containing and storing spent fuel assembly with excellent heat dissipation performance to dissipate decay heat of the spent fuel assembly to the air, and a method of manufacturing the cask.

### BACKGROUND ART

A nuclear fuel assembly at the end of the nuclear fuel cycle, which has been irradiated to the extent that it is no longer usable, is referred to as a spent fuel assembly. Since the spent fuel assembly includes highly radioactive materials such as FP, it is necessary to thermally cool down the spent fuel assembly. Therefore, the spent fuel assembly is cooled down in a cooling pit in a nuclear power plant for a predetermined period (one year to three years). Thereafter, the spent fuel assembly is contained in a cask that is a radiation shielding container, transported to a reprocessing facility, and stored. The spent fuel assembly is inserted in a basket cell installed in the cask one by one to ensure an appropriate holding power against vibrations during being transported.

Various types of casks are disclosed in, for example, "Nuclear Power eye" (published by Nikkan Kogyo Shuppan Production, April 1 st, 1998) and Japanese Patent Application Laid-Open No. H1-86098. A cask that is a assumed model for the development of the present invention will be explained below. The following explanation is given for convenience sake, and does not mean a so-called well-known or official explanation.

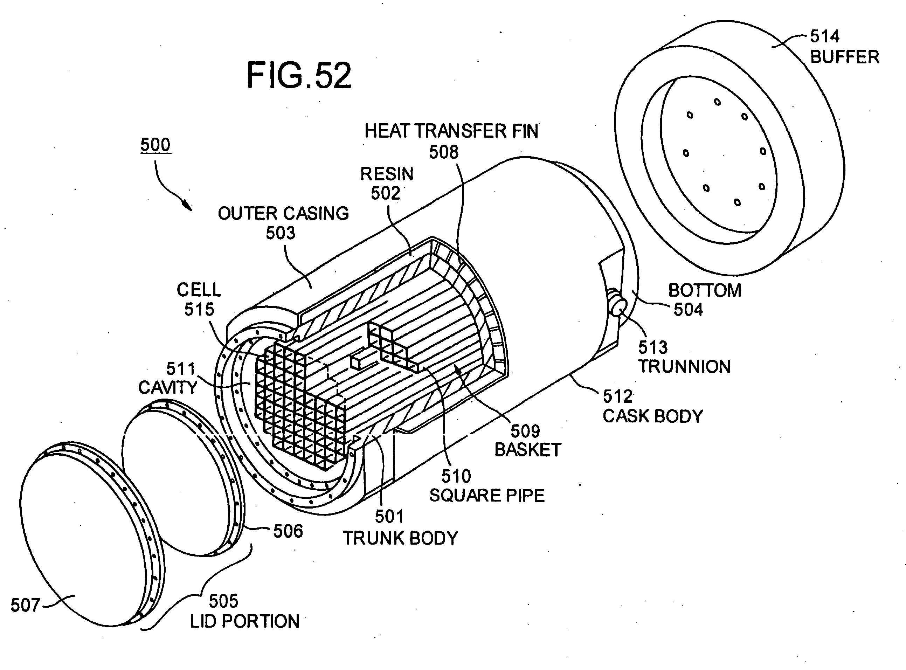

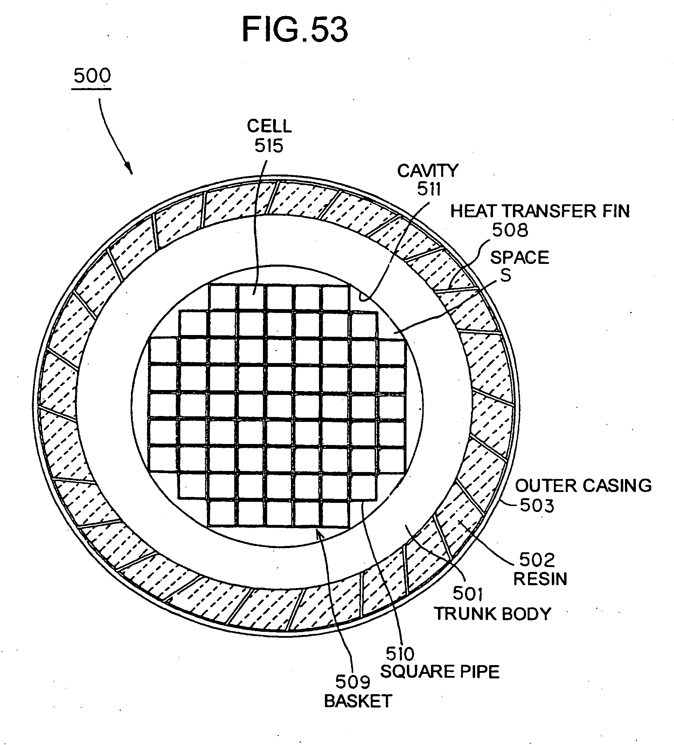

Fig. 52 is a perspective view of an example of the cask. Fig. 53 is a cross section of the cask shown in Fig. 52 in an axial direction. A cask 500 includes a cylindrical trunk body 501, a resin 502 that is a neutron shielding body provided on the outer circumference of the trunk body 501, an outer casing 503, a bottom 504, and a lid portion 505. The trunk body 501 and the bottom 504 are forged parts made of carbon steel, being a gamma ray shielding body. The lid portion 505 includes a first lid 506 and a second lid 507 made of stainless steel or the like. The trunk body 501 and the bottom 504 are joined by butt-welding. The first lid 506 and the second lid 507 are secured by bolts of stainless steel or the like with respect to the trunk body 501. A metal O-ring is interposed between the lid portion 505 and the trunk body 501 to maintain inside airtightness.

A plurality of heat transfer fins 508 for heat conduction is provided between the trunk body 501 and the outer casing 503. The resin 502 is injected into a space formed by the heat transfer fins 508 in a flow state, cooled, and solidified. As shown in Fig. 53, a basket 509 has a configuration that a plurality of square pipes 510 are aggregated in a bundle, and inserted into a cavity 511 in the trunk body 501.

The square pipe 510 is made of an aluminum alloy obtained by mixing a neutron absorber (boron: B) therein, so that the inserted spent fuel assembly does not reach the neutron criticality. A trunnion 513 is provided respectively on the opposite sides of a cask body 512 for suspending the cask 500 (one is not shown). Further, a buffer 514 incorporating wood or the like as a shock absorbing material therein is fitted to the opposite ends of the cask body 512 (one is not shown).

The spent fuel assembly contained in the basket 509 generates decay heat during storage. The decay heat is released to the air from the outer casing 503 of the cask 500. However, if heat dissipation is not sufficiently performed, creeping of the O-ring interposed between the lid portion 505 and the trunk body 501 may proceed. Further, insufficient heat dissipation from the outer casing 503 necessitates a material having an excellent heat resistance for the material forming the basket 509, thereby causing a cost increase in the manufacturing of the cask 500. Particularly, the spent fuel assembly of high degree of burnup and short cooling period has a high amount of heat release so that high heat dissipation performance is required for the cask 500 for containing such spent fuel assembly.

To cope with the above problems, EP0843318A1 discloses a cask equipped with grooves on the outer casing. This cask has a configuration that a cylindrical-shaped integral outer casing with grooves thereon is fitted in the trunk body of the cask, and the trunk body and the heat transfer fins of the cask are thermally coupled. As the method of forming grooves on the outer casing, casting and cutting are mentioned. However, a specific method of fitting the outer casing in the trunk body of the cask via the heat transfer fins is not disclosed, and hence it is not clear if it can be realized.

DE 4 032 343 discloses a spent fuel storage container, wherein limbs are welded to an inner container wall and are joined by angled roofs welded to an outer end of the limbs.

It is therefore an object of the present invention to provide a cask that can achieve at least one of efficient dissipation of decay heat generated by the spent fuel assembly to the air and efficient production of the cask having excellent heat dissipation performance, and a method of manufacturing the cask.

### DISCLOSURE OF THE INVENTION

The present invention is defined in the claims. The following summary of features does not define the invention but it is useful to understand it.

A cask includes a trunk body that houses a basket therein, in which a plurality of cells for storing a spent fuel assembly are formed, a plurality of heat transfer fins being provided on the outer circumference of the trunk body, an outer casing being fitted to the outer circumference of the heat transfer fins, and a neutron absorber being provided in the space between the heat transfer fins and the outer casing. The outer casing includes a configuration such that a plurality of band-like members having a plurality of grooves directed to at least one of the axial and circumferential directions of the trunk body formed thereon are welded together at the edges thereof; the heat transfer fin is respectively welded to one band-like member at opposite ends leaving the edges, on the surface of the band-like member opposite to the surface on which the grooves are formed, and other band-like members adjacent to the band-like member are welded near the respective edges.

In the cask, since a plurality of grooves directed to at least one of the axial and circumferential directions of the trunk body are formed on the outside of the outer casing, the surface area of the outer casing can be increased than in a cask without grooves. As a result, much heat can be released to the air than that of the cask without grooves. Therefore, even when a spent fuel assembly having high burnup is stored, sufficient safety can be ensured. Since the outer casing is formed by combining a plurality of band-like members having grooves formed thereon, the outer casing can be produced easily without performing casting or bending. Further, even when the cross section of the trunk body is circular or polygonal, since the outer casing is formed by combining the band-like members, the cask can be easily produced.

A cask includes a trunk body that houses a basket therein, in which a plurality of cells for storing a spent fuel assembly are formed, a plurality of heat transfer fins being provided on the outer circumference of the trunk body, an outer casing being fitted to the outer circumference of the heat transfer fins, and a neutron absorber being provided in the space between the heat transfer fins and the outer casing. The outer casing has a configuration such that a plurality of band-like members having a plurality of grooves directed to at least one of the axial and circumferential directions of the trunk body formed thereon are welded together at the edges thereof, the heat transfer fin is respectively welded to one band-like member at opposite ends leaving the edges, on the surface of the band-like member opposite to the surface on which the grooves are formed, to form a unit, the units are welded to the trunk body via the heat transfer fins at a predetermined interval from outside of the unit, and another band-like member is spanned between the band-like members in the adjacent units and welded from outside.

In this cask, since grooves are formed on the outside of the outer casing, much heat can be released to the air than that of the cask without grooves. As a result, even when the spent fuel assembly having high burnup is stored, sufficient safety can be ensured. Further, when the band-like members and the heat transfer fins are welded, at the time of welding the heat transfer fins in a unit to the trunk body, welding can be performed from the open outside, not in a narrow and long space. As a result, the cask with grooves formed on the outer casing can be easily formed. The present invention includes both cases, that is, when the heat transfer fins are first welded to the trunk body and then the band-like members are welded thereto, and when the heat transfer fins are first welded to the band-like members and then the unit is welded to the trunk body (denoted similarly hereunder). Further, the term "another band-like member is spanned" includes an instance in which another band-like member is fitted between adjacent band-like members forming a unit, and an instance in which an edge of another band-like member overlaps and is held on the edge of the band-like member constituting a unit.

A cask includes a trunk body that houses a basket therein, in which a plurality of cells for storing a spent fuel assembly are formed, a plurality of heat transfer fins being provided on the outer circumference of the trunk body, an outer casing being fitted to the outer circumference of the heat transfer fins, and a neutron absorber being provided in the space between the heat transfer fins and the outer casing. The outer casing has a configuration such that a plurality of band-like members having a plurality of grooves directed to at least one of the axial and circumferential directions of the trunk body formed on the outside thereof are welded together at the edges thereof, the heat transfer fin is welded to one band-like member substantially at the center thereof, on the surface of the band-like member opposite to the surface on which the grooves are formed, to form a unit, the units are welded to the trunk body via the heat transfer fin at a predetermined interval, and another band-like member is spanned between the band-like members in the adjacent units and welded from outside.

In this cask, since grooves are formed on the outside of the outer casing, much heat can be released to the air than that of the cask without grooves. As a result, even when the spent fuel assembly having high burnup is stored, sufficient safety can be ensured. Further, when the band-like members are welded to the heat transfer fins, or when the heat transfer fins in a unit are welded to the trunk body, welding can be performed from the open outside, not in a narrow and long space, thereby enabling easy production. Further, welding of the heat transfer fin to substantially the center of the band-like member enables separation of the weld between the band-like member and another band-like member, and the weld between the heat transfer fin and the band-like member. As a result, local concentration of the heat-affected zone can be prevented.

A cask includes a trunk body that houses a basket therein, in which a plurality of cells for storing a spent fuel assembly are formed, a plurality of heat transfer fins being provided on the outer circumference of the trunk body, an outer casing being fitted to the outer circumference of the heat transfer fins, and a neutron absorber being provided in the space between the heat transfer fins and the outer casing. The outer casing has a configuration such that a plurality of band-like members having a plurality of grooves directed to at least one of the axial and circumferential directions of the trunk body formed on the outside thereof are welded together at the edges thereof, the heat transfer fin is welded to one band-like member substantially at the center thereof, on the surface of the band-like member opposite to the surface on which the grooves are formed, the heat transfer fin is welded to the trunk body from one side, and the adjacent band-like members are welded near the edges thereof.

In this cask, since grooves are formed on the outside of the outer casing, much heat can be released to the air than that of the cask without grooves. As a result, even when the spent fuel assembly having high burnup is stored, sufficient safety can be ensured. Further, when the band-like members is welded to the heat transfer fin, or when the band-like member is welded to the trunk body via the heat transfer fins, welding can be performed from the open outside, not in a narrow and long space, thereby enabling easy production of the cask with grooves formed on the outer casing. Further, welding of the heat transfer fin to substantially the center of the band-like member enables separation of the weld between the band-like members, and the weld between the heat transfer fin and the band-like member. As a result, local concentration of the heat-affected zone can be prevented.

The band-like member is bent in an inverted-V shape or a V shape in cross section. Thus, since the band-like member with grooves formed on the surface thereof is further bent in an inverted-V shape or a V shape, the surface area of the outer casing can be further increased. Hence, since much heat can be released to the air, even when a spent fuel assembly having high burnup is stored, sufficient safety can be ensured. Further, since the outer casing is formed by combining the band-like members with grooves formed on the surface thereof, the cask can be produced more easily than using a production method such as casting.

A cask includes a trunk body that houses a basket therein, in which a plurality of cells for storing a spent fuel assembly are formed, and an outer casing formed by arranging a plurality of units formed by bending a plate member having a plurality of grooves directed to at least one of the axial and circumferential directions of the trunk body formed thereon, around the trunk body, with the grooves directed outward of the trunk body. One end of the unit is joined to the trunk body, the other end is joined to the side of another adjacent unit, and a neutron absorber is provided in a space between the trunk body and the outer casing.

In this cask, plate members having grooves formed on the surface thereof are bent to form a unit, and these units are combined to constitute the outer casing. Therefore, since the heat transfer fins and the outer casing can be integrally formed, a step of welding the heat transfer fins and the band-like members constituting the outer casing can be omitted, thereby enabling easy production of the outer casing. Further, since grooves are formed on the surfaces of the plate members, the surface area of the outer casing can be increased, to improve the heat dissipation performance. As a result, even when a spent fuel assembly having high burnup is stored, sufficient safety can be ensured.

A cask includes a trunk body that houses a basket therein, in which a plurality of cells for storing a spent fuel assembly are formed, and an outer casing formed by arranging a plurality of cylindrical units provided with a neutron absorber therein around the trunk body. A plurality of grooves directed to at least one of the axial and circumferential directions of the trunk body are formed outside of the cylindrical units constituting the outer casing, the side of the cylindrical unit facing the outside comes in contact with the trunk body, and the remaining opposite sides of the cylindrical unit come in contact with the sides of the other adjacent cylindrical units.

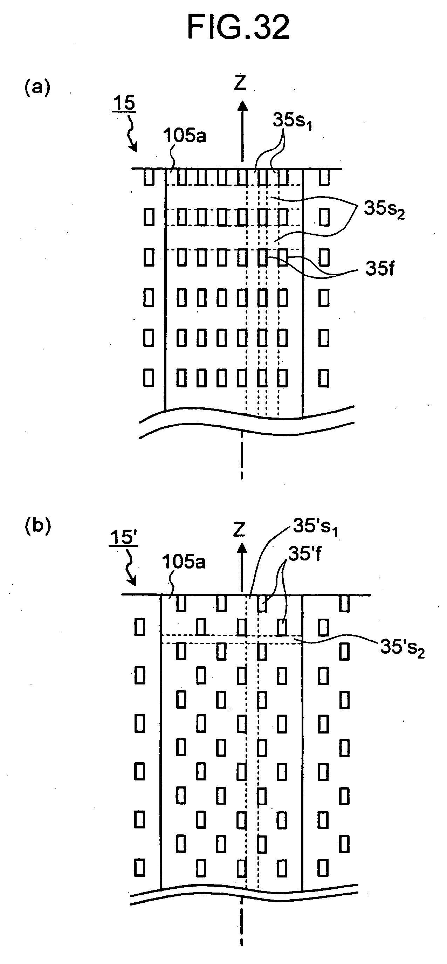

This cask includes an outer casing formed by combining a plurality of cylindrical units with grooves formed on the outer surface thereof. Therefore, since the surface area on the outside of the outer casing can be increased by the grooves formed on the surface thereof, much decay heat can be released to the air, and even when a spent fuel assembly having high burnup is stored, high safety can be ensured. Since the outer casing is formed by combining cylindrical units, a complicated pattern (Fig. 32(b)) can be easily formed by shifting the positions of grooves with respect to the adjacent unit by half a pitch at the time of assembly. Further, the number of welding steps can be reduced, thereby enabling relatively easy production of the outer casing.

A cask includes a trunk body that houses a basket therein, in which a plurality of cells for storing a spent fuel assembly are formed, a plurality of heat transfer fins being provided on the outer circumference of the trunk body, an outer casing being fitted to the outer circumference of the heat transfer fins, and a neutron absorber being provided in a space between the heat transfer fins and the outer casing. The outer casing has a configuration such that a plurality of ring plates having a plurality of grooves directed to at least one of the axial direction and a direction perpendicular to the axis of the trunk body formed on the surface thereof are welded together in the axial direction of the ring plate, the heat transfer fin in a ring shape is welded to the ring plate substantially at the center on the inner surface thereof to form a unit, the unit is welded to the trunk body via the heat transfer fin from one side, and the edges of the ring plate in the adjacent unit are welded from outside.

In this cask, since the outer casing is formed by combining a plurality of ring plates with grooves formed on the outside thereof, the surface area of the outer casing can be increased, thereby increasing the heat dissipation performance. When the ring plates and the heat transfer fins are welded together, or when the heat transfer fins in a unit are welded to the trunk body, welding can be performed from the open outside, not in a narrow and long space. As a result, the outer casing having grooves formed on the outside thereof can be easily produced.

A cask includes a trunk body that houses a basket therein, in which a plurality of cells for storing a spent fuel assembly are formed, a plurality of heat transfer fins being provided on the outer circumference of the trunk body, an outer casing being fitted to the outer circumference of the heat transfer fins, and a neutron absorber being provided in a space between the heat transfer fins and the outer casing. The outer casing has a configuration such that a plurality of ring plates having a plurality of grooves directed to at least one of the axial direction and a direction perpendicular to the axis of the trunk body formed on the surface thereof are welded together in the axial direction, the heat transfer fins in a ring shape are welded to one ring plate at the opposite sides, leaving the edges thereof to form a unit, the unit is welded to the trunk body at a predetermined interval via the heat transfer fins from outside, and another ring plate is arranged between the ring plates in the adjacent units and welded from outside.

In this cask, since the outer casing is formed by combining the ring plates with grooves formed on the outside thereof, the surface area of the outer casing can be increased, thereby increasing the heat dissipation performance. When the ring plates and the heat transfer fins are welded together, or when the heat transfer fins in a unit are welded to the trunk body, welding can be performed from the open outside, not in a narrow and long space. By shifting the positions of the grooves with respect to the adjacent unit by half a pitch, a complicated pattern (Fig. 32) can be easily formed. As a result, the outer casing having grooves formed on the surface thereof can be easily produced. Further, the heat transfer fin is welded on the opposite sides of the ring plate, leaving the edges thereof. Therefore, by welding the ring plate with another ring plate at the edges thereof, the weld between the heat transfer fin and the ring plate can be apart from the weld between the ring plates. As a result, local concentration of the heat-affected zone can be prevented.

A cask includes a trunk body that houses a basket therein, in which a plurality of cells for storing a spent fuel assembly are formed, a plurality of heat transfer fins being provided on the outer circumference of the trunk body, an outer casing being fitted to the outer circumference of the heat transfer fins, and a neutron absorber being provided in a space between the heat transfer fins and the outer casing. The outer casing is formed by welding a plurality of plate members having a plurality of grooves directed to at least one of the axial and circumferential directions of the trunk body formed thereon at the ends thereof, and at least one heat transfer fin is fitted to the respective plate members.

In this cask, since the grooves directed to at least one of the axial and circumferential directions of the trunk body are formed on the outside of the outer casing, the surface area of the outer casing can be increased than in a cask without grooves. As a result, much heat can be released to the air than the cask without grooves. Therefore, even when a spent fuel assembly having high burnup is stored, sufficient safety can be ensured. Since the outer casing is formed by combining the plate members having grooves formed thereon, the outer casing can be produced easily. Further, even when the cross section of the trunk body is circular or polygonal, since the outer casing is formed by combining the band-like members, the cask can be easily produced.

At least one of the cross-sectional shape of the groove perpendicular to the formation direction of the grooves, and the cross-sectional shape of protrusions perpendicular to the formation direction of the protrusions divided by the grooves is circular arc.

A cask includes a trunk body that houses a basket therein, in which a plurality of cells for storing a spent fuel assembly are formed, a plurality of heat transfer fins being provided on the outer circumference of the trunk body, an outer casing being fitted to the outer circumference of the heat transfer fins, and a neutron absorber being provided in the space between the heat transfer fins and the outer casing. A plurality of grooves directed to at least one of the axial and circumferential directions of the trunk body are formed on the outer casing, and at least one of the cross-sectional shape of the groove perpendicular to the formation direction of the grooves, and the cross-sectional shape of the protrusion perpendicular to the formation direction of the protrusions divided by the grooves, is circular arc.

With such a configuration, in this cask, the surface area of the outer casing is increased to improve the heat dissipation performance, and since at least one cross section of the groove or the protrusion divided by the groove is circular arc, the radioactive material hardly accumulates in the groove. As a result, at the time of decontamination, the radioactive material adhered on the surface of the outer casing can be efficiently cleaned.

The cross-sectional shape perpendicular to the formation direction of the grooves is trapezoidal with the radial outside of the outer casing being enlarged.

A cask includes a trunk body that houses a basket therein, in which a plurality of cells for storing a spent fuel assembly are formed, a plurality of heat transfer fins being provided on the outer circumference of the trunk body, an outer casing being fitted to the outer circumference of the heat transfer fins, and a neutron absorber being provided in the space between the heat transfer fins and the outer casing. A plurality of grooves directed to at least one of the axial and circumferential directions of the trunk body are formed on the outer casing, and the cross-sectional shape of the groove perpendicular to the formation direction of the grooves is trapezoidal with the radial outside of the outer casing being enlarged.

With such a configuration, in this cask, the radiation direction on the sides of protrusions, which serve as radiating fins, can be directed outward of the outer casing. As a result, the influence of radiation between the sides of the protrusions can be reduced, to further increase the thermal energy radiated to the air, thereby further improving the heat dissipation efficiency.

The grooves directed to the axial direction of the trunk body are inclined with respect to the axial direction of the trunk body. Therefore, since the flow of the air warmed by the heat from the outer casing and going up near the surface of the outer casing is disturbed by the grooves having an inclination, heat transfer between the air and the outer casing can be promoted. As a result, the heat dissipation performance can be further improved.

The cask further includes a basket having square pipes, and elements having an L-shape in cross section perpendicular to the longitudinal direction, and provided with protrusions directed to the longitudinal direction on the inner surface thereof. The outer surface of the square pipe and the end of the protrusion provided on the inner surface of the element are made to abut against each other to form a cell for storing a spent fuel assembly, and the outer surface of the square pipe constituting one cell and the end of the element constituting the cell are made to abut against the outside surface of the element constituting another cell to combine the cells.

This cask includes a basket obtained by forming a cell by combining a square pipe for storing the spent fuel assembly and an element having an L shape in cross section having protrusions on the inner surface, and combining a plurality of cells. In the cell, a space is formed between the square pipe and the element by the protrusions provided in the element, thereby forming a flux trap. By this flux trap, the basket can ensure sufficient safety, even when the spent fuel assembly of high burnup and short cooling period is stored therein. Much decay heat is generated from the high burnup and short cooling period spent fuel assembly stored in the basket, but since the cask for containing the basket has an outer casing having high heat dissipation, the decay heat can be efficiently released to the air, thereby ensuring sufficient safety.

Further, since the surface area of the square pipes and the elements constituting the basket does not increase excessively, these can be produced sufficiently, even when the thrust of an extruder is not so large. Since the shape of the element is not so complicated, the life span of the extrusion dies can be ensured. As a result, a cask for storing the spent fuel assembly of high burnup and short cooling period can be easily produced, and the production cost can be suppressed low. Particularly, when an extrusion resistant material such as boron or an aluminum material containing a boron compound is used for forming the basket, the effect of the present invention is significant. The end of the protrusion refers to an open end of the protrusion provided on the side of the element, which abuts against the square pipe (the same applies hereinafter).

The cask further includes a basket having square pipes, and elements having an L-shape in cross section perpendicular to the longitudinal direction, and provided with protrusions directed to the longitudinal direction on the inner surface thereof, with the outside surface thereof formed in a flat surface. The outer surface of the square pipe and the end of the protrusion provided on the inner surface of the element are made to abut against each other to form a cell for storing a spent fuel assembly, and the outer surface of the square pipe constituting one cell and the end of the element constituting the cell are made to abut against the outside surface of the element constituting another cell on a flat surface to combine the cells.

This cask includes a basket obtained by forming the outside surface of the element in a flat surface, making the outside surface of the element constituting one cell, the outer surface of the square pipe constituting another cell, and the end of the element constituting another cell abut against each other on the flat surface. Therefore, since the heat transfer area can be increased, when the spent fuel assembly of the high burnup and short cooling period having a large heating value is stored therein, the heat can be efficiently transferred from the inside to the outside of the basket. Since the cask for containing the basket includes the outer casing having high heat dissipation, a large amount of decay heat can be released to the air efficiently, thereby ensuring sufficient safety. As a result, since a temperature rise in the basket can be suppressed, the safety of the whole cask can be increased, and it is not necessary to use a material having an excessively high heat-resistant temperature for the material constituting the basket, thereby increasing the flexibility in designing the basket.

The cask further includes a basket in which the outside of the corner of the element is formed in a flat surface over the whole region of the element in the longitudinal direction, and one end of the element is formed in a flat surface parallel to the flat surface so as to be combined with the flat surface, so that when the cells are combined, the outside of the corner of one element is made to abut against one end of another element.

In this cask, a flat surface directed to the longitudinal direction of the element is provided outside the corner of the element, and a flat surface parallel with the flat surface is formed at one end of the element, and at the time of assembly of the basket for storing the spent fuel assembly, the two flat surfaces are made to abut against each other. Since the flat surface formed outside of the corner of the element constituting the basket is formed in a shape such that the outside of the corner is cut slantwise, as seen in section perpendicular to the longitudinal direction of the element, the area in which the elements abut against each other can be increased. As a result, since the heat transfer area increases, the decay heat of the spent fuel can be released to the outside of the basket more efficiently. Since the cask for containing the basket includes the outer casing having high heat dissipation, a large amount of decay heat can be efficiently released to the air, thereby ensuring sufficient safety for the cask. Further, since the area in which the elements constituting the basket abut against each other becomes larger than the above basket, when a load acts thereon, the stress generated in this portion can be reduced. As a result, the workload at the time of stress transmission can be reduced, and hence the safety and reliability of the cask can be further improved.

The cask according to the above further includes a basket in which the outside of the corner of the element is formed such that a cross section perpendicular to the longitudinal direction of the element becomes stepwise, to form a step portion directed to the longitudinal direction of the element, the end of the element is also formed stepwise so as to engage with at least one step portion outside of the corner formed stepwise, and when the cells are combined, the outside of the corner of one element is made to engage with one end of another element.

This cask includes a basket assembled by forming the outside of the corner and the end of the element constituting the basket stepwise, and making the corner and the end of the elements forming cells mesh with each other. Therefore, the area in which the elements abut against each other can be further increased, as compared with the above basket, thereby further increasing the heat transfer area. As a result, even when the decay heat of the spent fuel is transferred efficiently to the outside of the basket, since the cask for containing the basket has the outer casing having high heat dissipation, a large amount of heat can be released to the air efficiently, thereby ensuring sufficient safety of the cask. Since the area in which the elements abut against each other further increases, when a load acts thereon, the stress generated in this portion can be further reduced. As a result, since the workload at the time of stress transmission can be reduced, the reliability of the basket can be further improved.

The cask according to the above further includes a basket having square pipes, and elements having an L-shape in cross section perpendicular to the longitudinal direction, and provided with protrusions directed to the longitudinal direction on the outside surface thereof. The element is arranged inside of the square pipe, and the inner surface of the square pipe and the end of protrusions provided in the element are made to abut against each other to form a cell for storing a spent fuel assembly, and a plurality of cells are combined by making the outer surface of the square pipe on the side where the element exists abut against the outer surface of the square pipe on the side where only the wall of the square pipe exists.

This cask includes a basket in which elements having a substantial L shape in cross section, with grooves directed to the longitudinal direction formed on the outside surface thereof, are arranged inside of the square pipes, to constitute cells for storing the spent fuel assembly, and a plurality of these cells are combined. The space divided by the grooves of the element and the inner wall of the square pipe serves as the flux trap. By this flux trap, the basket can ensure sufficient safety, even when the spent fuel assembly of high burnup and short cooling period is stored therein. Much decay heat is generated from the high burnup and short cooling period spent fuel stored in the basket, but since the cask for containing the basket has an outer casing having high heat dissipation, the decay heat can be efficiently released to the air, thereby ensuring sufficient safety.

Further, even when an extrusion-resistant material such as a B-Al material is used for the square pipes and elements, these can be produced within the capacity of the extruder. As a result, baskets having a complicated shape with the flux trap for storing the spent fuel assembly of high burnup and short cooling period can be easily produced. Since the square pipes and elements can be extrusion-molded naturally, damage and rough surface can be reduced, thereby improving the yield of the product.

Further, since the square pipes and elements are just combined, not by welding, performance deterioration does not occur at the welded joint, and production of the basket for storing the spent fuel assembly becomes easy. If the element is arranged inside of the square pipe, since the movement of the element is automatically restricted, the basket can be formed only by combining the square pipes. As a result, since the labor at the time of installing the basket for storing the spent fuel assembly of high burnup and short cooling period in the cavity of the cask can be reduced, the labor at the time of assembling the cask can be reduced.

The cask according to the above further includes a basket formed by combining a plurality of square pipes in which the outside of the corner is formed stepwise and a space for separating the outer wall and the inner wall of the side is provided on the side face, wherein the outsides of the corners of the square pipes are brought face-to-face to stagger the square pipes, and a spent fuel assembly is stored in the space in the square pipe and in the space enclosed by the sides of the square pipe.

This cask includes a basket in which a plurality of square pipes are staggered to form the space for separating the outer wall and the inner wall on the side face, inside of the side face as the flux trap. By this flux trap, the basket housed in the cask can store the spent fuel assembly of high burnup and short cooling period. Since the square pipes are staggered, the thickness of the side face of the square pipe can be made thinner than that of the basket constituted by aligning the side faces of the square pipes. As a result, since the heat transfer performance is improved than before, much heat can be transferred to the outside of the basket. Since the cask for containing the basket includes the outer casing having high heat dissipation, much heat transferred from the basket can be efficiently released to the air, thereby ensuring sufficient safety.

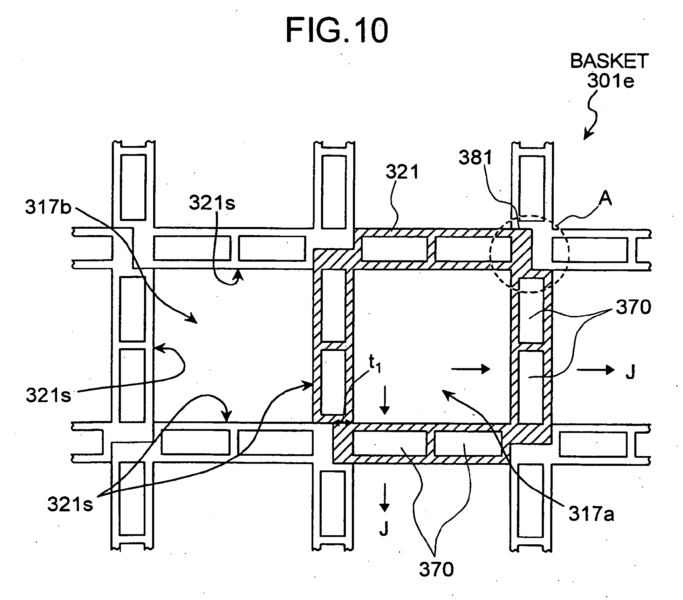

Since the square pipes for storing the spent fuel are formed stepwise at the corner, these cannot be said to be square pipes in a strict sense, but since the cross section perpendicular to the axial direction of the pipe is square, and the external appearance is substantially square as seen as a whole, it is included in the concept of the square pipe in the present invention. The term "square pipes are staggered" refers to that "the square pipes are combined slantwise to each other", and for example, refers to the arrangement as shown in Fig. 10. The same applies hereinafter.

The outside of the corner of the square pipe is formed stepwise in at least two stages.

In this cask, the outside of the corner of the square pipe constituting the basket housed in the cavity is formed stepwise at least in two stages, in the casks explained above. As a result, the thickness at the corner can be ensured more than half the thickness on the side of the square pipe, thereby improving the heat transfer performance. Since this cask includes the outer casing having high heat dissipation, sufficient safety can be ensured by releasing much heat transferred from the basket to the air efficiently.

The basket has an angular cross-sectional shape formed by providing notches on opposite edges of rectangular plate members having a neutron absorbing property at a predetermined interval, and the plate members are made to be orthogonal to each other and alternately piled by inserting the notches to each other. The inner face of the cavity formed in the trunk body is matched with the external shape of the basket, so that the outer circumference of the basket is inserted in the trunk body substantially in an adhered state, and the angular cross-sectional portion of the outside plate member constituting the basket comes in contact with the inner face of the cavity.

The spent fuel assembly emits radiation and is accompanied with decay heat. The spent fuel assembly is stored in the cells in the basket, which is in a lattice form (box shape) by combining plate members. By forming the cavity in the trunk body in a shape matched with the external shape of the basket, when the basket is inserted into the cavity, the outside plate members (particularly, portions of angular cross section) come in contact with the inner face of the cavity. Further, by matching the inner shape of the cavity with the external shape of the basket, the space between the basket and the cavity can be eliminated or made small. Therefore, the decay heat is transferred efficiently from the basket to the trunk body, via the helium gas introduced into the basket and the direct contact portions. As a result, the decay heat from the spent fuel assembly can be efficiently transferred to the trunk body, and the decay heat can be efficiently released from the trunk body to the air due to the grooves formed on the outer casing, thereby ensuring sufficient safety of the cask.

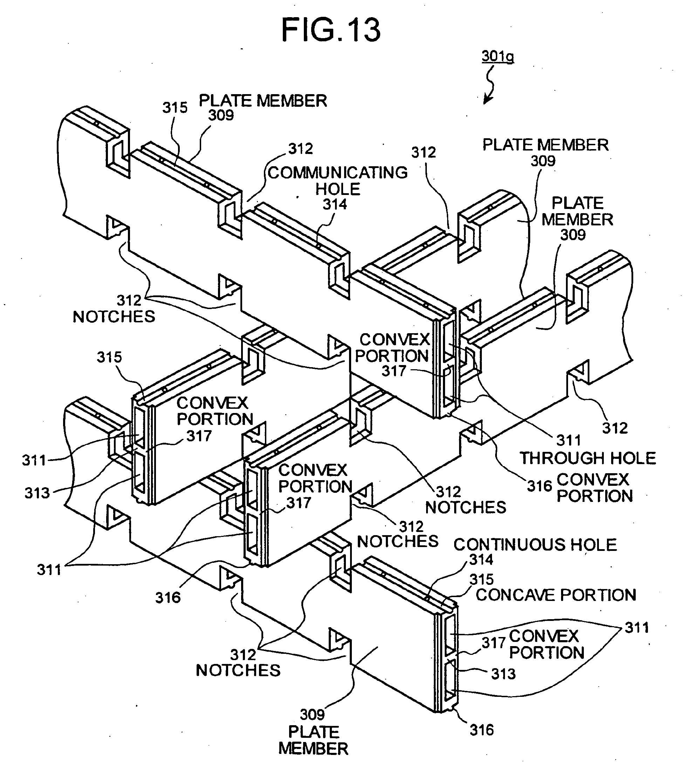

Further, by eliminating or reducing the space in the cavity, the outer diameter of the trunk body can be decreased. On the contrary, if the outer diameter of the trunk body is the same, more cells can be formed. The "contact state" does not mean a complete contact between the cavity inner face with the basket outer face at all times, and includes a state in which slight gaps exist, or the contact is temporarily released. The plate member includes a hollow structure as shown in Figs. 13 to 15.

The basket has an angular cross-sectional shape formed by providing notches on opposite edges of rectangular plate members having a neutron absorbing property at a predetermined interval, and the plate members are made to be orthogonal to each other and alternately piled by inserting the notches to each other, the outer circumference of the basket being provided with a heat exchanger plate. The inner face of the cavity formed in the trunk body is matched with the external shape of the basket, and the inner shape of the cavity is formed so as to substantially adhere to the heat exchanger plate.

In this cask, since the cavity is formed, matched with the external shape of the box-shape basket, the thermal conduction efficiency from the basket to the trunk body is improved. Particularly, the decay heat is efficiently transferred to the trunk body via a heat exchanger plate provided on the outer circumference of the basket, and in the portion of angular cross section of the basket, since a part thereof face-contacts with the trunk body, the basket can be held reliably, and the thermal conduction efficiency can be improved. As a result, the decay heat from the spent fuel assembly can be efficiently transferred to the trunk body, and the decay heat can be efficiently released from the trunk body to the air due to the grooves formed on the outer casing, thereby ensuring sufficient safety of the cask. This cask has a configuration particularly favorable for storing the spent fuel assembly having a large heating value.

A method of manufacturing a cask in which a plurality of heat transfer fins are provided on the outer circumference of a trunk body that stores a spent fuel assembly, and an outer casing is fitted to the outer circumference of the heat transfer fins includes steps of forming grooves directed to at least one of the axial and circumferential directions of the trunk body of the cask, on one side of a band-like member A and a band-like member B, welding the heat transfer fin respectively to the band-like member A at opposite sides leaving the edges, on the surface of the band-like member A opposite to the surface on which the grooves are formed to form a unit, welding a plurality of units to the trunk body via the heat transfer fins from outside of the unit, and fitting the band-like member B between adjacent band-like members A, and welding the band-like members A and B near the edges thereof from outside.

The production method of the cask is suitable when the casks explained above are assembled. At first, the band-like member A having a plurality of grooves on one side and the heat transfer fins are welded together to form a unit, to make welding easy. On the other hand, after the heat transfer fins are welded to the trunk body, the band-like member having a plurality of grooves on one side may be welded thereto, but in this case, since welding is performed from the backside of the band-like member A, the operation becomes slightly troublesome (the same applies hereinafter). The latter method may be used for the cask.

At the time of welding the unit to the trunk body, welding is performed from the outside of the unit, and when the band-like member B is fitted between the band-like members A, welding is performed from outside. As a result, it is not necessary to weld these by using a special-purpose welding machine in a narrow and long space as before, and welding is performed from outside, and hence the assembly operation of the cask having the grooves formed on the outer casing can be facilitated. Particularly, even in a country where the assembly technique is not developed, the cask can be assembled with the existing normal welding technique. Since the grooves can be formed on the surface of the outer casing without performing casting or bending, large-scale casting equipment and bending apparatus are not necessary, thereby enabling easy production of the cask having the outer casing with grooves formed on the surface thereof. Even when the cross section of the trunk body is circular or polygonal, since the outer casing is formed by combining the band-like members, the cask can be easily produced.

A method of manufacturing a cask in which a plurality of heat transfer fins are provided on the outer circumference of a trunk body that stores a spent fuel assembly, and an outer casing is fitted to the outer circumference of the heat transfer fins includes steps of forming grooves directed to at least one of the axial and circumferential directions of the cask, on one side of a band-like member A and a band-like member B, welding the heat transfer fin substantially at the center of the band-like member A, on the surface opposite to the surface on which the grooves are formed, to form a unit, arraying at least two units with respect to the trunk body at a predetermined interval, and welding the units to the trunk body via the heat transfer fin, and spanning another band-like member B between the band-like members A in the adjacent units and welding from outside.

The production method of the cask is suitable when the casks explained above are assembled. At first, the band-like member A having grooves on one side and the heat transfer fin are welded together to form a unit, to make welding easy. The unit is welded to the trunk body via the heat transfer fin of the unit. Since the cross section of the unit is in T shape, the opposite sides are open, and hence the welding can be performed from outside. When the band-like member B is spanned between the band-like members A and A and welded, welding is performed from outside. Therefore, it is not necessary to weld these by using a special-purpose welding machine in a narrow and long space as before, and welding is performed from outside, and hence the assembly operation of the cask having the grooves formed on the outer casing can be facilitated. Since the grooves can be formed on the surface of the outer casing without performing casting or bending, large-scale casting equipment and bending apparatus are not necessary, thereby enabling easy production of the cask having the outer casing with grooves formed on the surface thereof. Even when the cross section of the trunk body is circular or polygonal, since the outer casing is formed by combining the band-like members, the cask can be easily produced.

A method of manufacturing a cask in which a plurality of heat transfer fins are provided on the outer circumference of a trunk body that stores a spent fuel assembly, and an outer casing is fitted to the outer circumference of the heat transfer fins includes steps of forming grooves directed to at least one of the axial and circumferential directions of the cask, on one side of a band-like member A and a band-like member B, welding the heat transfer fin substantially at the center of the band-like member A, on the surface opposite to the surface on which the grooves are formed, welding the band-like member A to the trunk body via the heat transfer fin from the open side, and welding the next band-like member A to the trunk body via the heat transfer fin from the open side and welding the adjacent band-like members A near the edges thereof.

The production method of the cask is suitable when the casks explained above are assembled. At first, the band-like member A having grooves on one side and the heat transfer fin are welded together, to make welding easy. Then, the band-like member A is welded to the trunk body via the heat transfer fin. Since the cross section thereof is in T shape, the opposite sides are open, and hence the welding can be performed from outside. When the band-like members A and A are welded together, welding is performed from outside. Therefore, it is not necessary to weld these by using a special-purpose welding machine in a narrow and long space as before, and welding is performed from outside, and hence the assembly operation of the cask having the outer casing with the grooves formed thereon can be facilitated. Since the grooves can be formed on the surface of the outer casing without performing casting or bending, large-scale casting equipment and bending apparatus are not necessary, thereby enabling easy production of the cask having the outer casing with grooves formed on the surface thereof. Even when the cross section of the trunk body is circular or polygonal, since the outer casing is formed by combining the band-like members with the grooves formed thereon, the cask can be easily produced.

A method of manufacturing a cask in which a plurality of heat transfer fins are provided on the outer circumference of a trunk body that stores a spent fuel assembly, and an outer casing is fitted to the outer circumference of the heat transfer fins includes steps of forming grooves directed to at least one of the axial and circumferential directions of the trunk body, on one side of a band-like member, bending the band-like member so that the surface on which the grooves are formed becomes the outside, and welding the opposite edges of the band-like member in the longitudinal direction to form an annular ring plate A, welding a ring heat transfer fin substantially at the center on the inner surface of the ring plate A to form a unit, welding the unit to the trunk body via the heat transfer fin in the axial direction from the open side, and welding the next unit to the trunk body via the heat transfer fin in the axial direction from the open side and welding the edges of the adjacent ring plates A from outside.

The production method of the cask is suitable when the casks explained above are assembled. At first, the ring plate A having grooves formed on the outside and the heat transfer fin are welded together to form a unit, to make welding easy. The unit is welded to the trunk body via the heat transfer fin of the unit. Since the cross section of the unit is in T shape, the opposite sides are open, and hence the welding can be performed from outside. When the ring plates A having grooves formed on the outside are welded together, welding is performed from outside. Therefore, it is not necessary to weld these by using a special-purpose welding machine in a narrow and long space as before, and welding is performed from outside, and hence the assembly operation of the cask having the outer casing with the grooves formed thereon can be facilitated. Since the grooves can be formed on the surface of the outer casing without performing casting or bending, large-scale casting equipment and bending apparatus are not necessary, thereby enabling easy production of the cask having the outer casing with grooves formed on the surface thereof.

A method of manufacturing a cask in which a plurality of heat transfer fins are provided on the outer circumference of a trunk body that stores a spent fuel assembly, and an outer casing is fitted to the outer circumference of the heat transfer fins includes steps of forming grooves directed to at least one of the axial and circumferential directions of the cask, on one side of a band-like member, bending the band-like member so that the surface on which the grooves are formed becomes the outside, and welding the opposite edges of the band-like member in the longitudinal direction to form an annular ring plate A, welding a ring heat transfer fin substantially at the center on the inner surface of the ring plate A to form a unit, welding the unit to the trunk body via the heat transfer fin in the axial direction from the open side, containing substantially a half of a neutron absorber molded in a ring shape in the unit, and welding the next unit to the trunk body via the heat transfer fin in the axial direction from the open side, welding the edges of the adjacent ring plates A from outside, and containing the remaining half of the molded neutron absorber in the unit.

The production method of the cask is suitable when the casks explained above are assembled. As in the above example, the ring plate A having grooves formed on the outside and the heat transfer fin are welded together to form a unit, and the unit is welded to the trunk body via the heat transfer fin of the unit. Therefore, welding can be performed from outside in an opened state. Subsequently, the next unit is welded from outside, with the neutron absorber molded in a ring form being housed in the unit, the molded neutron absorber is housed in the unit, and the ends of the ring plates A are welded from outside. Therefore, it is not necessary to weld these by using a special-purpose welding machine in a narrow and long space as before, and welding is performed from outside, and hence the cask having the outer casing with the grooves formed thereon can be easily assembled. Since the grooves can be formed on the surface of the outer casing without performing casting or bending, large-scale casting equipment and bending apparatus are not necessary, thereby enabling easy production of the cask having the outer casing with grooves formed on the surface thereof.

A method of manufacturing a cask in which a plurality of heat transfer fins are provided on the outer circumference of a trunk body that stores a spent fuel assembly, and an outer casing is fitted to the outer circumference of the heat transfer fins includes steps of forming a plurality of grooves directed to at least one of the axial and circumferential directions of the cask, on one side of a plate member for constituting the outer casing, bending the plate member, matched with a partial external shape of the trunk body, so that the surface on which the grooves are formed is located outside of the trunk body, joining the ends of the bent plate member to form a cylindrical outer casing, fitting the outer casing in the trunk body, and connecting the inner surface of the outer casing and the outside of the trunk body via the heat transfer fins.

The production method of the cask is such that the plate members having grooves formed on the surface thereof beforehand are bent, and the plate members are welded together at the ends thereof, to produce a cylindrical outer casing. The outer casing is fitted in the trunk body, the heat transfer fins and the outside of the trunk body, and the heat transfer fins and the inside of the outer casing are respectively welded. Since the plate member is bent, matched with the partial external shape of the trunk body, the number of plate members constituting the outer casing can be reduced, thereby simplifying the production process of the cask. At the time of connecting the inside of the outer casing and the outside of the trunk body by the heat transfer fins, the heat transfer fins may be joined to the inside of the outer casing beforehand, and the other ends of the heat transfer fins may be joined to the outside of the trunk body, or after the heat transfer fins are joined to the outside of the trunk body, the other ends of the heat transfer fins may be joined to the inside of the outer casing. Further, after the outer casing is fitted in the trunk body, the heat transfer fins may be arranged between the inside of the outer casing and the outside of the trunk body, and the ends of the heat transfer fins may be joined to the inside of the outer casing and the outside of the trunk body.

A method of manufacturing a cask in which a plurality of heat transfer fins are provided on the outer circumference of a trunk body that stores a spent fuel assembly, and an outer casing is fitted to the outer circumference of the heat transfer fins includes steps of forming a plurality of grooves directed to at least one of the axial and circumferential directions of the cask, on one side of a plate member for constituting the outer casing, bending the plate member, matched with a partial external shape of the trunk body, so that the surface on which the grooves are formed is located outside of the trunk body, connecting the surface of the bent plate member opposite to the surface on which the grooves are formed with the outside of the trunk body via the heat transfer fins, and joining the ends of the plate member fitted to the trunk body via the heat transfer fins to form a cylindrical outer casing.

The production method of the cask is such that the plate members having grooves formed on the surface thereof beforehand are bent, and the plate members are attached to the outside of the trunk body via the heat transfer fins. The ends of the plate members attached to the trunk body are joined together, to constitute a cylindrical outer casing. Since the plate is bent, matched with the partial external shape of the trunk body, the number of plate members constituting the outer casing can be reduced, thereby simplifying the production process of the cask. At the time of connecting the surface opposite to the side of the plate member on which the grooves are formed (opposite surface to the grooves) and the outside of the trunk body by the heat transfer fins, the heat transfer fins are joined to the opposite faces to the grooves of the plate members beforehand, and the other ends of the heat transfer fins may be joined to the outside of the trunk body, or after the heat transfer fins are joined to the outside of the trunk body, the other ends of the heat transfer fins may be joined to the opposite faces to the grooves of the plate members. Further, while the plate members are joined to the trunk body via the heat transfer fins, the ends of the adjacent plate members may be joined to each other, to form the outer casing.

A method of manufacturing a cask in which a plurality of heat transfer fins are provided on the outer circumference of a trunk body that stores a spent fuel assembly, and an outer casing is fitted to the outer circumference of the heat transfer fins includes steps of forming a plurality of grooves directed to at least one of the axial and circumferential directions of the cask, on one side of a plate member for constituting the outer casing, bending the plate member in a circular-arc shape, so that the surface on which the grooves are formed becomes the outside, joining the ends of the plate member bent in the circular-arc shape to form a cylindrical outer casing, fitting the outer casing in the trunk body to which the heat transfer fins are provided radially beforehand on the outer circumference thereof, and welding the inner surface of the outer casing to the ends of the heat transfer fins.

The production method of the cask is such that the plate members having grooves formed on the surface thereof beforehand are bent, and the plate members are welded together at the ends thereof, to produce a cylindrical outer casing. After the cylindrical outer casing is fitted in the trunk body provided with heat transfer fins radially, the ends of the heat transfer fins and the inner surface of the outer casing are welded together. Thus, since the plates are bent in a circular arc shape, it is suitable for producing the cask having a circular trunk body in cross section.

A plurality of cutting tools are arranged in the array direction of the grooves at an array pitch of the grooves, so as to form the grooves on the band-like member or the plate member at the same time.

Therefore, since a plurality of grooves can be formed at the same time, the labor for forming the grooves can be reduced considerably. Particularly, when a cask having an outer casing formed by combining a plurality of band-like members with the grooves formed on the surface thereof is produced, band-like members with grooves formed thereon can be efficiently produced, thereby enabling considerable reduction in production time.

### BRIEF DESCRIPTION OF THE DRAWINGS

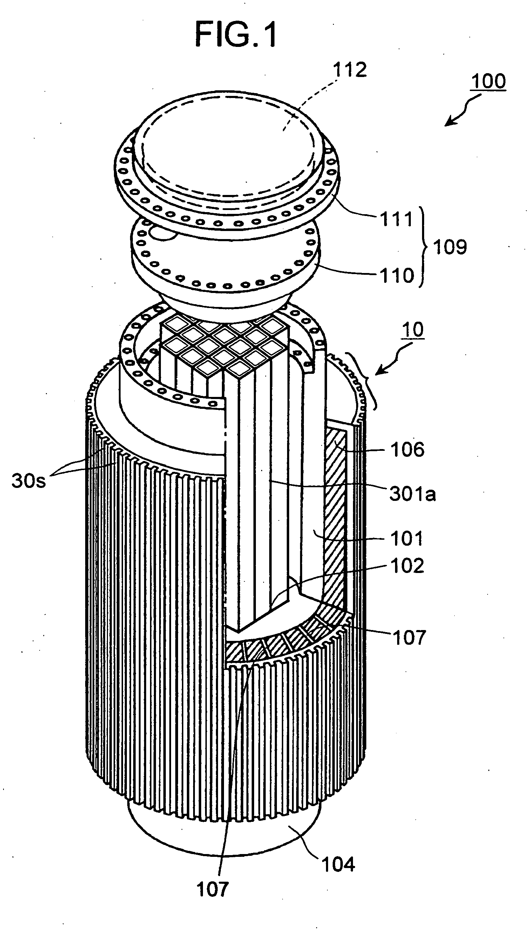

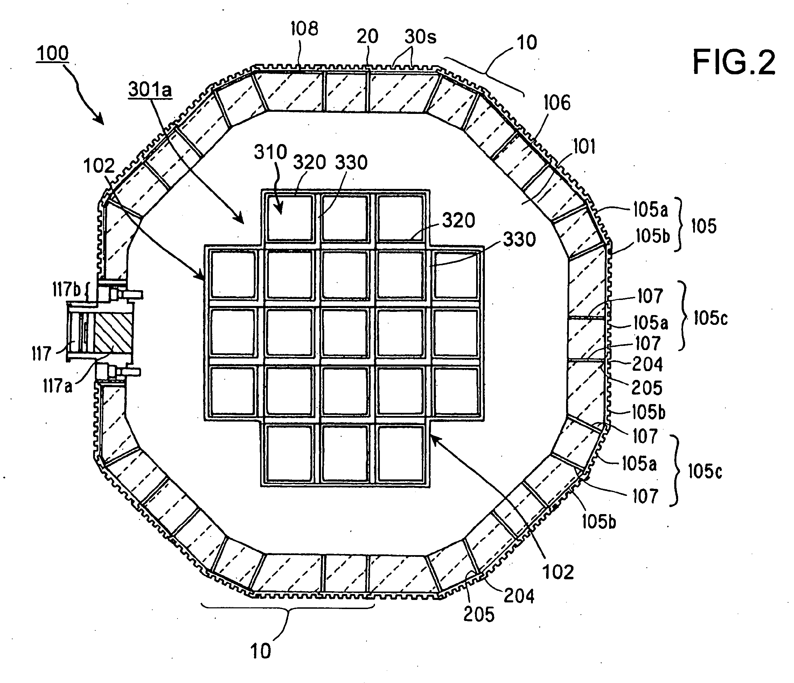

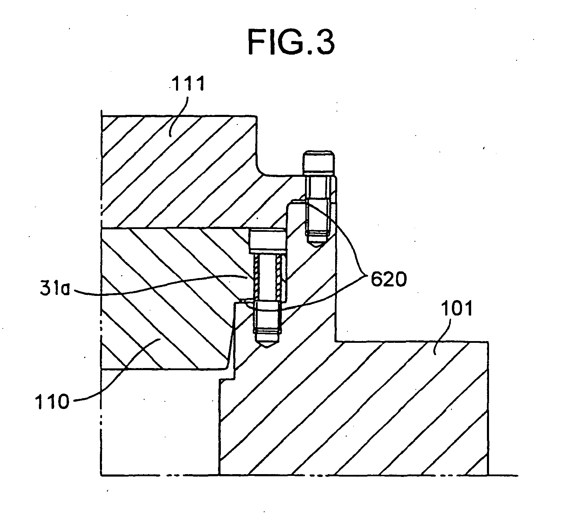

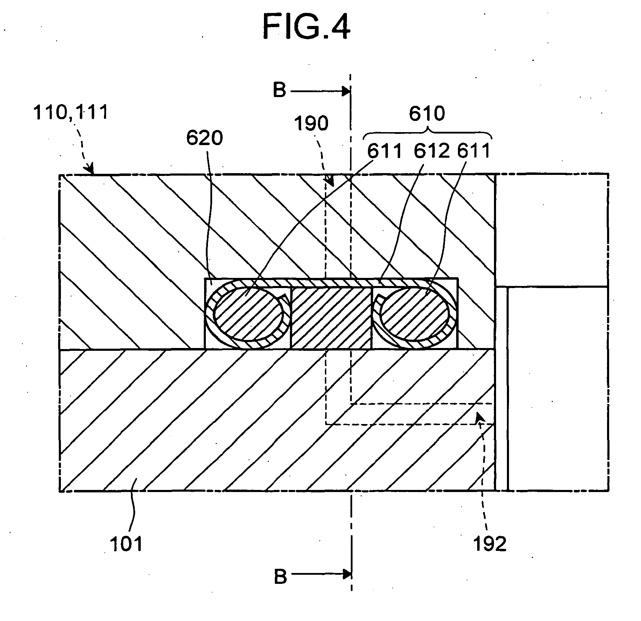

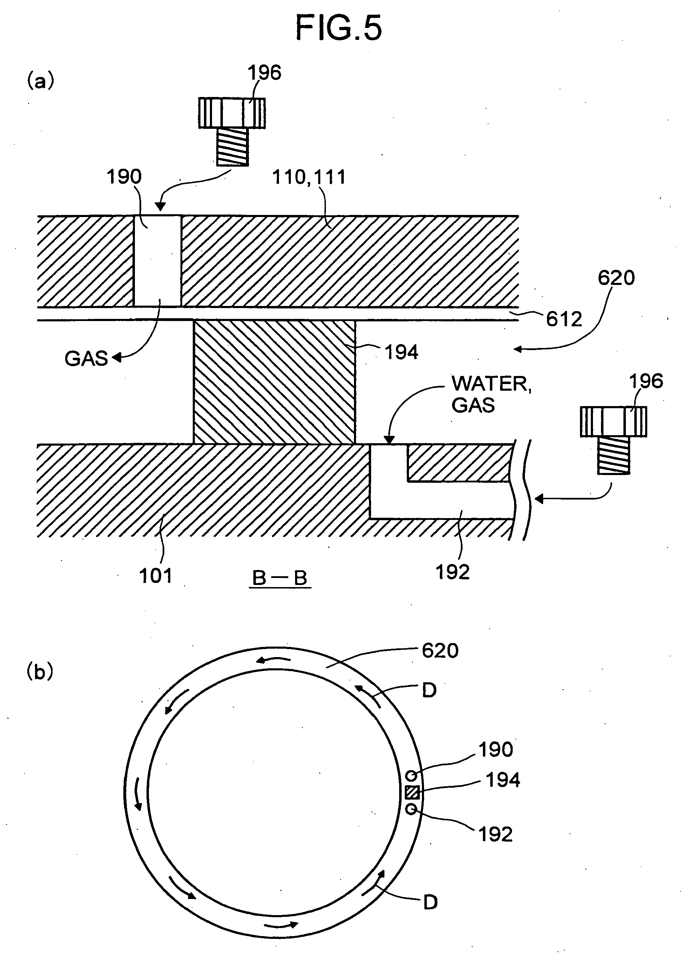

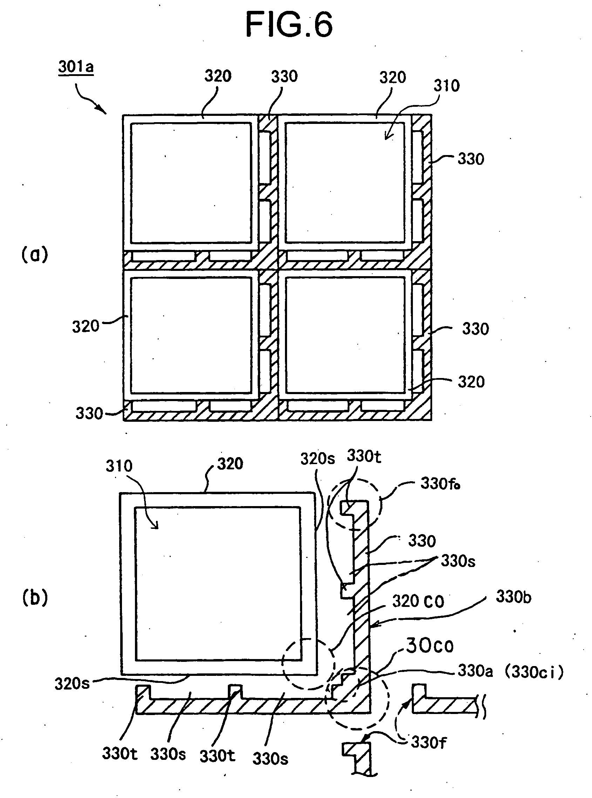

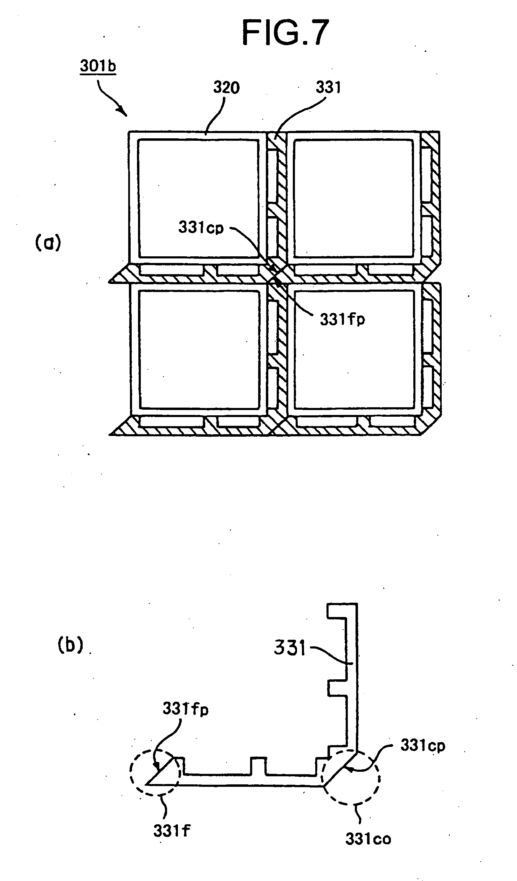

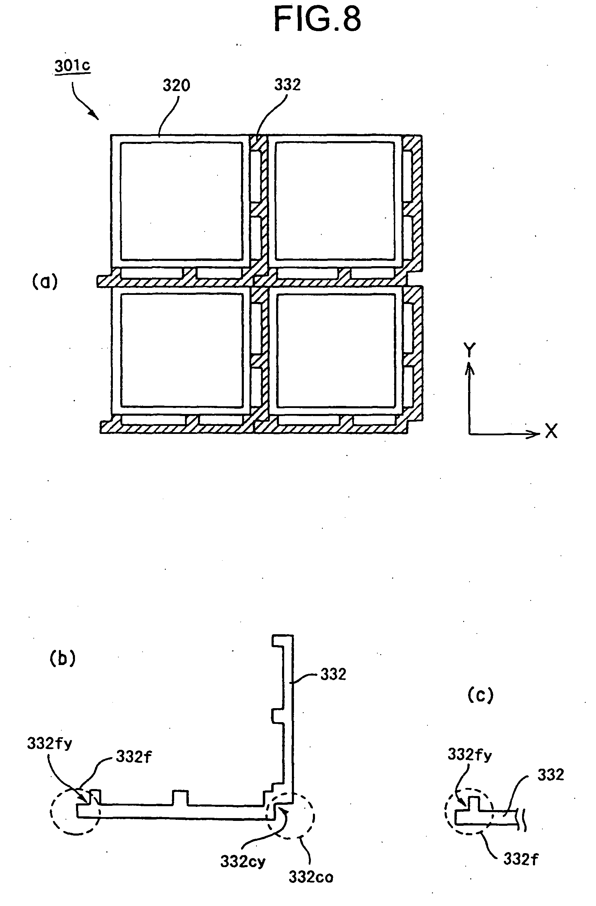

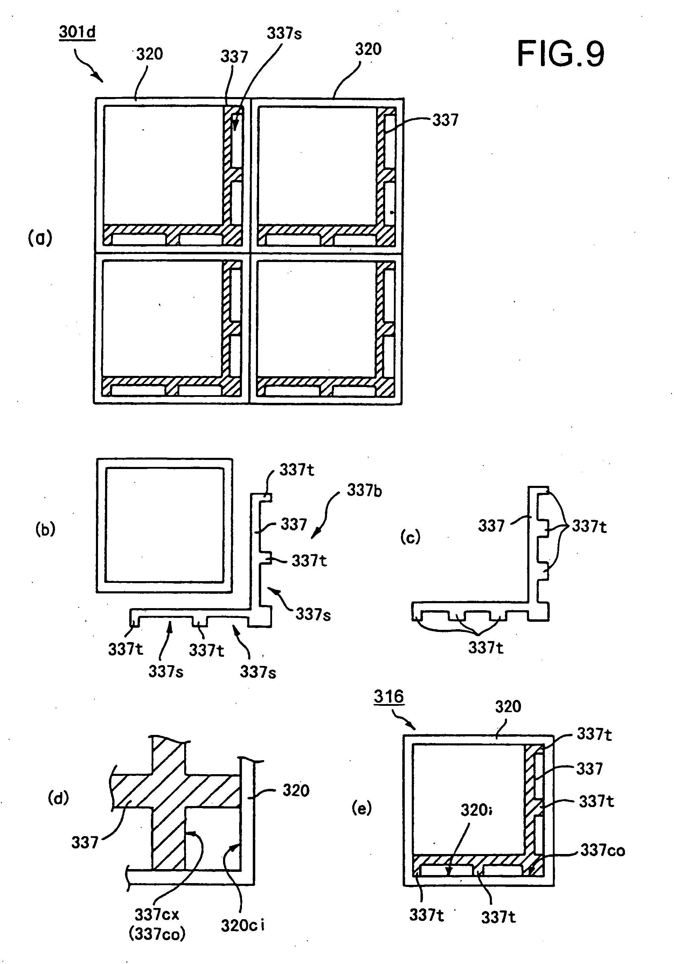

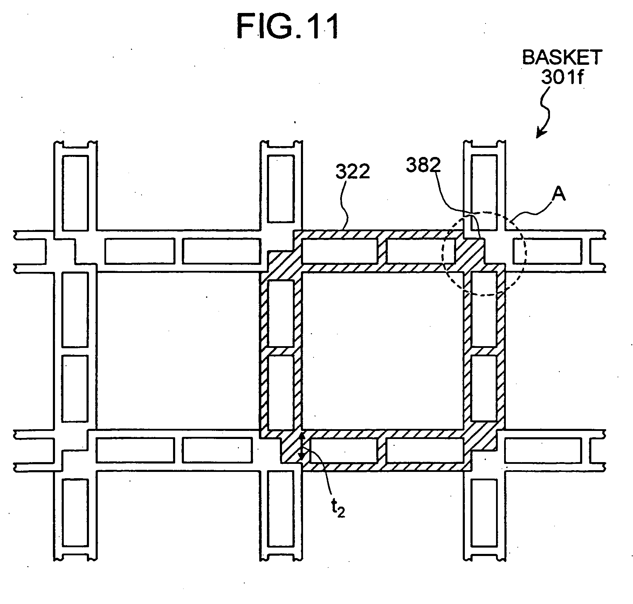

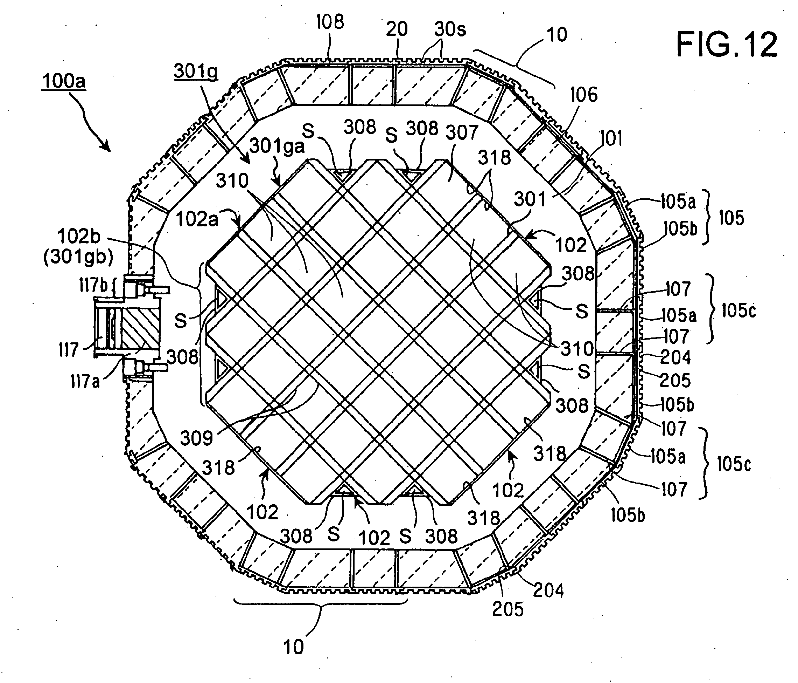

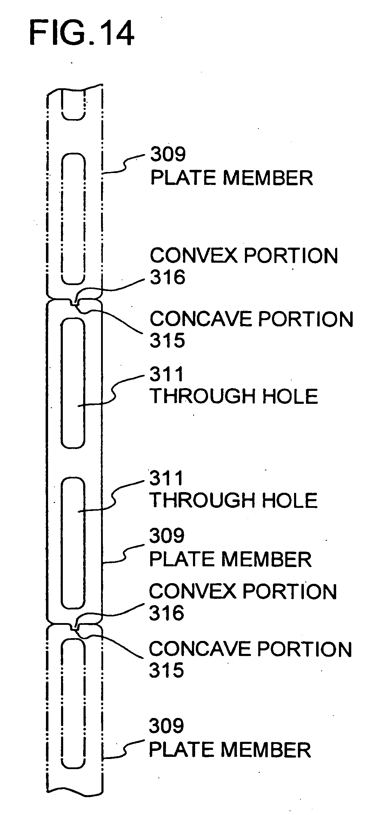

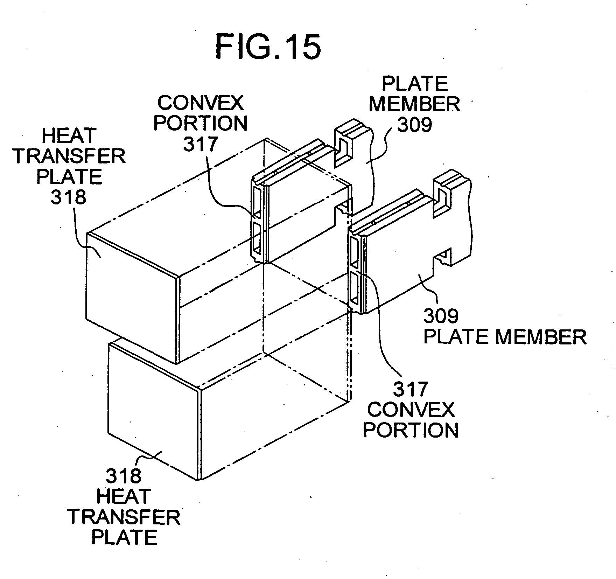

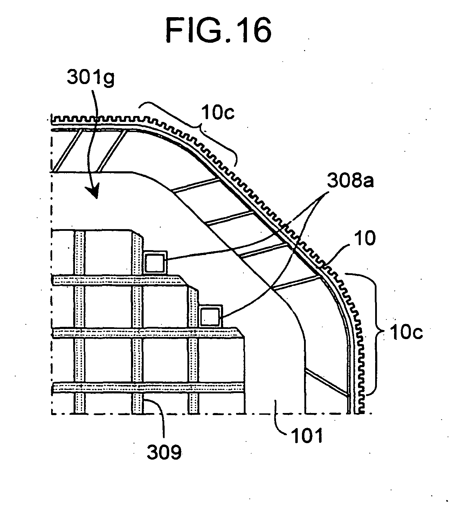

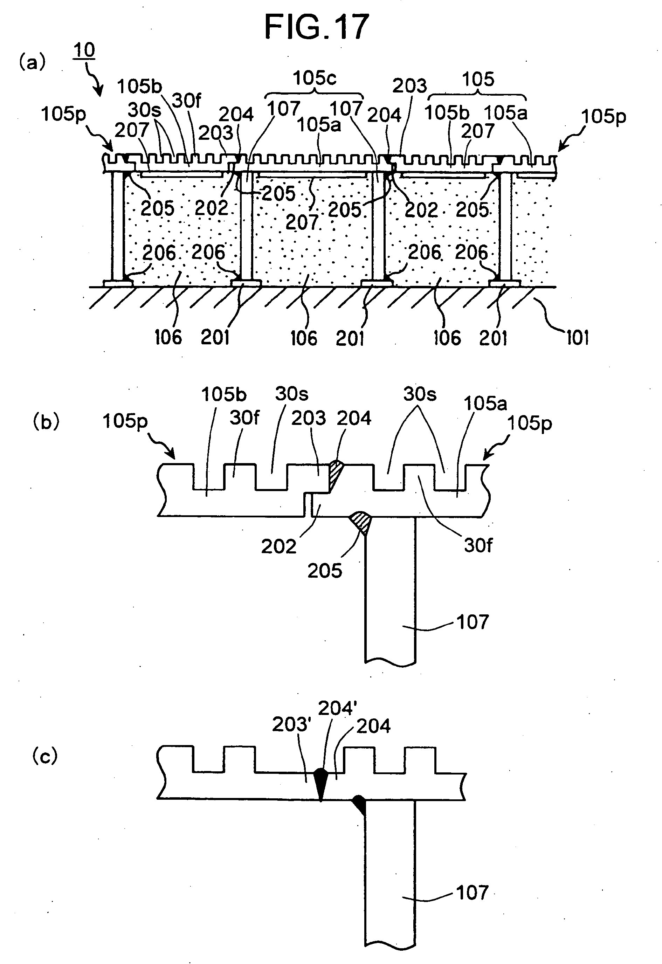

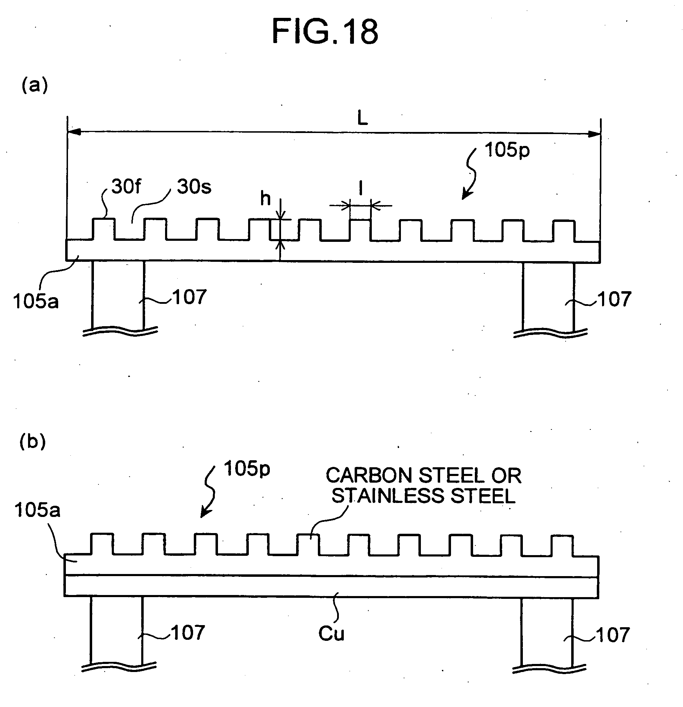

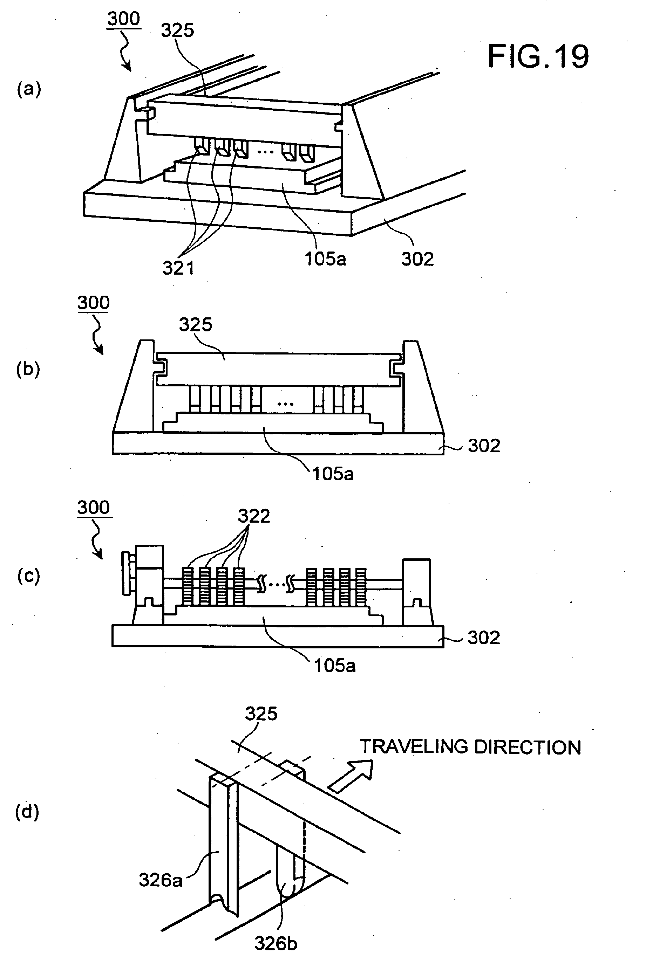

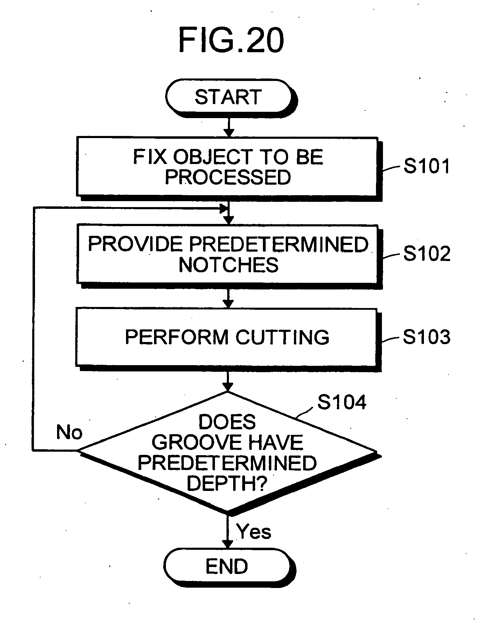

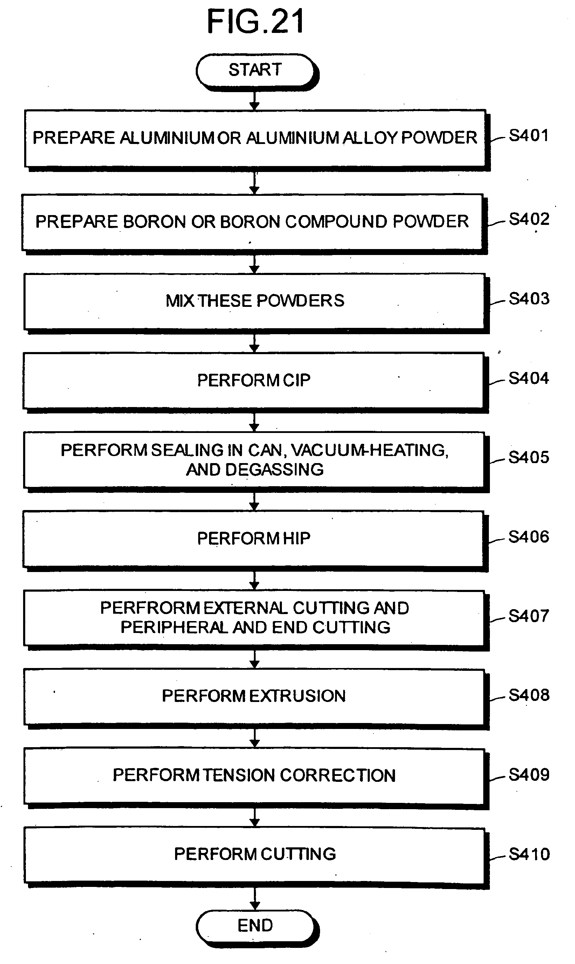

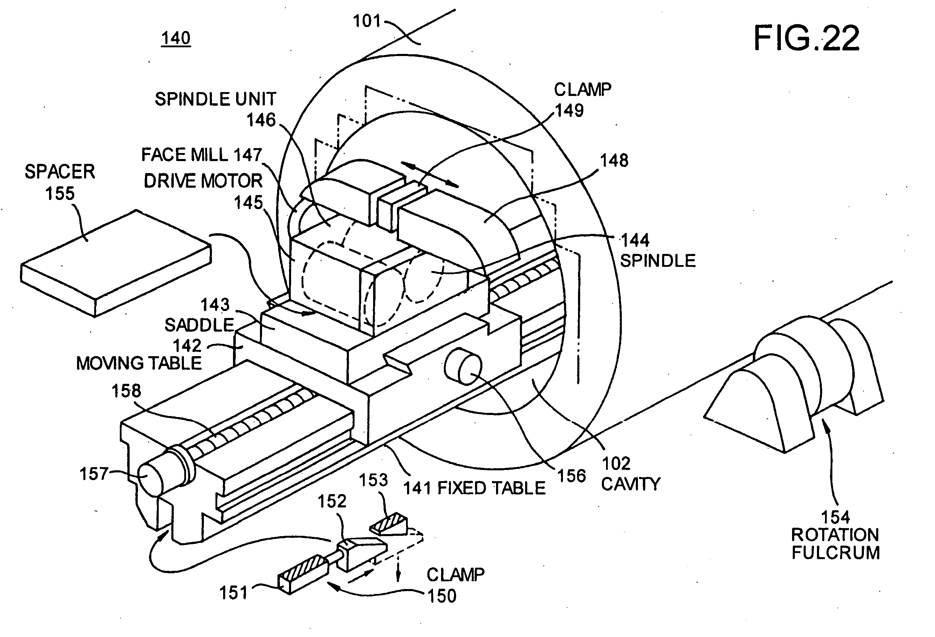

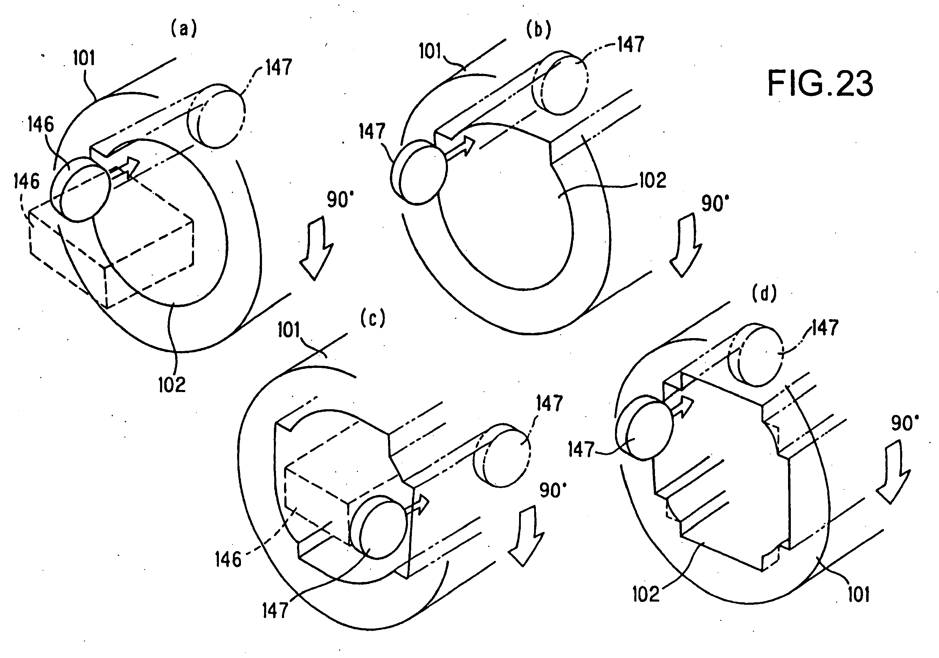

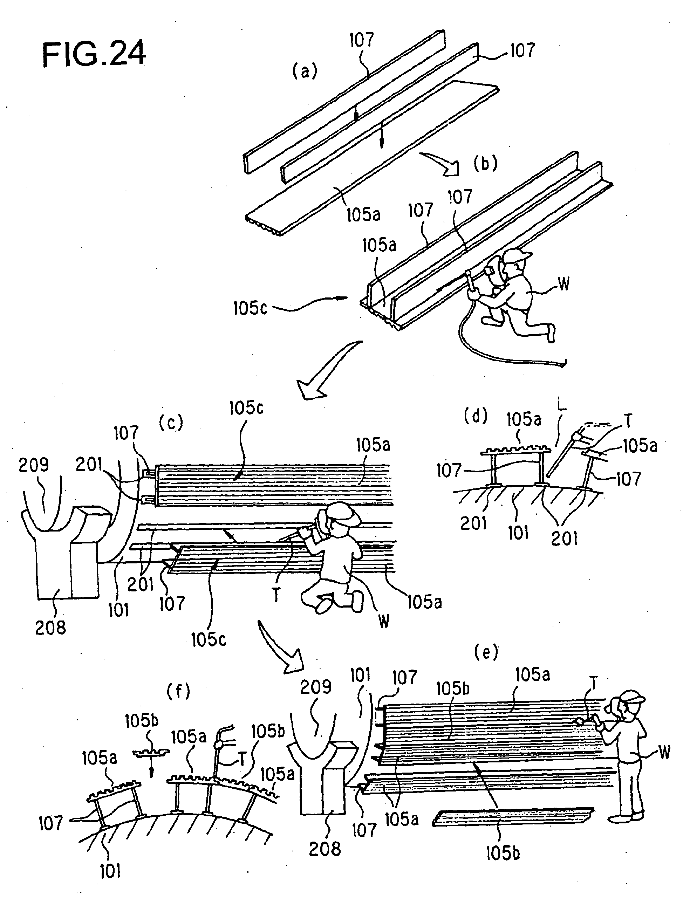

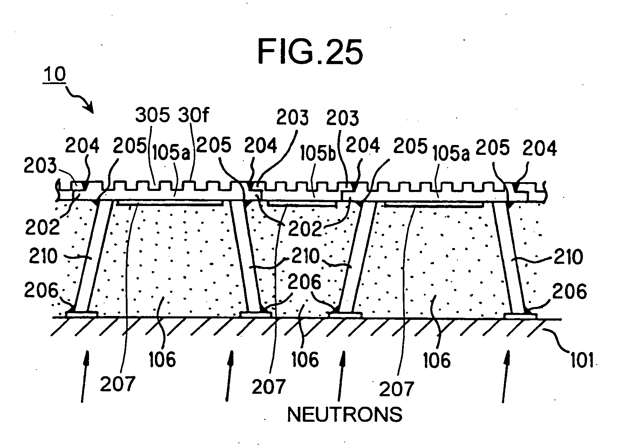

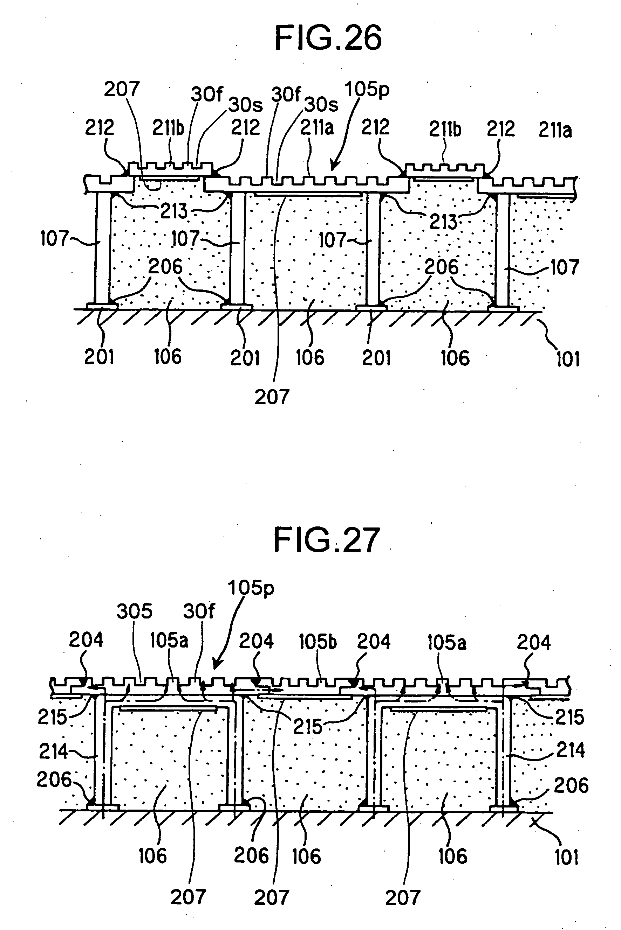

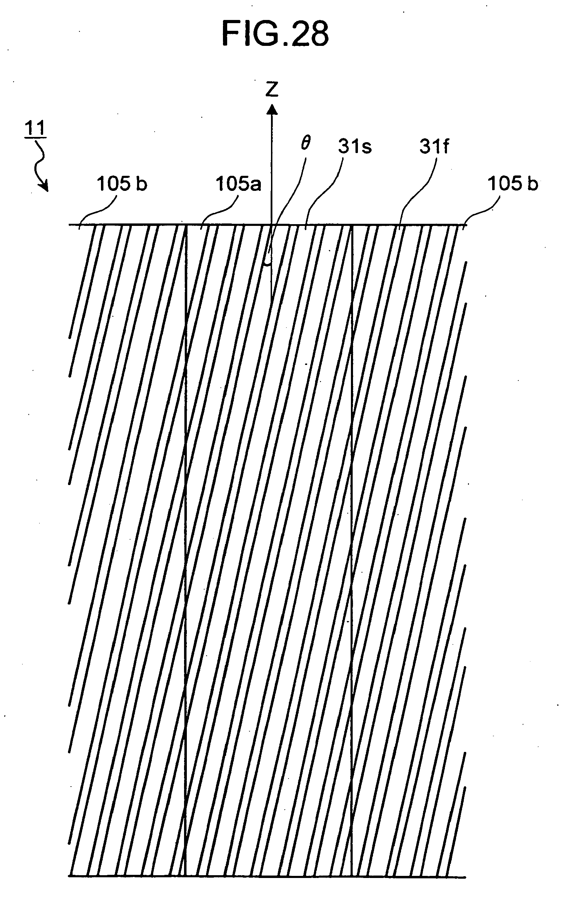

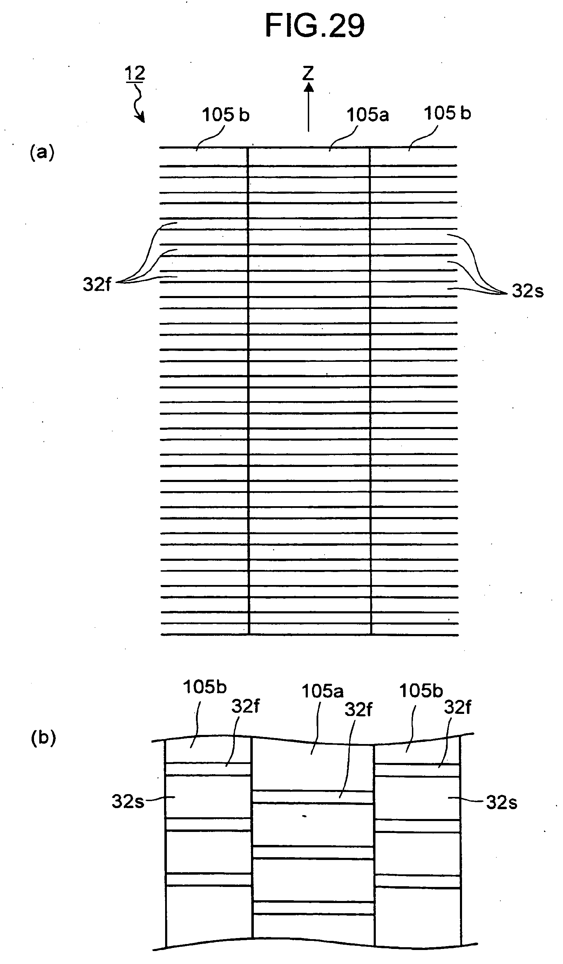

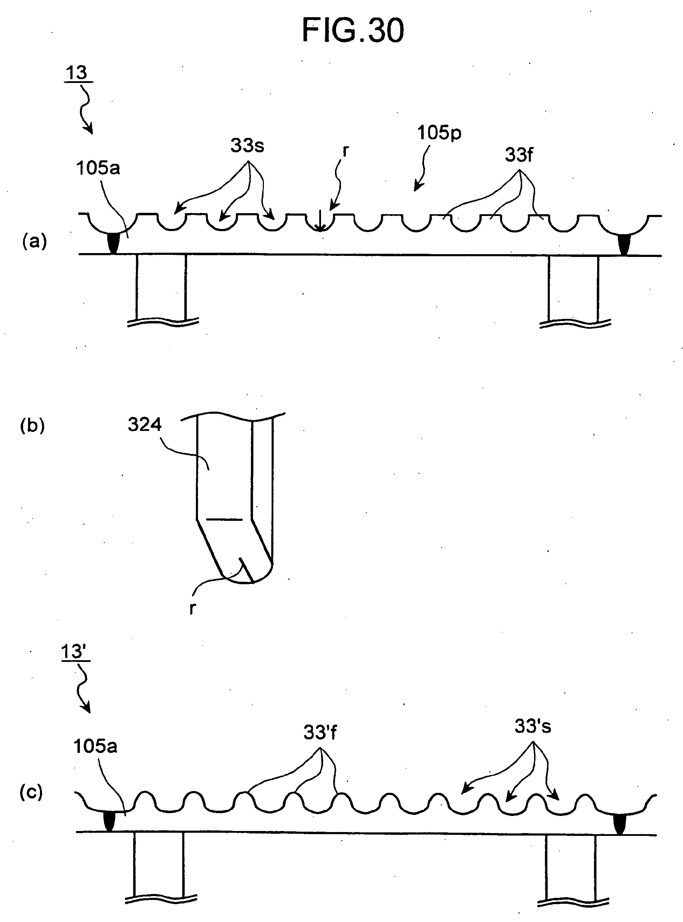

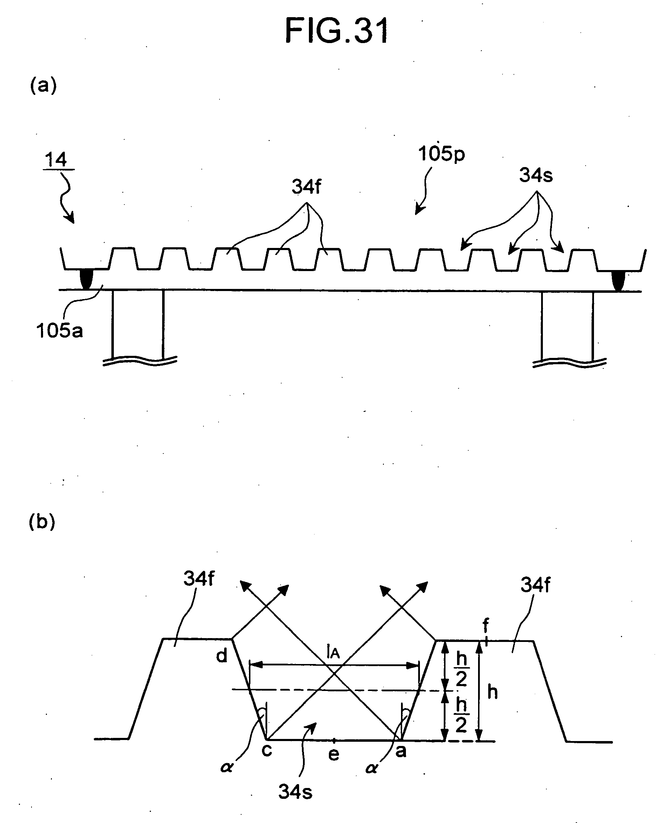

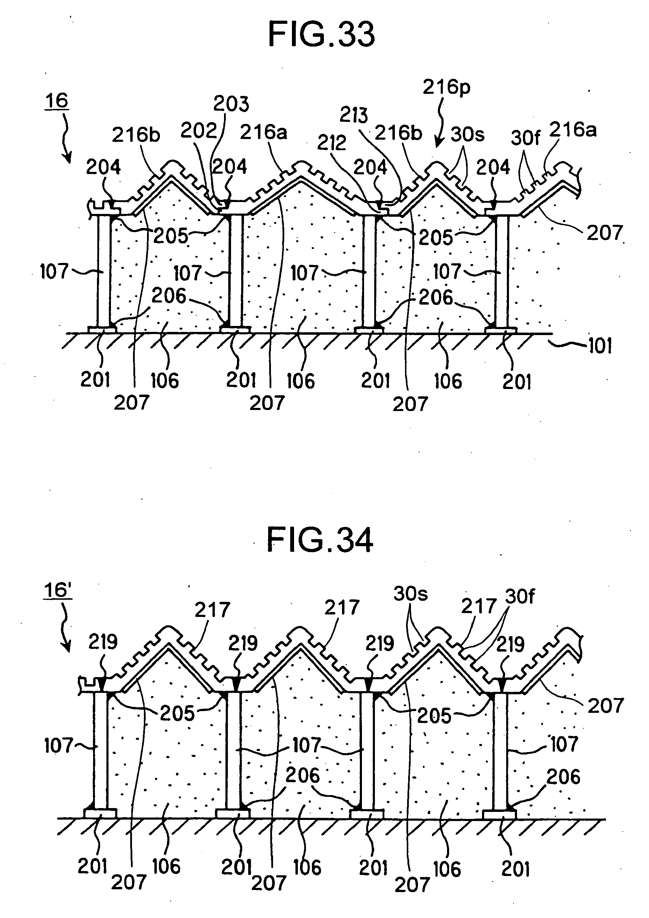

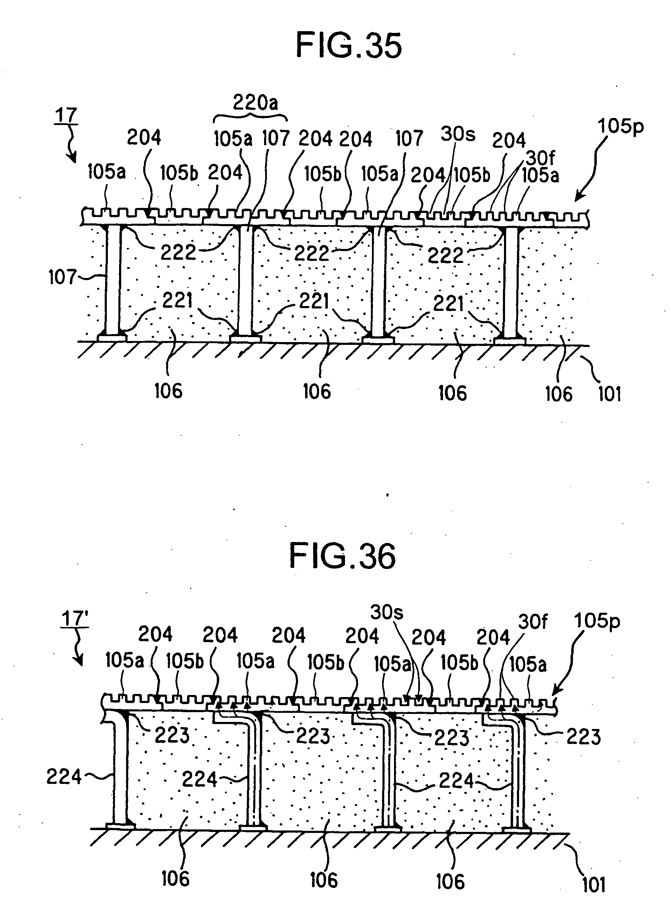

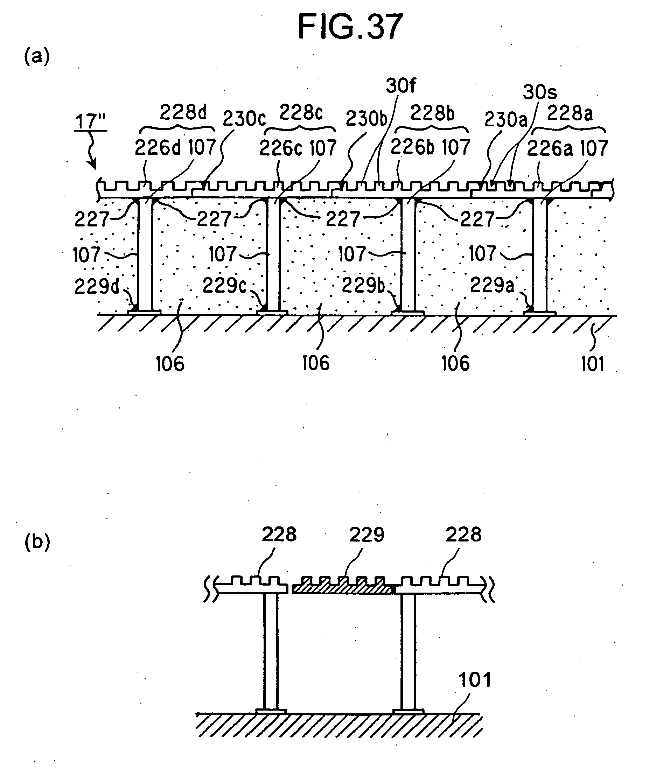

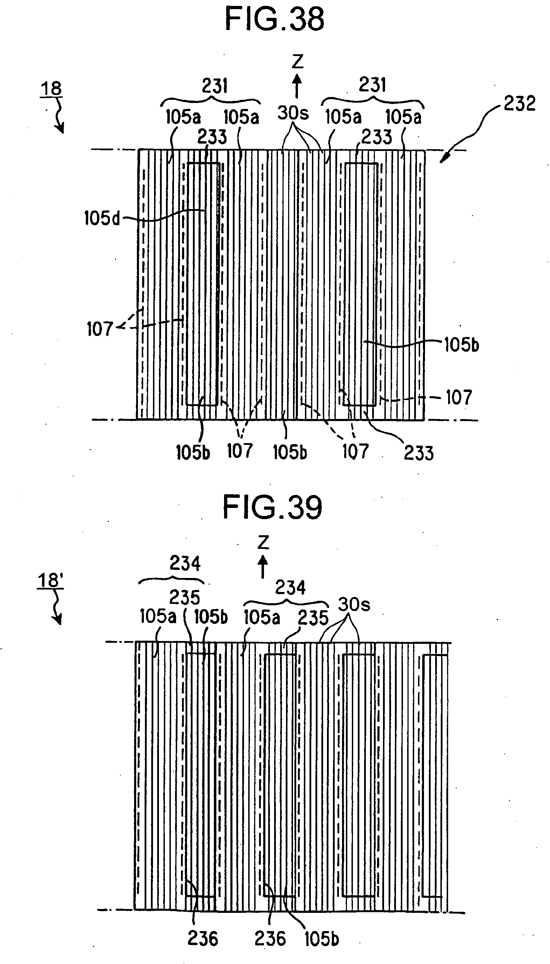

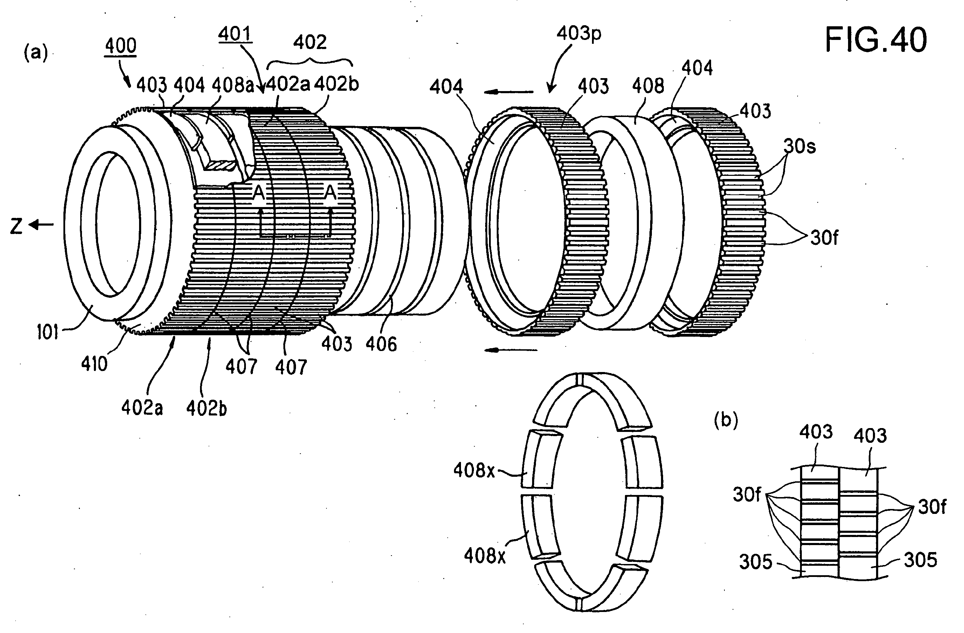

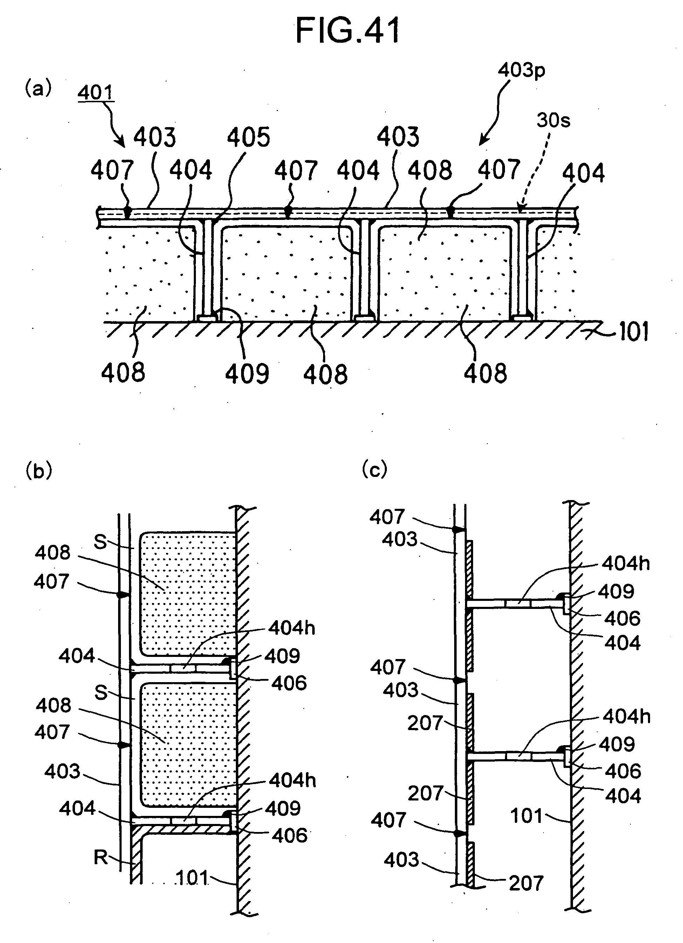

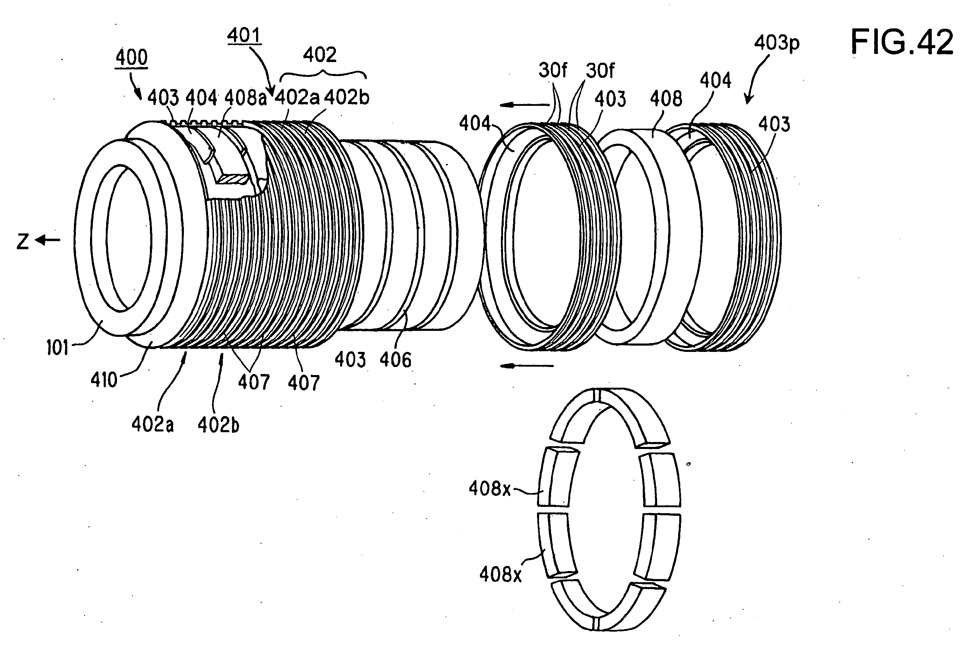

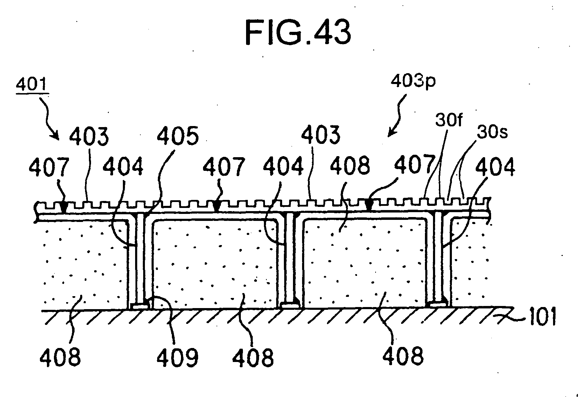

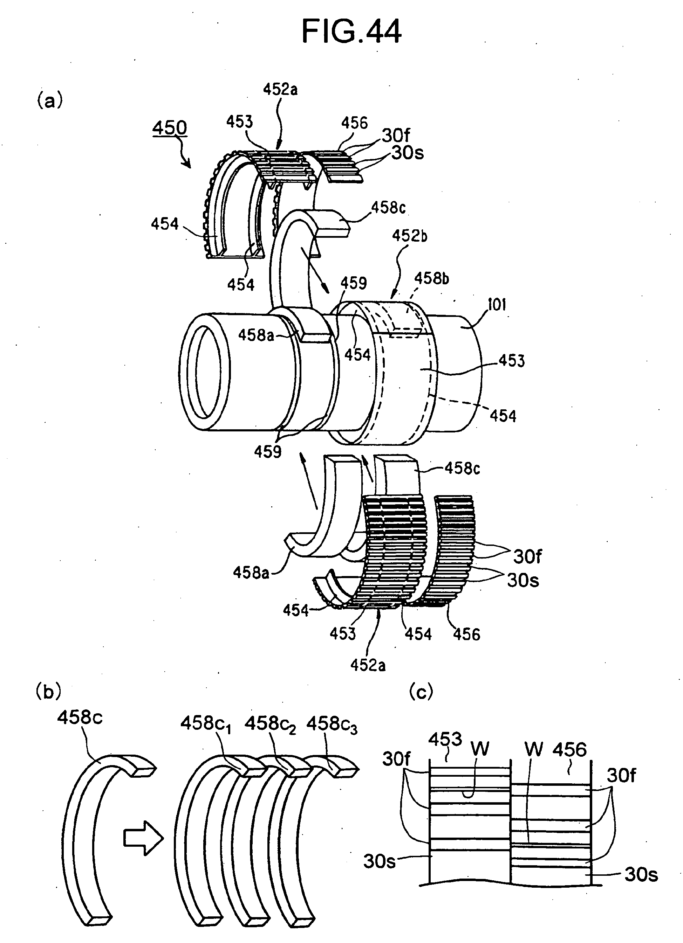

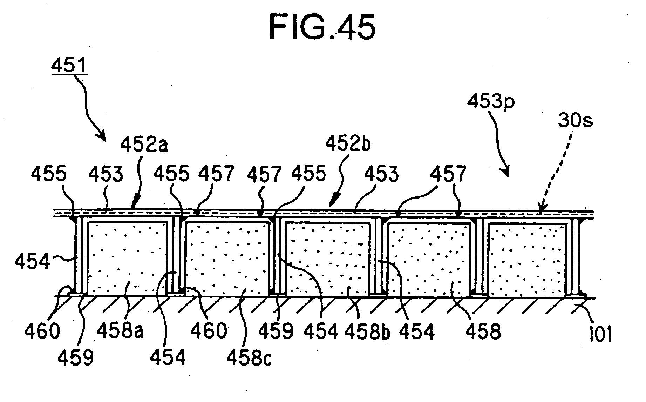

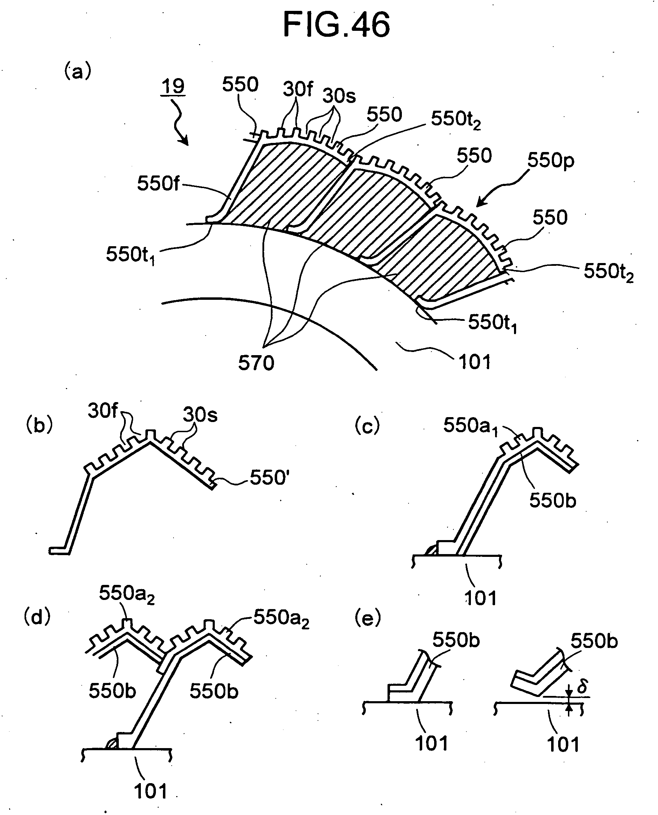

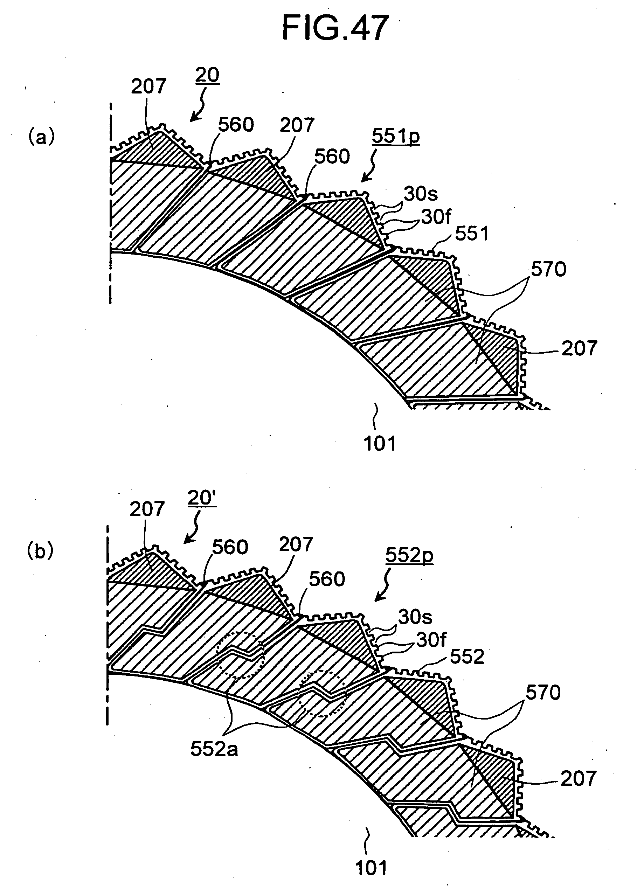

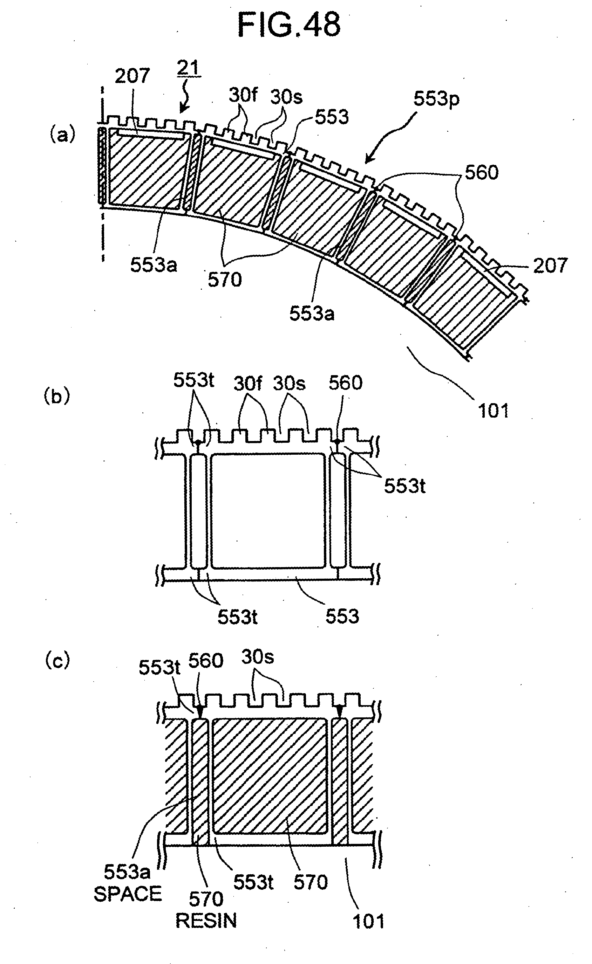

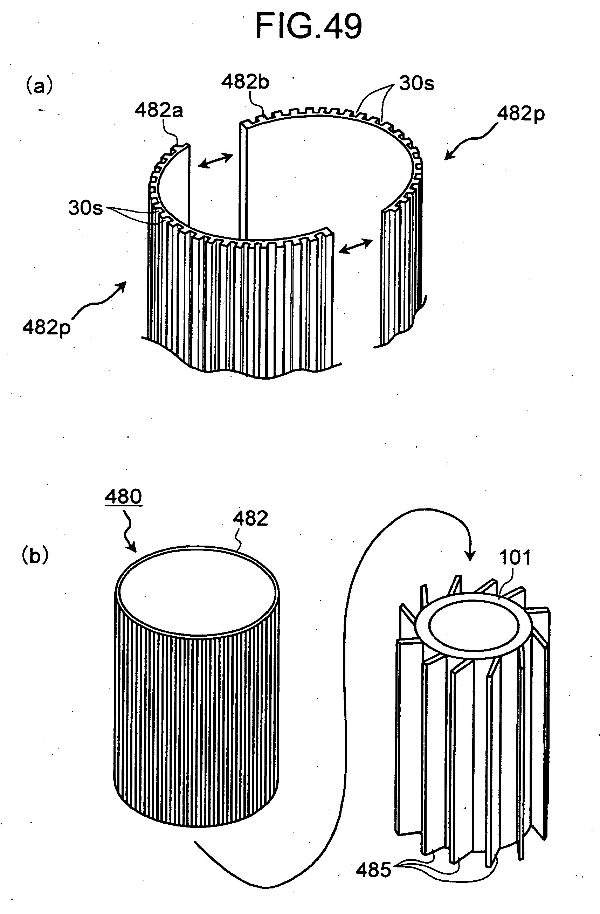

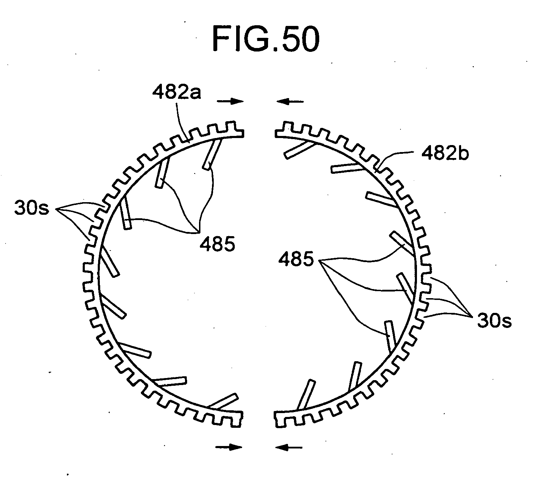

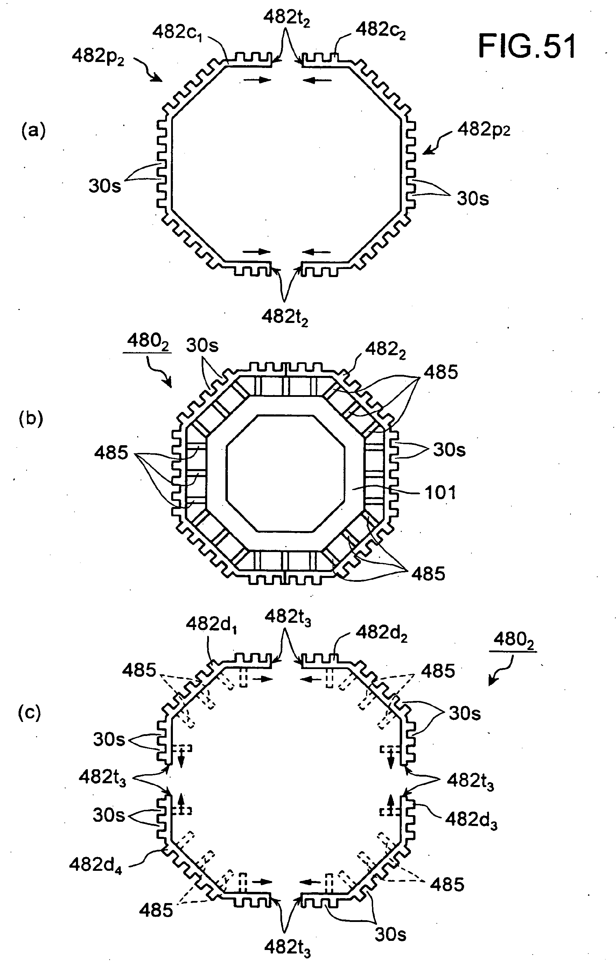

Fig. 1 is a perspective view of a cask according to a first embodiment of the present invention; Fig. 2 is a cross section of the cask shown in Fig. 1 in a radial direction; Fig. 3 is a partial cross section for illustrating sealing structure between a first lid, a second lid, and a trunk body; Fig. 4 is an enlarged view of a groove; Fig. 5 is a cross section cut along a line B-B in Fig. 4; Fig. 6 is a partial enlarged-view of a basket shown in Fig. 2; Fig. 7 is a schematic for illustrating a part of another basket formed by combining square pipes and elements having an L-shaped cross-section; Fig. 8 is a schematic for illustrating a part of another basket formed by combining square pipes and elements having an L-shaped cross-section; Fig. 9 is a schematic for illustrating a part of a basket formed by combining cells in which the elements having an L-shaped cross-section are arranged inside of the square pipe; Fig. 10 is a schematic of a basket in which the square pipes are staggered; Fig. 11 is a schematic for illustrating another example of the basket in which the square pipes are staggered; Fig. 12 is a cross section of the cask according to the present invention in a radial direction, including a basket formed by combining plate members; Fig. 13 is a schematic for illustrating a configuration of the basket formed by combining the plate members; Fig. 14 is a schematic for illustrating a configuration of the basket formed by combining the plate members; Fig. 15 is a schematic for illustrating a configuration of the basket formed by combining the plate members; Fig. 16 is a cross section of another example of the cask according to the present invention in a radial direction, including a basket formed by combining the plate members; Fig. 17 is a partial cross-section perpendicular to axial direction of the cask for illustrating a configuration of an outer casing and heat transfer fins according to a first embodiment of the present invention Fig. 18 is an enlarged view of a part of the outer casing according to the first embodiment; Fig. 19 is a schematic of processing equipment that forms grooves on a radiating surface of a band-like member according to the present invention; Fig. 20 is a flowchart of a process procedure for a method of forming the grooves according to the present invention; Fig. 21 is a flowchart of a process procedure for a method of manufacturing the plate members constituting the basket; Fig. 22 is a perspective view of the processing equipment for a cavity; Fig. 23 is a schematic for illustrating a method of processing the cavity; Fig. 24 is a schematic for illustrating an assembly procedure for the outer casing and the heat transfer fins; Fig. 25 is a schematic for illustrating a modification example of the outer casing and the heat transfer fins; Fig. 26 is a schematic for illustrating a modification example of the outer casing and the heat transfer fins; Fig. 27 is a schematic for illustrating a modification example of the outer casing and the heat transfer fins; Fig. 28 is a schematic of the outer casing of the cask according to the first modification of the first embodiment; Fig. 29 is a schematic of the outer casing of the cask according to a second modification example of the first embodiment; Fig. 30 is a schematic of the outer casing of the cask according to a third modification example of the first embodiment; Fig. 31 is a schematic of the outer casing of the cask according to a fourth modification example of the first embodiment; Fig. 32 is a schematic of an outer casing of the cask according to a second embodiment of the present invention; Fig. 33 is a schematic of a cask according to a third embodiment of the present invention; Fig. 34 is a schematic for illustrating a modification example of the cask shown in Fig. 33; Fig. 35 is a schematic of a cask; Fig. 36 is a schematic for illustrating a modification example of the cask in Fig. 35; Fig. 37 is a schematic for illustrating a modification example of the outer casing of the cask shown in Fig. 35; Fig. 38 is a plan view of an outer casing of a cask; Fig. 39 is a plan view of a modification example of the outer casing shown in Fig. 38; Fig. 40 is an assembly diagram of a cask Fig. 41 is a cross section cut along line A-A in Fig. 40; Fig. 42 is an assembly diagram of the cask Fig. 43 is a cross section cut along line A-A in Fig. 42; Fig. 44 is an assembly diagram of a modification example ; Fig. 45 is a partial cross-section of the cask shown in Fig. 44; Fig. 46 is a partial cross-section of a part of an outer casing of a cask; Fig. 47 is a partial cross-section of a part of an outer casing of a cask according to a first modification example; Fig. 48 is a partial cross-section of a part of an outer casing of a cask according to a second modification xample; Fig. 49 is a schematic of a cask; Fig. 50 is a schematic of the cask; Fig. 51 is a schematic of a cask according to a modification example ; Fig. 52 is a perspective view of an example of a cask; and Fig. 53 is a cross section of the cask shown in Fig. 52 in an axial direction.

### BEST MODE FOR CARRYING OUT THE INVENTION

Exemplary embodiments of a cask according to the present invention will be explained in detail with reference to the accompanying drawings. The cask of the present invention is particularly suitable when the spent fuel assembly for pressurized water reactor (PWR) is stored, but the scope of the invention is not limited thereto.

### (First Embodiment)

Fig. 1 is a perspective view of a cask according to a first embodiment of the present invention. Fig. 2 is a cross section of the cask shown in Fig. 1 in a radial direction. A cask 100 has a feature in that it includes an outer casing 10 formed of a plurality of band-like members 105a and 105b with grooves 30s directed to the axial direction of a trunk body. Though the outer casing 10 and a trunk body 102 are simply illustrated in Fig. 1, actual outer casing 10 and trunk body 102 have a shape and configuration as shown in Fig. 2. The configuration of the cask 100 according to the first embodiment will be explained.

The cask 100 is machined such that the inner face of a cavity 102 in the trunk body 101 is matched with the external shape of a basket 301 a. The inner face of the cavity 102 is milled by special-purpose processing equipment described later. The basket 301 a is obtained by combining square pipes 320 and L-shape elements 330 in cross section, and a plurality of cells 310 are formed in a lattice form. The spent fuel assembly is stored in the cell 310. The basket 310a will be described later.

The trunk body 101 and a bottom plate 104 are forged parts made of carbon steel including a gamma ray shielding function. Stainless steel may be used instead of the carbon steel. The trunk body 101 and the bottom plate 104 are joined by welding. A metal gasket is provided between a first lid 110 and the trunk body 101 for securing sealing performance as a pressure tight container.

A neutron absorber 106 is provided between the trunk body 101 and the outer casing 10. It is desired to use a resin having a neutron shielding function, being a polymer material containing a large amount of hydrogen, as the neutron absorber, taking the easiness of production into consideration. A plurality of copper heat transfer fins 107 responsible for heat conduction are welded between the trunk body 101 and the outer casing 10, and the neutron absorber 106 is injected into a space formed by these heat transfer fins 107 in a flow state, cooled, and solidified. An aluminum or copper honeycomb body may be placed inside the space, and a neutron shielding body may be press-fitted and filled into the honeycomb (not shown). Since, the heat transfer fins 107 uniformly perform heat dissipation, it is desired to provide the heat transfer fins 107 in a high density in the portion where the amount of heat is large. A thermal expansion margin of several millimeters is provided between the neutron absorber 106 and the outer casing 10.

A lid portion 109 includes the first lid 110 and a second lid 111. The first lid 110 has a disc shape made of stainless steel or carbon steel, which shields the gamma ray. The second lid 111 has also a disk shape made of stainless steel or carbon steel, but a neutron absorber 112 is enclosed on the upper side of the second lid 111. The first lid 110 and the second lid 111 are fitted to the trunk body 101 with bolts made of stainless steel or carbon steel. Annular metal gaskets (not shown) are provided between the first lid 110 and the second lid 111, and the first lid 110 and the trunk body 101, respectively, to maintain inside airtightness. A trunnion 117 is provided on the opposite sides of the cask body, for suspending the cask 100.

The trunnion 117 is directly fitted to the trunk body 101. At this time, it is preferable that the fitting position of the trunnion 117 be provided at the position of the trunk body 101 shown in Fig. 2. At this position, since there is some margin in the thickness of the trunk body 101 than that of the flush portion 301 a, even if a trunnion seat is machined, there is little influence from the viewpoint of shielding the gamma ray. A neutron absorber 117a is filled in the trunnion 117.

Fig. 3 is a partial cross section for illustrating sealing structure between a first lid, a second lid, and a trunk body. Fig. 4 is an enlarged view of a groove. Fig. 5 is a cross section cut along line B-B of Fig. 4. Grooves 620 in the circumferential direction are provided in the first lid 110 and the second lid 111, and an annular metal gasket 610 is housed into the grooves 620. The spent fuel assembly is heat-removed in a spent fuel pit filled with water and stored in the cask 100. After the cask 100 is sunk into a cask pit filled with water and stores the spent fuel assembly therein, the first lid 110 and the second lid 111 are fitted to the trunk body 101 in the cask 100 to seal the cask. Therefore, since water remains in the grooves 620, it is necessary to remove water before storage. This procedure will be explained below.

The first lid 110 and the second lid 111 include an air vent 190 for sending gas to the grooves 620, and the trunk body 101 is provided with a drain hole 192 for draining the grooves 620 of water to outside. As shown in Figs. 4 and 5, a sealing member 194 made of a soft metal or the like is provided between the air vent 190 and the drain hole 192. At the time of removing water remaining in the grooves 620, high-pressure gas is fed from the air vent 190 to the grooves 620. Since the inside of the grooves 620 are divided by the sealing member 194, water remaining in the grooves 620 moves in a direction of arrow D in Fig. 5(b) and is drained outside of the cask from the drain hole 192. Since the drain hole 192 is provided on the trunk body 101 side, water in the grooves 620 is drained outside of the grooves 620 without remaining near the sealing member 194. After having removed water in the grooves 620, screw plugs are fitted to inlets of the air vent 190 and the drain hole 192 to seal these holes.

The basket 301 a for storing the spent fuel assembly, which is housed in the cavity 102 of the cask 100 will be explained. Fig. 6 is a partial enlarged-view of a basket shown in Fig. 2, for explaining the configuration of the basket according to the present invention. The basket 301 a has a feature in that an element 330 with grooves directed to the longitudinal direction is made to abut against the outside of a square pipe 320 to form one cell 310 for storing the spent fuel assembly, and a plurality of the cells 310 are combined to form the basket 301a.

The square pipe 320 constituting the cell 310 for storing the spent fuel assembly is produced from an aluminum composite material or an aluminum alloy in which a powder of boron (B) or B compound having a neutron absorbing property is added to aluminum or Al alloy powder (hereinafter, "B-Al material"). This is because a function of preventing the inserted spent fuel assembly from reaching the neutron criticality is required for the spent fuel assembly-storing basket. Such a B-Al material has a good balance between the strength and elongation, and is suitable for the spent fuel assembly-storing basket for the cask, to which impact resistance is required.

From the same reason, it is desired to manufacture the element 330, being an element provided with grooves directed to the longitudinal direction, from an aluminum composite material or an aluminum alloy in which the powder of boron (B) or B compound having a neutron absorbing property is added to Aluminum or Al alloy powder. However, it is not always necessary to use the B-Al material in this embodiment, and other materials may be used, if the neutron absorbing property can be secured only by the square pipes 320.

As shown in Fig. 6(b), the shape of the square pipe 320 in cross section is square, and the spent fuel assembly can be stored in the square pipe 320. The size in cross section of the square pipe 320 is also matched with the external dimension of the spent fuel assembly. The element 330 has an L-shape in cross section perpendicular to the longitudinal direction. As shown in Fig. 6(b), protrusions 330t directed to the longitudinal direction of the element 330 are provided on the side of the element 330 brought into contact with the square pipe 320. The part divided by the protrusions 330t forms grooves 330s directed to the longitudinal direction of the element 330.

In this example, the number of protrusions 330t is two per one side of the element 330 having the L-shape in cross section, but the number of the protrusions 330t is not limited to two. When the number of the protrusions 330t is increased, since the contact area between the square pipe 320 and the element 330 can be increased, the heat transfer performance can be improved. A step portion 330a directed to the longitudinal direction of the element 330 is provided inside of a corner 330ci of the element 330. As a result, the inside of the corner 330ci of the element 330 is formed stepwise and the step portion 330a abuts against the outside of a corner 330co of the square pipe 320. Since the step portion 330a prevents a deviation between the square pipe 320 and the element 330, the spent fuel assembly storing basket 301a can be easily assembled. Since the load of the cell 310 and the spent fuel assembly stored therein can be transferred more reliably by the step portion 330a, the reliability of the spent fuel assembly storing basket 330a is improved.

The cell 310 for storing the spent fuel assembly is formed such that an external surface 320s of the square pipe 320 abuts against ends of the protrusions 330t of the element 330, and the outside of the corner 320co of the square pipe 320 abuts against the step portion 330a of the element 330. The spent fuel assembly is stored in the square pipe 320. The grooves 330s provided in the element 330 form a flux trap, and the grooves 330s shield the neutron radiated from the spent fuel assembly stored in the square pipe 320.

A plurality of cells 10 are combined such that an external surface 320b of the element 330 forming one cell 310 abuts against the external surface 320s of the square pipe 320 forming another cell 310. The spent fuel assembly storing basket 301 a for storing the spent fuel assembly is formed by combining the cells 10 (see Figs. 2 and 6). At this time, it is preferable that the external surface 330b of the element 330 and the external surface 320s of the square pipe 320 be made to abut against each other on a flat surface. However, since the spent fuel assembly stored in the square pipe 320 generates decay heat, the spent fuel assembly becomes high temperature, but the heat transfer area between the elements 330 and the square pipes 320 can be increased by the above configuration.

The basket 301a (see Figs. 2 and 6) is formed by combining a plurality of cells 310 obtained by combining the square pipes 320 and the elements 330. Therefore, even when a B-Al material, being an extrusion resistant material, is used for the square pipes 320 and elements 330, these can be produced within the capacity of the extruder. As a result, the spent fuel assembly storing basket 301 a having a complicated shape with the flux trap can be easily produced. Since the square pipes 320 and the elements 330 are only combined, not by welding, performance deterioration does not occur at the welded joint, and production of the basket 301 a becomes easy. Further, since the square pipes 320 and the elements 330 can be easily separated, the assembled basket 301a can be easily disassembled, repaired, and reused, and hence it is very economical.

Fig. 7 is a schematic for illustrating a part of another basket formed by combining square pipes and elements having an L-shaped cross-section. A basket 301 b has a feature in that the outside 331 co of a corner of an element 331 is formed in a flat surface over the whole region in the longitudinal direction of the element 331 to provide a corner abutment surface 331 cp, the corner abutment surface 331 cp in an end 331f of the adjacent element 331 is formed parallel therewith, to provide an end abutment surface 331fp, and the corner abutment surface 331cp and the end abutment surface 331fp are made to abut against each other.

As shown in Fig. 7(b), the outside of the corner 331 co of the element 331 is formed in a shape cut slantwise, as seen from a section perpendicular to the longitudinal direction. In other words, the outside of the corner 331 co is formed in a flat surface over the whole region in the longitudinal direction of the element 331, and the flat surface becomes the corner abutment surface 331 cp. The end 331 of the element 331 is formed in a flat surface parallel with the corner abutment surface 331 cp, and the flat surface becomes the end abutment surface 331fp. As shown in Fig. 7(a), when the spent fuel assembly storing basket 301 b is assembled, the corner abutment surface 331cp and the end abutment surface 331fp are made to abut against each other. The corner abutment surface 331cp abuts against the end abutment surface 331fp formed at the end 331f of the adjacent element 331, to transmit the stress and the decay heat.

The spent fuel assembly storing basket 301 b is assembled by making the corner abutment surface 331 cp formed in the element 331 abut against the end abutment surface 331fp. These abutment surfaces are formed such that the outside of the corner 331 co of the element 331 is formed in a shape cut slantwise, as seen from cross section perpendicular to the longitudinal direction of the element 331. Therefore, the contact area between the elements 331 can be increased, as compared with the element 330. As a result, since the heat transfer area increases, the decay heat from the spent fuel assembly can be released to the outside of the basket 301 b more efficiently. Further, since the area in which the elements 331 abut against each other further increases, when a load acts thereon, the stress generated in this portion can be further reduced than that with the element 330. As a result, since the workload at the time of stress transmission can be reduced, the reliability of the spent fuel assembly storing basket 301 b can be further improved.

Fig. 8 is a schematic for illustrating a part of another basket formed by combining square pipes and elements having an L-shaped cross-section. A spent fuel assembly storing basket 301c includes a step portion outside of a corner 332co of an element 332 and a step portion at an end 332f of the adjacent element 332 to engage with each other. The spent fuel assembly storing basket 301 c is formed by allowing the both ends to engage with each other.

As shown in Fig. 8 (b), a step portion 332cy is provided outside of the corner 332co of the element 332. As shown in Fig. 8(c), a step portion 332fy is provided also at the end 332f of the element 332, so as to engage with the corner 332co of the adjacent element 332. As shown in Fig. 8(a), when the spent fuel assembly storing basket 301 c is assembled, the corner 332c and the end 332f engage with each other.

The spent fuel assembly storing basket 301 c is assembled by making the corner 332c of the element 332 formed stepwise engage with the end 332f. Therefore, the movement with respect to the directions of X and Y (see Fig. 8(a)), that is, the movement in a direction perpendicular to the longitudinal direction of the element 332 can be restricted, as compared with the element 331. Thereby, a deviation due to an impact when the cask falls or the like can be further suppressed. As a result, a highly reliable basket 301c can be formed. Since the movement of the element 332 with respect to the X and Y directions can be restricted, the basket 301 c can be assembled more easily.

The area in which the elements 332 abut against each other can be further increased, as compared with the element 331. As a result, since the heat transfer area increases, the decay heat from the spent fuel assembly can be released to the outside of the basket 301c more efficiently. Further, since the area in which the elements 332 abut against each other further increases, when a load acts thereon, the stress generated in this portion can be further reduced than in the element 331. As a result, since the workload at the time of stress transmission can be reduced, the reliability of the basket 301c can be further improved, thereby contributing to the improvement in the safety and the reliability of the cask.

Fig. 9 is a schematic for illustrating a part of a basket formed by combining cells in which the elements having an L-shaped cross-section are arranged inside of the square pipe. A basket 301 d has a feature in that an element 337 provided with grooves directed to the longitudinal direction is arranged in the square pipe 320, to form a cell 316 for storing the spent fuel assembly.

The square pipe 320 and the element 337 are produced by extrusion molding the B-Al material. As shown in Fig. 9(b), a cross section perpendicular to the longitudinal direction of the element 337 is an L shape. Two protrusions 337t directed to the longitudinal direction are provided in one side on the external surface 337b of the element 337. The space divided by the protrusions 337t is a groove 337s. The number of the protrusions 337t is not limited to two per one side, and the number of the protrusions 337t may be three per one side as shown in Fig. 9(c). Though not shown, more protrusions 337t may be provided.

As shown in Fig. 9(d), a step portion 337cx directed to the longitudinal direction of the element 337 may be provided outside of a corner 337co of the element 332. With such a configuration, when the basket 301 d is assembled, the space surrounded by the step portion 337cx and the inside of a corner 320ci of the square pipe 320 can be used as the flux trap. Since the neutrons directed toward an obliquely adjacent cell can be also shielded by the flux trap, safety of the basket 301d can be increased.

As shown in Fig. 9(e), the element 337 is arranged in the square pipe 320 to create the cell 316 for storing the spent fuel assembly. At this time, the protrusions 337t of the element 337 and the outside of the corner 337co abut against an inner wall 320i of the square pipes 320. The basket 301d is formed by combining the cells 316 formed in this manner.

The basket 301d is formed by combining the cells 316 obtained by combining the square pipe 320 and the element 337. Therefore, even if the B-Al material, being the extrusion resistant material, is used, the square pipe 320 and the element 337 can be produced within the capacity of the extruder. As a result, even a basket 301d in a complicated shape with the flux trap can be easily produced.

Since the square pipes 320 and the elements 337 are just combined, not by welding, performance deterioration does not occur at the welded joint, and production of the basket 301 d becomes easy. Further, since the square pipes 320 and the elements 337 can be easily separated, the assembled basket 301d can be easily disassembled, repaired, and reused, and hence it is very economical. If the element 337 is arranged in the square pipes 20, since the movement of the element 337 is automatically restricted, the basket 301 d can be formed only by combining the square pipes 320. As a result, the basket 301 d and the cask 100 can be produced more easily.

Fig. 10 is a schematic of a basket in which the square pipes are staggered. A basket 301e has a feature in that the inner shape in cross section is substantially square, and the corner (an area shown by A in the figure) of the pipe is formed by staggering square pipes 321 formed stepwise. When the basket 301e is formed by the square pipes 321, as shown in Fig. 10, the square pipes 321 are staggered and the step portions provided outside of the corner are combined. The inside of the square pipe 321 and the space surrounded by the sides 321 s of the square pipe 321 become cells 317a and 317b for storing the spent fuel assembly, respectively.

Since, flux traps 370 are provided on the sides of the square pipe 321, the plate thickness of the side is thick. Therefore, since the outside of the corner of the respective square pipes 321 can be combined in a wide area, the square pipes are strong against a deviation, and can be easily assembled. Further, since the heat transfer area of the abutting part (an area circled by A in the figure) can be increased, the heat generated from the spent fuel assembly can be transferred to the outside of the basket 301 e efficiently.

Fig. 11 is a schematic for illustrating another example of the basket in which the square pipes are staggered. A basket 301f has a feature in that square pipes 322, in which the number of step portions on the outside of the corner is increased and the outside of the corner is formed multi-stepwise, are staggered. In the square pipe 321 formed single stepwise, as shown in Fig. 10, a plate thickness t₁ of the corner where the stress concentrates becomes half the thickness of the wall. However, when the corner is formed multi-stepwise, more than half the plate thickness on the side of the square pipe 321 can be secured as a plate thickness t₂ of the corner. As a result, since the influence of stress concentration can be reduced, as compared with the square pipes 321 in which the corner thereof is formed single stepwise, a highly reliable basket 301f can be formed.

Examples of the baskets applicable to the present invention have been described, but the baskets applicable to the present invention are not limited thereto. For example, a basket in which band-like plate members are arranged orthogonal to each other and piled up alternately can be housed in the cask 100 according to the present invention.

Fig. 12 is a cross section of the cask according to the present invention in a radial direction, including a basket formed by combining plate members. Figs. 13 to 15 are diagrams of the configuration of the basket formed by combining the plate members. Fig. 16 is a cross section of another example of the cask according to the present invention in a radial direction, including a basket formed by combining the plate members. This cask 100a is for the PWR, in which a box-shaped basket 301 g is housed in the cavity 102 having an internal shape matched with an external shape of the box-shaped basket 301 g. The explanation for the outer casing 10, the trunk body 101, the heat transfer fins 107, and the like forming the cask 100a is the same as that for the cask 100, and hence explanation thereof is omitted.

The internal shape of the cavity 102 is matched with the external shape of the basket 301 g. As shown in Fig. 13, the basket 301g has a shape such that notches 312 are provided in rectangular plate members 309 having a through hole 311, and the plate members 309 are made to be orthogonal to each other and are alternately piled. As a result, a plurality of cells 307 for storing the spent fuel assembly are formed. The through hole 311 is formed in such a shape that a rectangular hole is divided into two by a rib 313 and extends in the longitudinal direction of the plate member 309, and a plurality of communicating holes are formed in the rib 313.

The thorough hole 311 communicates with the through hole 311 in another plate member 309 via the notches 312. A communicating hole 314 for communicating with the through holes 311 in the upper and lower plate members 309 is provided on the end face in the longitudinal direction of the plate member 309. The plate member 309 having a shape such that the through hole is divided into two by the rib 301 is used herein, but the number of ribs may be increased, so that the through hole is divided into three. With such a configuration, the rigidity of the plate member can be improved.

On the upper and lower edges of the plate member 309, a concave portion 315 and a convex portion 316 are respectively formed. The upper and lower plate members 309 are positioned by the concave portion 315 and the convex portion 316 (see Fig. 14). As a result, since creation of a step in the cell 307 can be prevented, the spent fuel assembly can be smoothly stored in the cell 307. A convex portion 317 is also formed at the edges of the plate member 309. As shown in Fig. 15, since a step is created at the edges of the plate member 309 by providing the convex portion 317, a heat exchanger plate 318 is made to span between the adjacent steps. As a result, the outer circumference of the basket 301 is formed. The material of the plate member 309 and the heat exchanger plate 318 are the same as in the first embodiment, that is, a material in which boron is added to aluminum or an aluminum alloy. Fitting of the heat exchanger plate 318 is not limited to the method in which the convex portion 317 is provided, as shown in Fig. 15. For example, the heat exchanger plate 318 is placed spanning over the edges of the plate members 309 and secured by spot welding or the like.

Since the heat exchanger plate 318 is substantially adhered to the inner face of the cavity 102, the heat transfer area between the basket 301g and the cavity 102 can be considerably increased. The decay heat from the spent fuel is efficiently transferred to the trunk body 101 directly from the heat exchanger plates 318 provided on the outer circumference of the basket 309g, or via the helium gas introduced into the cavity 102, thereby considerably improving the heat transfer performance from the basket 309g to the trunk body 101.

The external shape of the basket 301 g is such that four faces 301a thereof become flush by the heat exchanger plates 318, and the other four parts become portions 301gb of an angular cross section. The internal shape of the cavity 102 is such that it becomes flush so as to substantially adhere to the flush portions 301 ga of the basket 301 g (cavity flush portions 102a), and the parts corresponding to the portions 301 gb of the angular cross sections (cavity angular cross sections 102b) of the basket 301 g are substantially matched with the angular shape, with a space S left at the corner thereof.

Since the cavity 102 of the trunk body 101 has a shape matched with the external shape of the basket 301 g, when the basket 301 g is inserted into the cavity 102, the plate members 309 on the outside (particularly, portions 301 gb of the angular cross section) are brought into contact with the inner face of the cavity 102. Further, since the inner shape of the cavity 102 is matched with the external shape of the basket 301 g, the space between the basket 301 g and the cavity 102 can be removed or made small. Therefore, the .decay heat is efficiently transferred to the trunk body 101 from the basket 301 g via the helium gas introduced into the cavity 102 or the direct contact portion. Thus, in the angular cross section 301 gb of the basket 309g, the part thereof face-contacts with the cavity angular cross section 102b in the trunk body 102, thereby reliably holding the basket 309g, and improving the thermal conduction efficiency.

A dummy pipe 308 having a triangular cross section is then inserted so as to fill the space S. By this dummy pipe 308, the weight of the trunk body 302 can be reduced, and the thickness of the trunk body 302 can be made uniform. Further, clatter of the basket 301 g can be suppressed, and the basket can be reliably secured. A dummy pipe 308a having a rectangular cross section as shown in Fig. 16 may be used, instead of the dummy pipe 308 having a triangular cross section. In this case, the internal shape of the cavity 102 has an angular cross section matched with the dummy pipe 308a. As shown in Fig. 16, a bend portion 10c on the outside of the outer casing 10 may have a curved cross section.

The trunnion 117 is directly mounted on the trunk body 302. At this time, the mounting position of the trunnion 117 is preferably provided at an angular cross section 101 b of the trunk body 101. Since there is some margin in the thickness of the trunk body 101 at the angular cross section 101 b than that of the flush portion 101 a, even if the trunnion seat is machined, there is little influence from the viewpoint of shielding the gamma ray. A resin 117a is filled in the trunnion 117, and by filling the resin in the dummy pipe 308 provided in the space S, transmission of neutrons from the portion 117b of the trunnion 117 where the resin is not filled can be prevented to some extent.

According to the cask 100a, since the cavity 102 is formed in a shape matched with the external shape of the box-shaped basket 301 g, thermal conduction efficiency from the basket 301 to the trunk body 302 can be improved. Particularly, the decay heat is efficiently transferred to the trunk body 302 via the heat exchanger plates 318 provided on the outer circumference of the basket. In the angular cross section 301 b of the basket 301 g, the part thereof face-contacts with the trunk body 302, thereby reliably holding the basket 301 g, and improving the thermal conduction efficiency. Further, since the dummy pipe 308 is inserted into the space S, the cask can resist against the deformation of the basket 301 g, and can hold the basket tightly. The thermal conduction efficiency is further improved. In this configuration, even if the heat exchanger plates 318 are omitted, the thermal conduction efficiency can be improved to some extent.

Fig. 17 is a partial cross-section perpendicular to axial direction of the cask for illustrating a configuration of an outer casing and heat transfer fins according to a first embodiment of the present invention. Fig. 18 is an enlarged view of a part of the outer casing according to the first embodiment. The outer casing 10 has a divided structure including a plurality of band-like members 105a and 105b having a plurality of grooves 30s directed to the axial direction (in a direction perpendicular to the page in Fig. 17) of the trunk body 101. As shown in Figs. 17 and 18; in the band-like members 105a and 105b forming the outer casing 10, the grooves 30s are formed in the axial direction of the trunk body 101 on the radiating surface 105p side. The internal shape of the cross section perpendicular to the forming direction of the groove 30s is rectangular, taking into consideration the easiness of forming the groove 30s.

A radiating fin 30f is formed on the radiating surface 105p side of the band-like member 105a and the like by the grooves 30s. The width I of the groove 30s is about from 5 to 15 millimeters, and the depth h is about from 5 to 15 millimeters. Since the length L in the horizontal direction of the band-like members 105a and 105b are about from 180 to 220 millimeters, if the width I of the groove 30a is 10 millimeters, 9 to 11 grooves 30s and radiating fins 30f are formed on the radiating surface 105p such as the band-like member 105a.

For the material of the band-like members 105a and 105b, carbon steel or stainless steel is used, however, as shown in Fig. 18(b), a clad material of carbon steel or stainless steel and a good thermal conductor (copper, aluminum, or the like) may be used. In this case, carbon steel or stainless steel is arranged on the radiating surface 105p side. As a result, the temperature distribution in the band-like members 105a and 105b can be reduced, to improve heat dissipation. The heat transfer fins 107 for transferring the decay heat from the spent fuel assembly to the outer casing 10 are welded to the surface opposite to the radiating surface 105p as described later. Since the heat transfer fins 107 are produced from copper, aluminum, or the like having high thermal conductivity, the weldability with the heat transfer fins 107 can be improved by using such a clad material. As a result, the reliability of the weld can be improved even by inexpensive welding means. These can improve the workability, enabling inexpensive production of the cask.

Fig. 19 is a schematic of processing equipment that forms grooves on a radiating surface of a band-like member according to the present invention. Fig. 20 is a flowchart of a process procedure for a method of forming the grooves according to the present invention. In the formation method of the grooves 30s, a processing machine 300 is used, in which cutting tools 321 are arrayed for the number of grooves 30s in the array direction of the grooves 30s (in this case, in the horizontal direction of the band-like member 105a). As shown in Fig. 19(b), a head 325 is fitted with the cutting tools 321 for the number of the grooves 30s in a direction perpendicular to the traveling direction (which is a direction perpendicular to the page) of the head 325. As shown in Fig. 9 (c), the grooves 30s may be formed by a head 325 in which face mills 322 having a width same as that of the groove 30s are arrayed, instead of the cutting tools 321. When grooves 33s and 34s as shown in Figs. 30 and 28 are machined by the cutting tool or face mill having a shape matched therewith, the number of replacement of the tools can be reduced. Further, the outer casings 15 and 15' shown in Fig. 32 can be machined with traveling of the head 325 being made minimum, if the tools are mounted back and forth of the head 325 as shown in Fig. 19(d).

The band-like member 105a, being an object to be processed, is first secured to a head 302 of the processing machine 300 (step S101). The head 325 of the processing machine 300 is moved toward the band-like member 105a by a predetermined depth of the cut (step S102). The depth of the cut by the cutting tools 321 is selected to an optimum amount according to the relation between the cutting speed and the material of the band-like member 105a. The head 325 is moved in a direction of forming the grooves 30s (in the longitudinal direction of the band-like member 105a, that is, the axial direction of the trunk body 101), to form the grooves 30s by cutting the band-like member 105a (step S103). These steps are repeated until the depth h of the grooves 30s becomes a predetermined depth (step S104), and the processing of the grooves 30s is finished (step S105).

According to this processing method, since a plurality of grooves 30s can be formed at the same time, the time required for the processing can be considerably reduced. Since the outer casing 10 of the cask 100 according to the present invention is formed by connecting the band-like members 105a and 105b, and it is necessary to process many band-like members 105a and the like, this processing method is extremely effective. The forming method of the grooves 30s according to the present invention does not exclude a method of forming the grooves 30s one by one. The grooves 30s may be formed integrally with the band-like member 105a and the like by rolling, other than the cutting processing of the plate material. When forming the grooves 30s by rolling, outer casings 13, 14 and the like shown in Figs. 30 and 31 can be produced easier than by cutting.

Since in the outer casing 10 of the cask 100 according to the present invention, the grooves 30s are formed on the radiating surface 105p side, the surface area of the radiating surface 105p can be increased, as compared with when forming no grooves 30s. For example, when it is assumed that the depth h of the groove 30s is 10 millimeters, the width of the groove 30s is 20 millimeters, and ten grooves 30a are formed in the band-like member 105a having the width of 200 millimeters, the area of the radiating surface 105p can be made as large as two-fold, as compared with when forming no grooves 30s. As a result, sufficient safety can be ensured even with the cask 100 that stores the spent fuel assembly of high burnup and short cooling period.

Returning to Fig. 17, when the grooves 30s are formed on the radiating surface 105p side of the band-like member 105a, the heat transfer fins 107 are welded respectively to the opposite sides of the band-like member 105a (weld 205), leaving the opposite edges. The cross section perpendicular to the longitudinal direction of the band-like member 105a becomes the double cross shape. The heat transfer fin 107 is welded to a buildup portion 201 on the surface of the trunk body 101 (weld 206). When the trunk body 101 is made of carbon steel, the buildup portion 201 is formed of pure iron, thereby improving the weldability with the copper heat transfer fins 107. The band-like member 105a and two heat transfer fins 107 and 107 form a unit 105c of a U shape in cross section, and a plurality of units are welded on the surface of the trunk body 101 with a certain interval.

As shown in Fig. 17(b), a step portion 202 is formed at the opposite edges of the band-like member 105a, and a step portion 203 of the band-like member 105b is fitted and welded to the step portion 202 (weld 204). As is clear from the Fig. 17(b), since the weld 204 between the band-like members 105a and 105b, and the weld 205 between the heat transfer fin 107 and the band-like member 105a are away from each other to some extent, local concentration of heat-affected zones can be prevented. As a result, thermal deformation of the outer casing 10 and the heat transfer fins 107 can be prevented, and internal stress can be alleviated. For the weld, the welding methods conventionally used, such as TIG welding and MIG welding can be used. An aluminum honeycomb material 207 for forming a void layer 207b, which absorbs thermal elongation such as a neutron absorber, is fitted to the inside of the outer casing 10. When the band-like member 105b is produced as shown in Fig. 17(c), since a weld 204' between ends 203' and 204' of the band-like members 105a and 105b can be made a butt weld, the weight of the outer casing 10 can be reduced.

### (Production method of members constituting basket)

Fig. 21 is a flowchart of a process procedure for a method of manufacturing the plate members constituting the basket (square pipes 320 and the like). An aluminum or aluminum alloy powder is produced by rapid solidification processing such as an atomization method (step S401), a powder of boron (B) or a B compound is prepared (step S402), and the both particles are mixed by a cross rotary blender or the like for 10 to 15 minutes (step S403).

For the aluminum or the aluminum alloy, pure aluminum metal, Al-Cu aluminum alloy, Al-Mg aluminum alloy, Al-Mg-Si aluminum alloy, Al-Zn-Mg aluminum alloy, and Al-Fe aluminum alloy can be used. B₄C and B₂O₃ can be used for B or B compound. It is preferred that the addition of boron with respect to aluminum is from 1.5 to 7% by weight inclusive. If the amount is 1.5% or less by weight, sufficient neutron absorbing performance cannot be obtained, and if the amount is more than 7% by weight, elongation with respect to stretching decreases.

The mixed powder is enclosed in a rubber case, high pressure is equally applied from all directions at a room temperature by a cold isostatic press (CIP), to perform powder molding (step S404). The molding conditions by the CIP are such that the molding pressure is 200 Mega pascals, the diameter of the molded article is 600 millimeters, and the length thereof is 1500 millimeters. A high density molded articles having less difference in the molding density can be obtained by applying the pressure equally from all directions by the CIP.

The powder-molded articles are vacuum-sealed in a can and heated until the temperature reaches 300°C (step S405). At a degassing step, the gas composition and moisture in the can are removed. At a next step, the vacuum-degassed molded articles are remolded by a hot isostatic press (HIP) (step S406). The molding conditions by the HIP are such that the temperature is from 400 to 450°C, the time is 30 seconds, the pressure is 6000 tons, and the diameter of the molded article is 400 millimeters. External cutting and peripheral and end cutting are performed to remove the can (step S407), and the billet is hot extruded by using a porthole extruder (step S408). The extrusion conditions in this case are such that the heating temperature is from 500 to 520°C and the extrusion speed is 5 m/min. These conditions will be changed appropriately according to the content of boron. After extrusion molding, tension correction is performed (step S409), and an unsteady part and an evaluation part are cut to obtain a plate square pipe 310 (step S410).

### (Processing method of trunk body)

Processing of the cavity 102 of the trunk body 101 will be explained. Fig. 22 is a perspective view of the processing equipment for a cavity. This processing equipment 140 includes a fixed table 141 that penetrates the trunk body 101 and is mounted and fixed in the cavity 102, a movable table 142 that slides in the axial direction on the fixed table 141, a saddle 143 that is positioned and fixed on the movable table 142, a spindle unit 146 that includes a spindle 144 and a drive motor 145 provided on the saddle 143, and a face mill 147 provided on a shaft of the spindle. A reaction force receiver 148 whose abutting portion is formed according to the internal shape of the cavity 102 is provided on the spindle unit 146. The reaction force receiver 148 is detachable and slides in a direction of arrow in the figure along a mortise (not shown). The reaction force receiver 148 includes a clamping device 149 with respect to the spindle unit 146, and is fixed at a predetermined position.

In a lower groove of the fixed table 141, a plurality of clamping devices 150 are fitted. The clamping devices 150 include a hydraulic cylinder 151, a wedge shaped movable block 152 provided on the shaft of the hydraulic cylinder 151, and a fixed block 153 that abuts against the movable block 152 on a slope, and the slash portion in the figure is fitted to the inner face of the groove of the fixed table 141. When the shaft of the hydraulic cylinder 151 is driven, the movable block 152 abuts against the fixed block 153 and moves slightly downward by the effect of the wedge (shown by dotted line in the figure). As a result, since the lower face of the movable block 152 is pressed to the inner face of the cavity 102, the fixed table 141 can be secured in the cavity 102.

The trunk body 101 is mounted on a rotation fulcrum 154 including a roller, and is rotatable in the radial direction. By inserting a spacer 155 between the spindle unit 146 and the saddle 143, the height of the face mill 147 on the fixed table 141 can be adjusted. The thickness of the spacer 155 is substantially the same as the size of the cell. The saddle 143 moves in the radial direction of the trunk body 101 by rotating a handle 156 provided on the movable table 142. The movable table 142 is shift-controlled by a servomotor 157 and a ball screw 158 provided at the end of the fixed table 141. Since the inner shape of the cavity 102 changes with the progress of processing, it is necessary to change the reaction force receiver 148 and the movable block 152 of the clamping device 150 to an appropriate shape:

Fig. 23 is a schematic for illustrating a method of processing the cavity. The fixed table 141 is secured at a predetermined position in the cavity 102 by the clamping device 150 and the reaction force receiver 148. As shown in Fig. 23(a), the spindle unit 146 is moved at a predetermined cutting speed along the fixed table 141, to perform cutting in the cavity 102 by the face mill 147. When cutting is completed at the position, the clamping device 150 is removed to release the fixed table 141. As shown in Fig. 23(b), the trunk body 101 is rotated by 90 degrees on the rotation fulcrum 154, to secure the fixed table 141 by the clamping device 150. Cutting is then performed by the face mill 147 in the same manner as above. Thereafter, the same step is repeated twice.

The spindle unit 146 is then rotated by 180 degrees, to sequentially perform cutting in the cavity 102, as shown in Fig. 23(c). Similarly, the processing is repeated while the trunk body 101 is rotated by 90 degrees. As shown in Fig. 23(d), the position of the spindle unit 146 is raised by inserting the spacer 155 between the spindle unit 146 and the saddle 143. The face mill 147 is then moved in the axial direction at this position, to perform cutting in the cavity 102. By repeating this while rotating the spindle unit 146 by 90 degrees, the shape required for inserting the basket 301 a can be obtained. Cutting of the portion where the dummy pipe 308 is to be inserted may be performed in the same manner as shown in Fig. 23(d). However, the thickness of the spacer that adjusts the height of the spindle unit 146 is made the same as that on one side of the dummy pipe 308.

Fig. 24 is a schematic for illustrating an assembly procedure for the outer casing and the heat transfer fins. As shown in Fig. 24(a), the band-like member 105a is placed on a working plane, and the heat transfer fins 107 are made to stand upright and are supported on the opposite sides thereof. At this time, the opposite edges of the band-like member 105a are left so as to slightly protrude outward to some extent. The gap between the welds 204 and 205 is determined by the protruding width (see Fig. 9(b)). As shown in Fig. 24(b), a worker W welds the heat transfer fins 107, so as to form the unit 105c of a U shape in cross section. The unit 105c is prepared beforehand for the number to be arranged at a predetermined gap around the trunk body 101 or is prepared in a timely manner.

As shown in Figs. 24(c) and 24(d), the unit 105c is welded to the trunk body 101. The unit 105c is welded by placing the heat transfer fins 107 on the buildup portions 201. At this time, the worker W welds the unit 105c from outside thereof, but the worker W may use an automatic welding machine if available. Even when an adjacent unit 105c has been welded, these units are welded at a predetermined gap. Therefore, welding can be performed by inserting a torch and an electrode (T) from the gap L. The trunk body 101 is supported by a rotation fulcrum 208 and a jig 209, and the unit 105c can be welded by rotating the trunk body 101 by these members.

As shown in Figs. 24(e) and 24(f), the band-like member 105b is spanned between the adjacent band-like members 105a and 105a, the step portion 203 thereof is fitted to the step portion 202 of the band-like member 105a, and the border on the surface side between the band-like members 105a and 105b is welded (the weld 204). The outer casing 10 of the cask 100 is completed by welding the band-like member 105b between all adjacent band-like members 105a.

When the outer casing 10 and the heat transfer fins 107 are assembled, it is not necessary to perform welding in the narrow and long space formed by the outer casing 10 and the heat transfer fins 107, by manufacturing the cask according to the above procedure. In other words, in the conventional example, a self-propelled welding machine runs in the space formed by an outer casing 503 and heat transfer fins 508. However, by assembling the outer casing 10 and the heat transfer fins 107 having the above configuration according to the above procedure, the whole welding can be performed from outside, thereby enabling the assembly of the cask with general welding equipment, without requiring a special-purpose welding machine. As a result, the assembly operation of the cask becomes very easy. Further, since the cask can be assembled with the general welding equipment, new investment in plant and equipment is not necessary, thereby reducing the production cost of the cask.

Explanation will be continued with reference to Figs. 1 and 2. The spent fuel assembly stored in the cask 100 includes a fissile material and a fissile product, which emits radioactive rays and is accompanied with decay heat. Therefore, it is necessary to reliably maintain a heat removal function, a radiation shielding function, and a neutron criticality prevention function of the cask 100 during the storage period (for about 60 years). In the cask 100 according to the first embodiment, the inner face of the cavity 102 of the trunk body 101 is machined so that the outer circumference of the basket 301 a is inserted therein in an adhered state (substantially without space), and the heat transfer fins 107 are provided between the trunk body 101 and the outer casing 10. Therefore, the decay heat from the spent fuel assembly is transferred to the trunk body 101 through the basket or the filled helium gas, and is mainly released from the radiating surface 105 of the outer casing 10 through the heat transfer fins 107. As a result, the thermal conductivity from the basket 301 a is improved, thereby enabling efficient removal of decay heat.

The gamma ray emitted from the spent fuel assembly is shielded by the trunk body 101, the bottom plate 104, the outer casing 10, the lid portion 109, and the like, made of carbon steel or stainless steel. The neutrons are shielded by the neutron absorber 106, so as to reduce the influence of radiation exposure with respect to the persons engaged in radiation business. Specifically, the cask is designed so that the shielding function can be obtained such that the surface dose equivalent rate is equal to or less than 2 mSv/h, and the dose equivalent rate at 1 meter from the surface is equal to or less than 100 µSv/h. Further, since aluminum alloy containing boron is used for the square pipes 320 and the elements 330 constituting the cells, neutrons are absorbed and can be prevented from reaching neutron criticality.

### (Modification example of outer casing and heat transfer fin)

Figs. 25 to 27 are explanatory diagrams of a modification example of the outer casing and the heat transfer fin. Heat transfer fins 210 may be inclined as shown in the figure. The remaining configuration is the same as the above cask. Since the neutron absorber 106 always exists in the neutron releasing direction (shown by arrow in the figure) from the spent fuel assembly, by arranging the heat transfer fins 210 slantwise, passing and leaking of the neutrons through the heat transfer fins 210 can be suppressed. In the figure, the inclination of the heat transfer fins 210 are alternated, however, all the heat transfer fins 210 may be inclined in one direction (not shown).

As shown in Fig. 26, a band-like member 211 b may be welded so as to be piled at the edge of a band-like member 211a. In this case, the band-like member 211a and the heat transfer fins 107 constitute a unit of a U shape in cross section, the unit is welded to the trunk body 101 respectively, and the band-like members 211 b are welded between all adjacent band-like members 211 a. With such a configuration, the assembly of the cask can be facilitated as in the above example, and by forming the welds 212 and 213 away from each other, local concentration of the heat-affected zone can be prevented. Further, since stepping and edge preparation for the edges of the band-like members can be omitted, the configuration of the outer casing 211 can be simplified.

In the configuration shown in Fig. 27, the heat transfer fin 214 itself is made in the U shape in cross section, and the band-like member 105a is mounted on the surface of the heat transfer fin 214, and welded with the band-like member 105a (weld 215) at the corner edges of the heat transfer fin 214. As a result, since the heat transfer fin 214 is mounted on the band-like member 105a and welded, the assembly becomes easy. As in the above example, welding in a narrow and long space is not necessary, and welding can be performed from outside, thereby facilitating the assembly of the cask, and local concentration of the heat-affected zone can be prevented by separating the welds 204 and 215 from each other. Since the copper heat transfer fins 214 are face-contacted with the band-like member 105a, the decay heat in the cask can be transferred to the outer casing 10, and released to outside efficiently. The heat dissipation route is shown by one-dot chain line in the figure. By changing the thickness of the heat transfer fin 214 at a portion where the heat transfer fin 214 comes in contact with the band-like member 105a, and a portion between the trunk body 101 and the band-like member 105a, more reasonable shape may be obtained (not shown).

According to the cask 100 in the first embodiment, since grooves 30s directed to the axial direction of the cask 100 are formed on the radiating surface 105p side of the outer casing 10, the surface area of the radiating surface 105p can be increased, as compared with a cask having no grooves 30s. As a result, since much heat can be released to the air than a cask having no grooves 30s, sufficient safety can be ensured even with the cask 100 that stores the spent fuel assembly of high burnup and short cooling period. When the cask 100 is made to stand upright and stored, the direction of the air circulation around the outer casing 10 agrees with the direction of the grooves 30s and the radiating fins 30f, thereby improving the heat dissipation efficiency.

The outer casing 10 is made to have a divided structure, and a plurality of units 105c are formed by the band-like member 105a having grooves 30s formed thereon beforehand and the heat transfer fins 107. The units are welded to the trunk body 101 from outside at a predetermined interval, and the band-like member 105b is spanned between all adjacent band-like members 105a and is welded from outside. Therefore, since welding in a narrow and long space is not necessary, welding operation can be performed easily, and a special-purpose welding machine is not required. Further, since the assembly of the cask 100 is possible with the commonly used welding equipment, the cask 100 in which grooves are formed on the outer casing 10 to improve the heat dissipation effect can be assembled easily in most companies. Since the outer casing 10 is divided finely, the outer casing 10 having excellent heat dissipation property can be produced, matched with the external shape of the trunk body 101, even with the trunk body 101 having a substantially octagonal external shape in cross section, as shown in Fig. 2. Since the band-like members 105a having grooves 30s formed thereon are welded to constitute the outer casing 10, it is not necessary to bend the plate members having grooves formed thereon, and a large-scale casting equipment is not required, thereby enabling easy production of the outer casing 10. Further, at the time of mass production of the outer casing 10, if production is performed by not only cutting but also rolling, the band-like members 105a and 105b, which are the primary members of the outer casing 10, can be produced at a lower cost.

Since the inner face of the cavity 102 of the trunk body 101 is machined so that the outer circumference of the basket 301 a is inserted therein in an adhered state, heat dissipation from the basket 301a can be improved. Particularly, since the square pipes 320 and the elements 330 arranged at outermost part of the basket come in contact with the inner face of the cavity 102 of the trunk body 101, the basket 301 a can be reliably held, and the heat transfer performance can be improved.

Further, since an unnecessary space in the cavity 102 can be eliminated, the trunk body 101 can be made compact and lightweight. Even in this case, the number of spent fuel assemblies to be stored does not decrease. On the contrary, if the outer diameter of the trunk body 101 is made the same as that of the cask 500 shown in Fig. 46, the number of cells can be increased, thereby enabling an increase in the number of spent fuel assemblies to be stored. Specifically, in the cask 100, in the spent fuel assembly for the PWR having a larger external size than that of the spent fuel assembly for a BWR, the number of spent fuel assemblies to be stored can be increased to 21. At this time, the outer diameter of the cask body is about 2500 millimeters, and the mass thereof can be suppressed to equal to or less than 120 tons.

### (First Modification Example)

Fig. 28 is a schematic of the outer casing of the cask according to the first modification of the first embodiment. An outer casing 11 of this cask has a substantially similar configuration to that of the outer casing 10 of the cask according to the first embodiment, but is different in that a plurality of grooves 31s having an angle of inclination θ with respect to the axial direction (in the Z direction shown by arrow in the figure) of the trunk body 101 of the cask are provided, on the radiating surface side (on the upper surface on the page) of the outer casing 11. The configuration of other parts is the same as in the first embodiment, and the explanation thereof is omitted, and like reference signs designate like parts.

As shown in Fig. 28, a plurality of grooves 31 s are formed with an angle of inclination θ with respect to the axial direction of the trunk body 101 of the cask, on the radiating surface side of the band-like members 105a constituting the outer casing 11. The depth h and the width I of the groove 31 s are as explained in the first embodiment. The grooves 31s can be formed by fixing the band-like members 105a with inclination and machining according to the formation method explained in the first embodiment. The angle of inclination θ is preferably from 15 to 30 degrees, giving priority to storage of the cask.

When the angle of inclination θ of the grooves 31s is about 0 degree, since the cooling air around the outer casing goes up from the bottom part to the upper part of the cask without being disturbed, the heat dissipation amount decreases in the upper part of the cask. On the other hand, in this outer casing 11, the air warmed by the heat from the outer casing 11 goes up near the radiating surface of the outer casing 11. However, since the flow of the air is disturbed by the radiating fins 31f having inclination, heat transfer between the air and the radiating fins 31f is promoted. In other words, when the air goes up near the radiating surface of the outer casing 11, the air tends to exfoliate from the ends of the radiating fins 31f, at the time of flowing along the radiating fins 31f having inclination, and the ambient cool air flows in due to the exfoliation, thereby enabling efficient heat dissipation. As a result, the heat dissipation performance can be further improved, as compared with the outer casing 10 according to the first embodiment. Further, by shifting the position of the grooves 31s on the band-like members 105a and 105b by half a pitch, a pattern that exhibits higher heat dissipation performance can be formed.

### (Second Modification Example)

Fig. 29 is a schematic of the outer casing of the cask according to a second modification example of the first embodiment. An outer casing 12 of this cask has a substantially similar configuration to that of the outer casing 10 of the cask according to the first embodiment, but is different in that grooves 32s directed to the circumferential direction of the trunk body 101 are provided on the radiating surface side (on the upper surface on the page) of the outer casing 12. The configuration of other parts is the same as in the first embodiment, and the explanation thereof is omitted, and like reference signs designate like parts.

As shown in Fig. 29(a), a plurality of grooves 32s are formed on the radiating surface side of the band-like member 105a constituting the outer casing 12. The radiating fins 32f are formed by the grooves 32s on the radiating surface side of the band-like member 105a and the like. The depth h and the width I of the groove 32s are as explained in the first embodiment. The grooves 32s can be formed according to the formation method explained in the first embodiment. As shown in Fig. 29(b), by shifting the position of the grooves 31s on the band-like members 105a and 105b by half a pitch, a pattern that can improve the heat dissipation performance can be formed.

In the outer casing 12 of the cask according to the second modification example of the first embodiment, since grooves 32s directed to the circumferential direction of the cask are provided on the radiating surface side of the outer casing 12, the surface area of the outer casing 12 can be increased, thereby improving the heat dissipation performance. When the cask 100 is placed horizontally and stored, the direction of the air circulation around the outer casing 12 agrees with the direction of the grooves 32s and the radiating fins 32f, thereby improving the heat dissipation efficiency.

### (Third Modification Example)

Fig. 30 is a schematic of the outer casing of the cask according to a third modification example of the first embodiment. An outer casing 13 of this cask has a substantially similar configuration to that of the outer casing 10 of the cask according to the first embodiment, but is different in that the cross-sectional shape of at least one of a groove 33s and a radiating fin 33f, being a protrusion divided by the grooves 33s, is formed in a circular-arc shape. The configuration of other parts is the same as in the first embodiment, and the explanation thereof is omitted, and like reference signs designate like parts.

As shown in Fig. 30, a plurality of grooves 33s having the circular-arc cross section are formed on the radiating surface 105p side of the band-like member 105a constituting the outer casing 13. The radiating fins 33f are formed by the grooves 33s on the radiating surface 105p side of the band-like member 105a and the like. As shown in Fig 30(c), not only the grooves 33's, but also the cross-sectional shape perpendicular to the formation direction of the radiating fins 33'f may be formed in the circular-arc shape. With such a configuration, since the portions of acute angle can be removed from the outside of the outer casing 13, decontamination becomes easy. Further, protection films such as painting can be easily applied to the surface of the outer casing 13, and becomes hard to be peeled off. The radius r of the grooves 33 and 33' is about 5 to 15 millimeters, and the width of the band-like member 105a is as explained in the first embodiment. Further, though not shown, only the point of the radiating fins is formed in circular-arc shape in cross section, and the grooves may be the same as that on the outer casing 10 explained in the first embodiment (see Figs. 17 and 18). As a result, since the area of the radiating fin portions can be made larger than that of the outer casing 10 according to the first embodiment, the heat dissipation performance can be improved.

The formation method and the processing machine 300 according to the first embodiment can be applied for forming the grooves 33s, but the tools to be used are changed. Cutting tools 324 for processing the grooves 33s have, as shown in Fig. 30(b), a blade having the same external shape as the cross-sectional shape of the grooves 33s. By using such cutting tools 324, grooves 33s having the circular-arc cross section can be formed on the radiating surface 105p side of the band-like member 105a.

The grooves 33s may be integrally formed with the band-like member 105a by rolling. The grooves 33s can be formed easier by rolling than by cutting, and hence, even the grooves 33s having the circular-arc cross section can be formed easily. As shown in Fig. 30(c), even when the cross-sectional shape perpendicular to the formation direction of the fins 33'f is circular arc, the band-like member 105a can be produced easily.

In the outer casings 13, 13' of the cask according to the third modification example of the first embodiment, radioactive materials are hardly accumulated, since the cross-sectional shape of the grooves 33s and the like is circular arc. Therefore, since the radioactive materials adhered to the outer casing 13 can be efficiently cleaned off, decontamination operation can be performed efficiently. Since the cross-sectional shape perpendicular to the formation direction of the grooves 33s and the like is circular arc, the surface area of the outer casing 13 and the like can be increased as compared with the conventional cask, thereby enabling improvement of the heat dissipation performance.

### (Fourth Modification Example)

Fig. 31 is a schematic of the outer casing of the cask according to a fourth modification example of the first embodiment. An outer casing 14 of this cask has a substantially similar configuration to that of the outer casing 13 of the cask according to the third modification example of the first embodiment, but is different in that the cross-sectional shape perpendicular to the formation direction of grooves 34s is trapezoidal. The configuration of other parts is the same as in the third modification example of the first embodiment, and the explanation thereof is omitted, and like reference signs designate like parts.

As shown in Fig. 31, a plurality of grooves 34s having a cross section, perpendicular to the axial direction of the trunk body 101, of a trapezoid enlarged to the radiating surface 105p side are formed on the radiating surface 105p side of the band-like member 105a constituting the outer casing 14. Therefore, the cross section perpendicular to the axial direction of the radiating fins 34f divided by the grooves 34s becomes a trapezoid with the outside being narrow. The depth h and the mean width I_{A} of the groove 34s are as explained in the first embodiment. The flare angle α of the groove 34s is preferably from 45 to 60 degrees.

As shown in Fig. 31, if the radiation from the outer casing 14 is displayed by lines, when the radiant heat at point a is too close to point d, heat dissipation from point d decreases. Further, when the radiant heat at point a and point c pass near point e, the air around point e is heated up to decrease the heat dissipation from point e. When point e is compared with point f, the temperature at point f becomes low, and hence heat dissipation from point f decreases. Therefore, when the region at point f is taken wide, since the heat dissipation amount decreases, it is not economical. Since the air around point f is relatively cool, the flare angle α is preferably from 45 to 60 degrees, which can provide a suitable region.

The formation method and the processing machine 300 according to the first embodiment can be applied for forming the grooves 34s, but the tools to be used are changed. For the cutting tool (not shown) for processing the grooves 34s, one having a blade with an external shape the same as the cross-sectional shape of the groove 34s may be used. Further, the grooves 34s may be integrally formed with the band-like member 105a and the like by rolling.

In the outer casing 14 of the cask according to the fourth modification example of the first embodiment, since radiating fins 34f of a trapezoidal shape with the outside (the radiating surface 105p side) thereof being narrow are formed, the radiation direction on the side of the radiating fins 34f can be directed outward of the outer casing 14 (the upper direction in Fig. 31 (b)). As a result, the influence of radiation between the sides of the adjacent radiating fins 34f can be reduced, to increase the thermal energy radiated to the air, thereby further improving the heat dissipation efficiency than the outer casing 10 of the cask according to the first embodiment. The configuration of the grooves, the formation method of the grooves, and the other configuration of the invention explained in the first embodiment and the modification examples thereof are also applicable to the embodiments explained below.

### (Second Embodiment)

Fig. 32 is a schematic of an outer casing of the cask according to a second embodiment of the present invention. An outer casing 15 of the cask has substantially the same configuration as that of the outer casing 10 of the cask according to the first embodiment, but is different in that not only grooves 35s₁ directed to the axial direction of the trunk body 101 (Z direction in the figure) but also grooves 35s₂ directed to the circumferential direction of the cask 100 are formed. The configuration of other parts is the same as in the first embodiment, and the explanation thereof is omitted, and like reference signs designate like parts.

The grooves 35s₁ directed to the axial direction of the trunk body 101 and the grooves 35s₂ directed to the circumferential direction of the trunk body are formed on the radiating surface (the upper direction on the page) of the band-like member 105a. The portions divided by these grooves 35s₁ and 35s₂ become radiating fins 35f. As explained in the first embodiment, the grooves 35s₁ and 35s₂ can be formed by a machine tool in which cutting tools are arranged in the array direction of the grooves 35s₁ and 35s₂.

Since the grooves 35s₂ directed to a direction perpendicular to the axial direction of the trunk body 101 are further formed, the air flow flowing on the surface of the outer casing 15 can be made more turbulent than that on the outer casing 10 according to the first embodiment (see Fig. 1 and the like). As a result, the outer casing 15 of the cask according to the second embodiment can further improve the heat dissipation performance. Further even when the cask 100 is placed horizontally or vertically, since the grooves 35s₁ or 35s₂ can be made parallel to the direction of the gravity, the effect of natural convection can be sufficiently exhibited to make heat dissipation efficient, regardless of the installation direction of the cask 100. As shown in Fig. 32(b), fins 35'f may be staggered on the radiating surface of the outer casing 15'. Also by such a configuration, since the turbulence of the air flow flowing on the surface of the outer casing 15' can be increased, the heat dissipation performance can be further improved. The configuration of the grooves, the formation method of the grooves, and other configuration of the invention explained in the second embodiment are also applicable to the embodiments explained below.

### (Third Embodiment)

Fig. 33 is a schematic of a cask according to a third embodiment of the present invention. This cask has a feature in that it has an outer casing 16 with a plurality of grooves 30s directed to the axial direction of the trunk body 101 being provided on a heat transfer surface of the band-like member formed in an inverted-V shape in cross section. Plate band-like members 216a and 216b having the grooves 30s formed on a radiating surface 216p side are bent to an inverted-V shape in cross section by a bending machine. Heat transfer fins 107 are welded to the opposite edges of the band-like members 216a (weld 205) to form a unit, and the unit is welded on the buildup portion 201 of the trunk body 101 (weld 206). The band-like members 216b are also bent, and the step portion 203 of the band-like member 216b is fitted to the step portion 202 of the band-like member 216a and welded from outside (weld 204). The honeycomb material 207 for forming a void layer is provided on the inner surface of the band-like members 216a and 216b. A neutron absorber (for example, resin) that absorbs neutrons is filled in the space between the band-like members 216a and 216b and the heat transfer fins 107. The void layer formed of the honeycomb material 207 absorbs thermal expansion of the neutron absorber, to prevent exfoliation of the weld and deformation of the outer casing 16 (the same applies hereinafter).

With such a configuration also, since all welding operations can be performed from outside, the assembly of the cask can be facilitated as in the first embodiment, and local concentration of the heat-affected zone can be prevented by separating the welds 204 and 205 away from each other. Since the band-like members 216a and 216b are in an inverted-V shape, the surface area of the outer casing 16 can be further increased, thereby enabling further improvement in the heat dissipation effect. In the cask in which a plurality of plate radiating fins are protruded with respect to the outer casing, it is difficult to clean the corner between the radiating fins and the outer casing, but with the outer casing 16 in the inverted-V shape, since there is no narrow corner, there is an advantage in that cleaning of the surface of the outer casing can be performed easily. An outer casing in a V shape, not in the inverted-V shape, has the similar effect (not shown).

As shown in Fig. 34, which does not form an embodiment of the present invention, the edge of the band-like member 217 is mounted on the top part of the edge of the heat transfer fin 107, and abutted against the edge of the adjacent band-like member 217, and the abutting portion may be welded (weld 219). A bevel is formed at the edge of the band-like member 217. By forming the outer casing 16' in an inverted-V shape in cross section, and forming a plurality of grooves 30s, the surface area of the outer casing 16' can be further increased, thereby enabling further improvement in the heat dissipation performance of the cask.

### (Fourth-cask)

Fig. 35 is a schematic of a cask which is not according to an embodiment of the present invention. This cask has a feature in that the heat transfer fins 107 are welded at the center of the band-like member 105a with a plurality of grooves 30s directed to the axial direction of the trunk body 101 (weld 222) to form a unit 220a of a T shape in cross section, and a plurality of units 220a are combined to form an outer casing 17. The formation procedure and the welding procedure of the grooves 30s are substantially the same as those in the first embodiment. After the grooves 30s are formed on the radiating surface 105p side of the band-like member 105a, the heat transfer fin 107 is welded to the band-like member 105a to form the unit 220a. Welding between the heat transfer fin 107 and the band-like member 105a may be performed from one side, or from both sides for ensuring the strength (weld 222). The unit 220a is then welded to the trunk body 101 at a predetermined interval. The buildup portions 201 are provided on the trunk body 101, and the heat transfer fin 107 is welded on the buildup portion 201. Welding may be performed from both sides of the heat transfer fin 107. The band-like member 105b is fitted between all adjacent band-like members 105a and welded (weld 204).

With such a configuration, since the surface area of the radiating surface 105p can be increased by the grooves 30s and radiating fins 30f formed on the radiating surface 1 05p side of the outer casing 17, the heat dissipation performance can be improved. Since welding in a narrow and long space is not necessary, and welding can be performed from outside, the assembly of the cask can be facilitated. Since the width of the band-like members 105a and 105b can be reduced by forming the cross section in T shape, a substantially circular outer casing 17 can be formed, even if it is arranged on a circular trunk body 101. Further, since the distance between the welds 222 and 204 can be increased, as compared with the first and the second embodiments, local concentration of the heat-affected zone can be further prevented.

As in an outer casing 17' shown in Fig. 36, which is not an embodiment of the present invention, the end of the heat transfer fin 224 is bent to form an L shape in cross section, so that the heat transfer fin 224 face-contacts with the band-like member 105a. In this case, welding between the heat transfer fin 224 and the band-like member 105a is performed so that the corner edge of the heat transfer fin 224 is welded with the band-like member 105a (weld 223). By welding in this manner, since the heat transfer fin 224 can be mounted on the band-like member 105a and welded, assembly becomes easy. Further, since the heat transfer fin 224 is made to face-contact with the band-like member 105a, the decay heat in the cask can be efficiently transferred to the outer casing 17', and released. The heat dissipation route is shown by one-dot chain line in the figure.

Fig. 37 is a schematic for illustrating a modification example of the outer casing of the cask shown in Fig. 35, which is also not an embodiment of the present invention. An outer casing 17" of the cask includes a plurality of band-like members 226a, b, c, and d with the grooves 30s formed on the radiating surface 226p side, and the respective band-like members are welded with the heat transfer fins 107 at the center thereof (weld 227), to form a unit 228 of a T shape in cross section. The assembly of the outer casing 17" is performed in the following manner. That is, the heat transfer fin 107 in the unit 228a is welded to the trunk body 101 from one side (weld 229a). The heat transfer fin 107 in the unit 228b is then welded to the trunk body 101 from the open one side (weld 229b), and the band-like members 226a and 226b are welded together (weld 230a).

Subsequently, the heat transfer fin 107 in the unit 228c is welded to the trunk body 101 from the open one side (weld 229c), and the band-like members 226b and 226c are welded together (weld 230b). For the unit 228d, the heat transfer fin 107 is welded to the trunk body 101 by a weld 229d, and the band-like members 226c and 226d are welded together by a weld 230c. Here, as shown in Fig. 37(b), for the band-like member 226d to be welded to the last band-like member 229, one having a small width may be used to make it easy to weld the heat transfer fin 107 in the unit to be welded last to the trunk body 101, thereby improving the work efficiency.

As a result, the band-like members 206a to d and the heat transfer fins 107 can be welded from outside of the trunk body 101, and hence welding in a narrow and long space is not necessary, and the assembly operation of the cask can be facilitated. Further, since the welds 230 and 227 are apart from each other sufficiently, local concentration of the heat-affected zone can be prevented.

### (Fifth-Outer casing)

Fig. 38 is a plan view of an outer casing of a cask which is not according to an embodiment of the present invention. In the above embodiments, a plurality of band-like members are welded to form the outer casing, but the band-like members 105a with grooves 30s directed to the axial direction of the trunk body 101 (Z direction in the figure) may be connected at the axial end of the cask. Four heat transfer fins 107 (shown by dotted line in the figure) are welded to one plate member 231 at a predetermined interval. The band-like members 105a are welded to the trunk body together with the heat transfer fins 107 with a predetermined interval. The band-like member 105b with the grooves 30s directed to the axial direction of the trunk body 101 is fitted into a pulled portion 105d and a gap between the adjacent plate members 231 and welded. Since the heat transfer fin 107 is not arranged at a position facing a junction 233, the welding operation is not disturbed.

As shown in Fig. 39, a plate member 234 with grooves 30s directed to the axial direction (Z direction in the figure) of the trunk body 101 may be formed substantially in a U shape, so as to connect the adjacent plate members 234 with junctions 235. In this configuration, the band-like member 105b with grooves 30s directed to the axial direction (Z direction in the figure) of the trunk body 101 is fitted into the pulled portion 236 formed by the plate member 234 and welded. As a result, an outer casing 237 is formed.

### (Sixth -Assembly Diagram)

Fig. 40 is an assembly diagram of a cask which is not according to an embodiment of the present invention. Fig. 41 is a cross section cut along line A-A in Fig. 40. In this cask 400, the grooves 30s directed to the axial direction (Z direction in the figure) of the trunk body 101 in the cask 400 are formed on the outside of a unit 402 formed in a ring shape, which constitutes an outer casing 401, and the unit 402 is sequentially inserted in the axial direction of the trunk body 101, and welded. As shown in Figs. 42 and 40, the grooves 30s directed to the circumferential direction of the trunk body 101 in the cask 400 may be formed on the outside of the unit 402 formed in a ring shape, which constitutes the outer casing 401, and the unit 402 may be sequentially inserted in the axial direction of the trunk body 101, and welded. Though not shown, as explained in the modification example of the first embodiment, grooves directed to the axial direction and grooves directed to the circumferential direction of the trunk body 101 may be formed on the outside of the unit 402. In the example shown in Fig. 40, if the outer casing is assembled by shifting the peaks of the ring plate 403 by half a pitch, a pattern of a cooling fin as shown in Fig. 32(b) can be easily formed.

The grooves 30s are formed on the surface of a band-like plate according to the method explained in the first embodiment. The grooves 30s are formed such that when the outer casing 401 is formed, the grooves 30s are directed to the axial direction (Z direction in the figure) of the trunk body 101 in the cask. When the grooves 30s are formed directed to the circumferential direction of the trunk body 101 of the cask 400 (see Figs. 42 and 40), the grooves 30s are formed such that when the outer casing 401 is formed, the grooves 30s are directed to the circumferential direction of the trunk body 101 of the cask.

After the band-like plate with the grooves 30s formed thereon is bent by the bending machine, with the grooves 30s being outside, the opposite ends are joined by welding or other means, to form a ring plate 403. Ring heat transfer fins 404 are welded on the inner periphery of the ring plate 403, to form a ring unit 402 (weld 405). This unit 402 is fixed by welding the heat transfer fin 404 on a buildup portion 406 provided in the circumferential direction of the trunk body 101. The unit 402 is mounted on the trunk body 101 in a plurality of numbers. The rims of the ring plates 403 in the adjacent units 402 are welded together (weld 407), and a ring neutron absorber 408 solidified by using a mold beforehand is arranged in the space formed by welding the rims of the ring plates 403 (see Figs. 41 and 40).

When this cask 400 is assembled, the first unit 402a is inserted into the trunk body 101, and the heat transfer fin 404 is welded on the buildup portion 406 of the trunk body 101. The ring neutron absorber 408a made of resin or the like is inserted into the trunk body 101, so that about half of the neutron absorber 408a is stored in the already welded and fixed unit 402a. Subsequently, the next unit 402b is inserted into the trunk body 101, so that the remaining half of the neutron absorber 408a is stored therein, and the ring plate 403 of the first unit 402a and the ring plate 403 of the next unit 402b are welded together (weld 407). At this time, welding of the heat transfer fin 404 of the unit 402b is performed only from the open one side (weld 409). By repeating this for a predetermined number and fitting the last unit 402, the assembly of the outer casing 401 is completed. If it is hard to insert the ring neutron absorber 408, the ring neutron absorber 408 is divided in the circumferential direction, and circular-arc neutron absorbers 408x may be stored in the space. A lid 410 is provided respectively on the opposite sides of the outer casing 401.

When the neutron absorber (for example, resin) in a fluid state is injected into a space S that cannot be filled with the neutron absorber 408a, and solidified, neutrons can be shielded more effectively (Fig. 41(b)). In this case, as shown in Fig. 41 (b), a liquid-form neutron absorber is injected from a neutron absorber injecting hole 404h provided in the heat transfer fin 404. Fig. 41 (c) depicts an example when the neutron absorber is injected after the outer casing 401 is fitted to the trunk body 101 without using the ring neutron absorber 408. In this method, after the outer casing 401 is fitted to the trunk body 101, the neutron absorber is injected from the hole 404h provided in the heat transfer fin 404. The honeycomb material 207 is fitted to the inner face of the ring plate 403 to form a void layer, which absorbs thermal expansion of the neutron absorber.

With such a configuration, since the surface area of the outer casing 401 can be increased by the grooves 30s and the radiating fins 30f formed on the outside of the ring plates 403, the heat dissipation performance can be improved. Since it is not necessary to perform welding in the narrow and long space, and welding can be performed from outside, the welding operation can be facilitated, thereby eliminating a special-purpose welding machine. Further, since the assembly of the cask 400 is possible with the commonly used welding equipment, the cask can be assembled easily in most companies. As a result, the cask 400 having excellent heat dissipation can be easily produced. Since the welds 405 and 407 are apart from each other, local concentration of the heat-affected zone can be prevented.

Fig. 44 is an assembly diagram of a modification example , which is also not an embodiment of the present invention Fig. 45 is a partial cross-section of the cask shown in Fig. 44. This cask 450 has a feature in that a unit 452 in an outer casing 451 is divided into two having a circular-arc shap. A circular-arc plate 453 is formed by bending a plate member with the grooves 30s formed on the surface thereof in a semicircle. Heat transfer fins 454 are welded to the inner edge of the circular-arc plate 453 with a slight margin left (weld 455), to form one unit 452. The units 452 are welded to the trunk body 101 at a predetermined interval, and a circular-arc plate 456 is fitted between the circular-arc plates 453 of the unit 452 (weld 457). The units 452 and the circular-arc plates 456 are welded in the circumferential direction of the trunk body 101, to form a ring integral structure. A neutron absorber 458 formed in a circular-arc shape is arranged in the space formed by the units 452 and in the space formed by the units 452 and the circular-arc plates 456. As shown in Fig. 44(a), if the circular-arc plates 453 and 456 are shifted by half a pitch of the radiating fin 30f, the radiating fins 30f can be easily staggered.

When the cask 450 is assembled, the neutron absorber 458 is first mounted on the trunk body 101, and the unit 452a is placed thereon so as to house the neutron absorber 458 therein. The heat transfer fins 454 of the unit 452a are mounted on buildup portions 459 provided on the periphery of the trunk body 101, and welded from the open opposite sides (weld 460). Subsequently, the neutron absorber 458 of the remaining half is mounted on the trunk body 101, and the unit 452 is placed thereon so as to similarly house the neutron absorber 458 therein, and the ends of the circular-arc plates in the respective units are welded together. The unit 452b is welded together with the neutron absorber 458b in the axial direction of the trunk body 101 with a predetermined interval, and this procedure is repeated.

When the unit 452b is fitted, a neutron absorber 458c is arranged beforehand between the units 452a and 452b. The neutron absorber 458c is divided into three in the thickness direction, as shown in Fig. 44(b), so that it can be easily arranged in shaded portions of the units 452a and 452b. After the divided neutron absorbers 458c₁ to 458c₃ are fitted, the neutron absorber 458c is engaged with the edges of the circular-arc plates in the units 452a and 452b on the opposite sides so as not to come off.

The circular-arc plates 456 are fitted between all units 452, and the circular-arc plates 453 and 456 are welded together from outside. As a result, the assembly of the outer casing 451 is completed. The neutron absorber may be filled from a hole provided in the circular-arc plate 453 (not shown), without using the molded neutron absorber. Also with this configuration, the surface area of the outer casing 451 can be increased by the grooves 30s and the radiating fins 30f formed on the radiating surface 453p side of the circular-arc plate 453, thereby enabling improvement in the heat dissipation performance. Welding in a narrow and long space is not necessary, and welding can be performed from outside, thereby facilitating the welding operation, without requiring a special-purpose welding machine. With such a method, the cask 450 having excellent heat dissipation can be easily produced. Further, since the welds 455 and 457 are apart from each other, local concentration of thermal stress can be avoided. The neutron absorber 458 (458c) may be divided in the circumferential direction, and after the units 452a and 452b are welded, the divided neutron absorbers 458c may be sequentially inserted between the units 452a and 452b, and the circular-arc plate 456 may be covered and welded (not shown).

### (Seventh Embodiment)

Fig. 46 is a partial cross-section of a part of an outer casing of a cask, which is also not according to embodiment of the present invention. This cask has a feature in that radiating fins 550f for transferring the decay heat from the trunk body 101 to an outer casing 19 and the outer casing 19 are integrally formed, and the grooves 30s directed to the axial direction of the trunk body 101 are formed on a radiating surface 550p.

The outer casing 19 is formed by combining units 550 obtained by bending a plate member in an L shape in cross section. The grooves 30s directed to the axial direction of the trunk body 101 are formed on the radiating surface 550p side of the unit 550, and protrusions divided by the grooves 30s become the radiating fins 30f. The grooves 30s may be provided toward the circumferential direction of the trunk body 101, or may be provided toward both the axial direction and the circumferential direction of the trunk body 101.

One end 550t₁ of the unit 550 is welded to the trunk body 101. The other end 550t₂ of the unit 550 is welded to the side of the adjacently arranged unit 550 at a weld 560. A neutron absorber 570 is provided in a space formed between the outer casing 19 and the trunk body 101. In this manner, by joining a plurality of units 550 over the whole circumference of the trunk body 101, the outer casing 19 with the grooves 30s directed to the axial direction of the trunk body 101 formed on the outside thereof is formed.

Since the outer casing 19 of the cask has the grooves 30s formed on the outside, the surface area of the outer casing 19 can be increased to improve the heat dissipation performance. Further, since the radiating fins 550f and the outer casing 19 are integrally formed, the number of welding points can be decreased, as compared with the outer casing 10 of the cask according to the first to the fifth embodiments, thereby enabling easy production of the cask having excellent heat dissipation. As shown in Fig. 46(b), as in a unit 550' constituting the outer casing 19, the cross section of a portion being the outside of the outer casing 19 may be formed in an inverted-V shape. With such a configuration, the surface area of the outer casing 19 can be further increased, thereby further improving the heat dissipation performance. Though not shown, this portion may be formed in a V shape or in a circular-arc shape in cross section. Even in these cases, the surface area of the outer casing 19 can be further increased, thereby further improving the heat dissipation performance. Fig. 46(c) depicts a unit made of a clad material in order to have heat resistance and thermal conductivity. Fig. 46(d) depicts an example in which the trunk body 101 side is not welded. In this configuration, the units are assembled so that a pressing force remains on a contact surface A at a normal temperature (Fig. 46(e)), and at the time of fire (Fig. 46(b)), the cooling fins come off from the trunk body 101. In this case, even if a fire breaks out to heat the outer casing 19 side, since the cooling fins come off from the trunk body 101, the heat flowing into the cask through the trunk body 101 can be suppressed to a minimum, thereby ensuring the safety of the cask at the time of fire.

### (First Modification Example)

Fig. 47 is a partial cross-section of a part of an outer casing of a cask according to a first modification, which is also not an embodiment of the present invention This outer casing 20 has a feature in that cylindrical units 551 with grooves 30s directed to at least one of the axial and circumferential directions of the trunk body 101 formed on a radiating surface 551p side are arranged over the whole circumference of the trunk body 101.

The cylindrical unit 551 constituting the outer casing 20 is a cylindrical member obtained by extrusion-molding an extrudable metal (for example, aluminum), and a portion being outside of the outer casing 20, that is, the cross section on the radiating surface 551p side is formed in an inverted-V shape. The cross-sectional shape of this portion is not limited to an inverted-V shape, and may be a V shape, a circular-arc shape, or a straight shape. Grooves 30s directed to at least one of the axial and circumferential directions of the trunk body 101 are formed on the outside of the outer casing 20. Though not shown, as explained in the first embodiment, the cross section of the groove 30s may be circular-arc or trapezoidal. The surface of the cylindrical unit 551 facing the radiating surface 551p is fitted to the outside of the trunk body 101 of the cask.

The cylindrical unit 551 can be produced by extrusion molding, in which the grooves 30s can be formed simultaneously with extrusion molding. Further, a plate material having grooves 30s formed thereon beforehand may be bent, and the opposite ends thereof may be welded to produce the cylindrical unit 551. Alternatively, the grooves 30s may be formed at a separate step from extrusion molding. The method explained in the first embodiment is applicable to form the grooves 30s.

In order to fit the cylindrical unit 551 to the trunk body 101, fastening means such as screwing the cylindrical unit 551 to the trunk body 101 from inside of the cylindrical unit 551 may be used, other than welding and other joint means. The adjacent cylindrical units 551 are combined so that the respective sides come in contact with each other, and welded at the weld 560 to constitute the outer casing 20.

The neutron absorber 570 is provided inside of the cylindrical unit 551, so as to absorb the neutrons released from the spent fuel stored in the trunk body 101. In order to facilitate assembly of the outer casing 20, the neutron absorber 570 is preferably arranged in the cylindrical unit 551, after the cylindrical unit 551 is fitted to the trunk body 101. As shown in Fig. 47(a), the side of the cylindrical unit 551 coming in contact with the adjacent cylindrical unit 551 is inclined by an angle of inclination β with respect to the radial direction of the trunk body. As a result, even when neutrons are released radially, the neutrons are always absorbed by the neutron absorber 570, thereby improving safety.

As an outer casing 20' shown in Fig. 47(b), a step portion 552a directed to the longitudinal direction of the unit 551 may be provided on the side of a cylindrical unit 552 coming in contact with the adjacent cylindrical unit 552, and this portion may be formed stepwise. By this step portion 552a, even when there is a gap between the adjacent cylindrical units 552, neutrons can be captured more reliably.

In the cask having this outer casing 20, the cross section of the radiating surface 551p of the outer casing 20 is formed in an inverted-V shape, and the grooves 30s directed to the axial direction of the trunk body 101 are formed on the radiating surface 551p. Therefore, since the surface area of the radiating surface 551p can be increased, much decay heat can be released to the air. Further, since the outer casing 20 is formed by combining the cylindrical units 551, the number of welding steps is reduced as compared with the outer casing 10 and the like according to the first embodiment and the like, and the cask having excellent heat dissipation can be produced relatively easily.

### (Second Modification Example)

Fig. 48 is a partial cross-section of a part of an outer casing of a cask according to a second modification example, which is also not an embodiment of the present invention. An outer casing 21 has a substantially similar configuration to the outer casing 20 according to the first modification example, but is different in that protrusions 553t provided on the sides of cylindrical units 553 are made to abut against each other, a plurality of cylindrical units 553 are combined to form the outer casing 21, and the neutron absorber 570 is arranged also in a space 553a formed between the adjacent cylindrical units 553. The configuration of other parts is the same as in the first modification example, and the explanation thereof is omitted.

As shown in Fig. 48(b), the cylindrical unit 553 is a cylindrical member, and two protrusions 553t are formed on the sides thereof. The protrusions 553t of the adjacent cylindrical units 553 are made to abut against each other and combined, to form the outer casing 21 around the trunk body 101. The grooves 30s directed to the axial direction of the trunk body 101 are formed on the radiating surface 553p side of the cylindrical unit 553, so as to increase the surface area of the radiating surface 553p. Though not shown, as explained in the first embodiment, the cross section of the groove 30s may be circular-arc or trapezoidal. As shown in Fig. 48(a), the honeycomb material 207 is arranged inside of the cylindrical unit 553 to form a void layer.

The cylindrical unit 553 may be fitted to the trunk body 101 by fastening means such as screwing from inside. Only the ends 553t on the outside of the cylindrical units 553 may be welded together at a weld 560, to form the outer casing 21. As shown in Fig. 48(c), the end 553t may not be provided on the trunk body 101 side of the cylindrical unit 553, so as not to come in contact with the adjacent cylindrical unit 553.

The neutron absorber 570 is provided inside of the cylindrical units 553, and in a space 553a formed between the adjacent cylindrical units 553, to absorb neutrons released from the spent fuel assembly. For the neutron absorber 570, resin or the like having a neutron absorbing capacity is used. This resin is one having fluidity after kneading, but curing with the lapse of predetermined time. Since the space 553a has a certain opening space, the neutron absorber can be poured into this portion relatively easily. Since the cylindrical unit 553 is only welded on the external surface of the outer casing 21, when the cask is disassembled, the cylindrical unit 553 can be disassembled only by removing this weld.

In the cask having this outer casing 21, since the grooves 30s directed to the axial direction of the trunk body 101 are formed on the radiating surface 553p of the outer casing 21, the surface area of the radiating surface 553p can be increased, and much decay heat can be released to the air. Further, since the outer casing 21 is formed by combining the cylindrical units 553, the number of welding steps is reduced as compared with the outer casing 10 and the like according to the first embodiment and the like, and the cask having excellent heat dissipation can be produced relatively easily. Since the neutron absorber 570 is also filled between the cylindrical units 553 constituting the outer casing 21, the gap generated between the cylindrical units 553 can be filled. As a result, the neutron absorber 570 filled in the space 553a prevents leakage of neutrons, thereby ensuring sufficient safety.

### (Eighth - Cask)

Figs. 49 and 50 are explanatory diagrams of a cask, which is not an embodiment of the present invention This cask 480 has a feature in that the internal circumference of an outer casing 482 on the outer circumference of which the grooves 30s directed to the axial direction of the trunk body 101 are formed is joined with the ends of a plurality of heat transfer fins 485 radially provided on the trunk body 101.

The outer casing 482 of the cask is formed by joining the outer casing components 482a and 482b of a circular-arc shape in cross section at their respective ends. The grooves 30s directed to the axial direction of the trunk body 101 of the cask are formed on the radiating surface 482p of the outer casing components 482a and 482b constituting the outer casing 480. The production method of the cask 480 will be explained below.

After the grooves 30s are formed on one side of the outer casing components 482a and 482b, the outer casing components 482a and 482b are bent by a bending machine and formed in a circular-arc shape in cross section, so that the surface with the grooves 30s formed thereon becomes the outside. In other words, by bending a plate member having grooves 30s formed on one side, in a shape matched with a partial external shape of the trunk body 101, the outer casing components 482a and 482b can be produced. The method explained in the first embodiment can be used for the formation of the grooves 30s. The outer casing components 482a and 482b bent in a circular-arc shape in cross section are joined at the respective ends thereof by welding or other joint means, to complete the cylindrical outer casing 482 having grooves 30s formed on the outside thereof.

In this cask, the outer casing 482 is divided into two, and the outer casing 482 is formed of the two outer casing components 482a and 482b, but the division of the outer casing 482 is not limited to two. As the number of division of the outer casing 482 increases, the number of the outer casing components increases, and as a result, the time and labor for joining the respective outer casing components also increase. However, since the width of the individual outer casing component can be made small, the formation of the grooves 30s becomes easy. Therefore, it is preferable to divide the outer casing 482 into the number that does not make the welding operation complicated, to form the outer casing 482.

After the assembly of the outer casing 482, the outer casing 482 is fitted in the trunk body 101 of the cask, on the outer circumference of which the heat transfer fins 485 are welded. After the outer casing 482 is fitted therein, the inner surface of the outer casing 482 is joined with the ends of the heat transfer fins 485. As shown in Fig. 50, before the outer casing components 482a and 482b are joined together, the outer casing components 482a and 482b may be first joined with the ends of the heat transfer fins 485, and then the outer casing components 482a and 482b may be welded. After the outer casing components 482a and 482b are respectively fitted to the trunk body 101 via the heat transfer fins 485, the outer casing components 482a and 482b may be joined together. In the cask 480 according to the eighth embodiment, at least one heat transfer fin 485 is fitted to the outer casing components 482a and 482b constituting the outer casing 482.

When the heat transfer fins 485 are welded on the inner surface of the outer casing 482, since joining is performed in the space formed by the adjacent heat transfer fins 485 and the inner surface of the outer casing 482, in the longitudinal direction of the heat transfer fin 485, a special-purpose joining robot is used. After all heat transfer fins 485 are joined to the inner surface of the outer casing 482, a neutron absorber is filled in the space formed by the adjacent heat transfer fins 485 and the inner surface of the outer casing 482, to complete the cask 480.

In this cask 480, since the grooves 30s directed to the axial direction of the trunk body 101 are formed on the outside of the outer casing 482, the surface area of the radiating surface 482p can be increased. As a result, the decay heat from the spent fuel assembly stored in the cask 480 can be released to the air more efficiently. Further, since the plate member is bent in a circular-arc shape to form the outer casing 482, this method is preferable when producing a cask having a circular trunk body in cross section.

### (Modification Example)

Fig. 51 is a schematic of a cask according to a modification example, which is alos not an embodiment of the present invention. This cask 480₂ has substantival the same configuration as that of the cask 480 according to the eighth embodiment, but is different in that the cross-sectional shape perpendicular to the axial direction of an outer casing 482₂ and the trunk body 101 constituting the cask 480₂ is substantially octagonal. The configuration of other parts is the same as the cask 480.

As shown in Figs. 51(a) and (b), the outer casing 482₂ of the cask is formed by joining outer casing components 482c₁ and 482c₂ obtained by dividing in two the outer casing 482₂ having substantially the octagonal cross section at the respective ends 482t₂. The grooves 30s directed to the axial direction of the trunk body 101 of the cask is formed on the radiating surfaces 482p₂ of the outer casing components 482c₁ and 482c₂ constituting the outer casing 482₂. The production method of the cask 480₂ will be explained below.

After grooves 30s are formed on one side, the outer casing components 482c₁ and 482c₂ are formed in the above shape by the bending machine so that the surface with the grooves 30s formed thereon becomes outside. In other words, by bending a plate member having grooves 30s formed on one side, in a shape matched with a partial external shape of the trunk body 101, the outer casing components 482c₁ and 482c₂ can be produced. The method explained in the first embodiment can be applied to the formation of the grooves 30s. The outer casing components 482c₁ and 482c₂ bent in the above shape are joined at the respective ends 482t₂ thereof by welding or other joint means, to complete the cylindrical outer casing 482₂ having substantially an octagonal cross section, having grooves 30s formed on the outside thereof.

The division of the outer casing 482₂ is not limited to two, and as shown in Fig. 51(c), four outer casing components 482d₁ to 482d₂ may be joined at the respective ends 482t₃ thereof to form the outer casing 482₂. That is, the outer casing may be divided into four or more. As the number of division of the outer casing increases, the number of the outer casing components increases, and as a result, the time and labor for joining the respective outer casing components are required. However, since the width of the individual outer casing component can be made small, the formation of the grooves 30s becomes easy. Therefore, it is preferable to divide the outer casing into the number that does not make the welding operation complicated, to form the outer casing.

After the assembly of the outer casing 482₂, the outer casing 482₂ is fitted in the trunk body 101 of the cask, on the outer circumference of which the heat transfer fins 485 are welded. After the outer casing 482₂ is fitted therein, the inner surface of the outer casing 482 is welded with the ends of the heat transfer fins 485. Before the outer casing components 482c₁ and 482c₂ and the like are joined, the outer casing components 482c₁ and 482c₂ and the like may be joined with the ends of the heat transfer fins 485, and then the outer casing components 482c₁ and 482c₂ may be joined at the respective ends thereof. The outer casing components 482c₁ and 482c₂ and the like may be sequentially fitted to the outside of the trunk body 101 via the heat transfer fins 485. In this manner, in the cask 480₂ , at least one heat transfer fin 485 is fitted to the respective outer casing components 482c₁ and 482c₂ and the like constituting the outer casing 482₂ (Figs. 51(b) and (c)).

When the heat transfer fins 485 and the inner surface of the outer casing 482₂ are joined together, or when the heat transfer fins 485 and the outside of the trunk body 101 are joined together, joining is performed in the longitudinal direction of the heat transfer fin 485 in the space formed by the adjacent heat transfer fins 485 and the inner surface of the outer casing 482₂ or in the space formed by the heat transfer fins 485 and the outside of the trunk body 101. Therefore, it is preferable to use a special-purpose joining robot. After all heat transfer fins 485 are welded to the inner surface of the outer casing 482₂, a neutron absorber is filled in the space formed by the adjacent heat transfer fins 485 and the inner surface of the outer casing 482, to complete the production of the cask 480₂.

In this cask 480₂, since grooves 30s directed to the axial direction of the trunk body 101 are formed on the outside of the outer casing 482₂, the surface area of the radiating surface 482p₂ can be increased. As a result, the decay heat from the spent fuel assembly stored in the cask 480₂ can be released to the air more efficiently. Further, since the outer casing 482₂ is formed by joining the outer casing components 482c₁ and 482c₂ and the like, produced by bending the plate member, this method is preferable when producing a cask having substantially an octagonal trunk body in cross section perpendicular to the axial direction.

The present invention is defined in the claims. The following statements are included because they are useful for a full understanding of the present invention.

In a cask, a plurality of band-like members having a plurality of grooves directed to at least one of the axial direction and the circumferential direction of the trunk body formed thereon are combined to form the outer casing. Therefore, since the surface area of the outer casing can be increased than one without grooves, even when a spent fuel assembly having high burnup is stored, sufficient safety can be ensured. Since the outer casing is formed by combining the band-like members having grooves formed thereon, the outer casing can be produced easily without performing casting or bending.

In a cask, since the band-like members having a plurality of grooves formed thereon are combined to form the outer casing, much heat can be released to the air. As a result, even when a spent fuel assembly having high burnup and short cooling period is stored, sufficient safety can be ensured. When the band-like member and the heat transfer fins are welded together to form a unit, and the unit is welded to the trunk body via the heat transfer fins of the unit, welding in a narrow and long space is not necessary, and welding is performed from outside, and hence the cask having grooves formed on the outer casing can be easily formed.

In a cask, since the band-like members having the grooves formed thereon are combined to form the outer casing, much heat can be released to the air, than one without grooves, and even when a spent fuel assembly having high burnup is stored, sufficient safety can be ensured. When the band-like member and the heat transfer fins are welded together, or when the heat transfer fin in a unit is welded to the trunk body, welding in a narrow and long space is not necessary, and welding is performed from open outside, and hence the cask having grooves formed on the outer casing can be easily produced.

In a cask since the band-like members having the grooves formed thereon are combined to form the outer casing, much heat can be released to the air, than one without grooves and even when a spent fuel assembly having high burnup is stored, sufficient safety can be ensured. When the band-like member and the heat transfer fins are welded together, or when the heat transfer fin in a unit is welded to the trunk body, welding in a narrow and long space is not necessary, and welding is performed from open outside, and hence the cask having grooves formed on the outer casing can be easily produced.

In a cask, since the band-like member having grooves formed on the surface thereof is bent in an inverted-V or V shape, the surface area of the outer casing can be further increased. As a result, since much heat can be released to the air, higher safety can be ensured. Further, the outer casing is formed by combining the band-like members having grooves formed on the surface thereof, thereby enabling easy production, than when using a production method such as casting.

In a cask, a plate member having grooves formed on the surface thereof is bent to form a unit, and the units are combined to form the outer casing. Therefore, the heat transfer fins and the outer casing can be integrally formed, thereby enabling easy production of the outer casing. Further, since grooves are formed on the surface of the plate member, the surface area of the outer casing can be increased to improve the heat dissipation performance.

In a cask, since the cylindrical units having grooves formed on the outer surface thereof are combined to form the outer casing, the surface area on the outside of the outer casing can be increased by the grooves formed on the surface thereof, and hence much decay heat can be released to the air. Since the cylindrical units are combined to form the outer casing, the number of welding steps can be reduced, and the outer casing can be produced relatively easily.

In a cask, since the ring plates having grooves formed on the outside thereof are combined to form the outer casing, the surface area of the outer casing can be increased to improve the heat dissipation. Further, when the ring plate and the heat transfer fins are welded together, or when the heat transfer fin in a unit is welded to the trunk body, welding can be performed from open outside, and hence the outer casing having grooves formed on the outside can be easily produced.

In a cask, since the ring plates having grooves formed on the outside thereof are combined to form the outer casing, the surface area of the outer casing can be increased to improve the heat dissipation. Further, when the ring plate and the heat transfer fins are welded together, or when the heat transfer fin in a unit is welded to the trunk body, welding can be performed from open outside, and hence the outer casing having grooves formed on the outside can be easily produced. Since the heat transfer fins are welded, leaving edges on the opposite sides of the ring plate, local concentration of the heat-affected zone can be prevented.

In a cask, since grooves directed to at least one of the axial direction and the circumferential direction of the trunk body are formed on the outside of the outer casing, the surface area of the outer casing can be increased than one without grooves.

In a cask, at least one crtoss-sectional shape of the grooves and protrusions formed on the surface of the outer casing is circular arc. Therefore, the surface area of the outer casing can be increased to improve the heat dissipation performance, and since the cross section is in a circular-arc shape, radioactive materials hardly accumulate in the groove. As a result, at the time of decontamination, the radioactive material adhered on the surface of the outer casing can be efficiently cleaned.

In a cask, the cross-sectional shape of the grooves formed on the surface of the outer casing is trapezoidal, with the radial outside of the outer casing being open. Therefore, the direction of radiation on the sides of protrusions divided by the grooves can be directed outward of the outer casing.

As a result, the influence of radiation between the sides of the protrusions serving as fins can be reduced, to further increase the thermal energy radiated to the air, thereby further improving the heat dissipation efficiency.

In a cask, the grooves formed on the outer casing are inclined with respect to the axial direction of the trunk body. Therefore, since the flow of the air going up near the surface of the outer casing is disturbed by the grooves having an inclination, heat transfer between the air and the outer casing can be promoted. As a result, the heat dissipation performance can be further improved.

A cask includes the basket for storing the spent fuel assembly of high burnup and short cooling period and the outer casing having high heat dissipation. Therefore, even when the spent fuel assembly of high burnup and short cooling period that emit much decay heat is stored therein, the decay heat is efficiently released to the air, thereby ensuring sufficient safety of the cask.

A cask includes the basket in which the outer surface of the element constituting one cell, the outer surface of the square pipe constituting another cell, and the end of the element constituting another cell are made to abut against each other on a flat surface. Therefore, since the heat transfer area can be increased, the heat can be efficiently transferred from inside of the basket to the outside. The decay heat transferred more efficiently due to the improvement in the heat transfer performance is released to the air efficiently by the outer casing having high heat dissipation. As a result, even when the spent fuel assembly of high burnup and short cooling period having a large heating value is stored, much decay heat can be released to the air efficiently, thereby ensuring sufficient safety of the cask.

A cask includes the basket in which the flat surface provided outside of the corner of the element constituting the basket is made to abut against the flat surface provided at one end of the adjacent element. Therefore, since the heat transfer area between the elements increases, the decay heat of the spent fuel can be released to the outside of the basket more efficiently. The decay heat transferred more efficiently due to the improvement in the heat dissipation efficiency is released to the air efficiently by the outer casing having high heat dissipation. As a result, a large amount of decay heat can be released to the air efficiently, thereby ensuring sufficient safety of the cask.

A cask includes the basket assembled by forming the outside of the corner and the end of the element constituting the basket stepwise, and engaging the corner of the element with the end of the adjacent element forming the cell. Therefore, since the heat transfer area between the elements increases as compared with the basket described above, the heat transfer performance is improved. Much decay heat due to the improvement in the heat transfer performance can be released to the air more efficiently by the outer casing having high heat dissipation, and hence, even when the spent fuel assembly of high burnup and short cooling period having a large heating value is stored, sufficient safety of the cask can be ensured.

A cask includes the basket having cells in which the element substantially in an L shape in cross section, with grooves directed to the longitudinal direction formed on the outside surface, is arranged within the square pipe, and the spent fuel assembly of high burnup and short cooling period is stored therein. Since the cask has the outer casing having high heat dissipation, the spent fuel assembly of high burnup and short cooling period having a large heating value can be stored safely.

A cask includes the basket formed by staggering a plurality of square pipes, in which the thickness on the side of the square pipe is made thinner than the basket formed by putting the sides of the square pipes together. As a result, the heat transfer performance is improved, and much heat can be transferred to the outside of the basket. Even with such a basket, since the cask includes the outer casing having high heat dissipation, much heat transferred from the basket can be released to the air efficiently, thereby ensuring sufficient safety of the cask.

In a cask, the outside of the corner of the square pipe constituting the basket to be housed in the cask is formed stepwise with at least two stages. As a result, since at least half the thickness on the side of the square pipe can be ensured at the corner thereof, the heat transfer performance is improved. Much heat due to the improvement in the heat transfer performance can be released to the air efficiently by the outer casing having high heat dissipation, thereby ensuring sufficient safety of the cask.

In a cask , since the cavity in the trunk body is formed in a shape matched with the external shape of the basket, when the basket is inserted into the cavity, the outside plate members come in contact with the inner face of the cavity. Therefore, the decay heat is efficiently transferred from the basket to the trunk body, via the helium gas filled therein or the direct contact portion. As a result, the decay heat from the spent fuel assembly can be efficiently transferred to the trunk body, and the decay heat can be efficiently released from the trunk body to the air due to the grooves formed on the outer casing, thereby ensuring sufficient safety of the cask.

In a cask, the decay heat is efficiently transferred to the trunk body via the heat exchanger plate provided on the outer circumference of the basket. Since a part thereof face-contacts with the trunk body in the portion of angular cross section of the basket, the basket can be held reliably, and the thermal conduction efficiency can be improved. As a result, the decay heat from the spent fuel assembly can be efficiently transferred to the trunk body, and the decay heat can be efficiently released from the trunk body to the air due to the grooves formed on the outer casing, thereby ensuring sufficient safety of the cask.

A production method of the cask facilitates welding operation, by welding the band-like member A having the grooves formed on one side thereof to the heat transfer fins to form a unit. At the time of welding the unit to the trunk body, welding is performed from outside of the unit, and when the band-like member B is fitted between the band-like members A and welded, welding is performed from outside. As a result, since welding can be performed from outside, the assembly operation of the cask having grooves formed on the outer casing can be facilitated. Further, since grooves can be formed on the surface of the outer casing without casting or bending, the cask having the outer casing with grooves formed on the surface thereof can be easily produced.

A production method of the cask facilitates welding operation, by welding the band-like member A having grooves formed on one side thereof to the heat transfer fins to form a unit. Subsequently, when the heat transfer fin of the unit is welded to the trunk body, since the cross section of the unit is in a T shape, the opposite sides are open, and hence welding operation from outside becomes possible. Further, when the band-like member B is spanned between the band-like members A and A and welded, welding can be performed from outside. As a result, since welding can be performed from outside, the assembly operation of the cask having grooves formed on the outer casing can be facilitated. Further, since grooves can be formed on the surface of the outer casing without casting or bending, the cask having the outer casing with grooves formed on the surface thereof can be easily produced.

A production method of the cask facilitates welding operation, by welding the band-like member A having grooves formed on one side thereof to the heat transfer fins. Subsequently, when the band-like member A is welded to the trunk body via the heat transfer fin, since the cross section is in a T shape, the opposite sides are open, and hence welding operation from outside becomes possible. Further, when the band-like members A and A are welded together, welding is performed from outside. As a result, since welding can be performed from outside, the assembly operation of the cask having grooves formed on the outer casing can be facilitated. Further, since grooves can be formed on the surface of the outer casing without casting or bending, the cask having the outer casing with grooves formed on the surface thereof can be easily produced.

In a production method of the cask , the ring plate A having grooves on the outside and the heat transfer fin are welded together to form a unit, thereby facilitating welding operation from outside in the open state. When the unit is welded to the trunk body via the heat transfer fin, since the cross section of the unit is in a T shape, the opposite sides are open, and hence welding operation from outside becomes possible. Further, when the ring plates A are welded together, welding is performed from outside. As a result, since welding can be performed from outside, the assembly operation of the cask having grooves formed on the outer casing can be facilitated. Further, since grooves can be formed on the surface of the outer casing without casting or bending, the cask having the outer casing with grooves formed on the surface thereof can be easily produced.

In a production method the cask , the ring plate A having grooves on the outside and the heat transfer fin are welded together to form a unit, and the unit is welded to the trunk body via the heat transfer fin of the unit, thereby enabling welding operation from outside in the open state. Subsequently, the neutron absorber molded in a ring shape is housed in the unit, the next unit is welded from outside to house the molded neutron absorber therein, and the edges of the ring plates A are welded from outside. As a result, since welding can be performed from outside, the assembly operation of the cask having grooves formed on the outer casing can be facilitated. Further, since grooves can be formed on the surface of the outer casing without casting or bending, the cask having the outer casing with grooves formed on the surface thereof can be easily produced.

In a production method of the cask , since a plate is bent in a shape matched with a partial external shape of the trunk body, the number of plate members constituting the outer casing can be reduced, thereby simplifying the production process of the cask.

In a production method of the cask , since a plate is bent in a shape matched with a partial external shape of the trunk body, the number of plate members constituting the outer casing can be reduced, thereby simplifying the production process of the cask.

In a production method of the cask , a plate member having grooves formed on the surface thereof beforehand is bent, the plate members are welded together at the ends thereof, to produce a cylindrical outer casing, the outer casing is fitted in the trunk body provided with the heat transfer fins radially, and then the ends of the heat transfer fins and the inner surface of the outer casing are welded. Thus, since the plate is bent in the circular-arc shape, this production method is suitable when the cask having a circular trunk body in cross section is produced.

In a production method of the cask , a plurality of cutting tools are arranged in the array direction of grooves to be formed on the band-like member or the like, at the array pitch of the grooves, so that a plurality of grooves are formed simultaneously on the band-like member or the like. Therefore, the time and labor for forming the grooves on the band-like member or the like can be considerably reduced. Particularly, when a plurality of band-like members are combined to form the outer casing, since the band-like members having many grooves formed thereon can be efficiently produced, the production time can be considerably reduced.

### INDUSTRIAL APPLICABILITY

The cask and the production method of the cask according to the present invention are suitable for containing and storing spent fuel assembly, and particularly suitable for manufacturing casks having excellent heat dissipation performance such that the decay heat of the spent fuel assembly can be released to the air efficiency.

## Claims

1. A cask (100) having a trunk body (101) that houses a basket (301a) therein, in which a plurality of cells (310) for storing a spent fuel assembly are formed, a plurality of heat transfer fins (107) being provided on an outer circumference of the trunk body, an outer casing (10) being fitted to the outer circumference of the heat transfer fins, and a neutron absorber being provided in the space between the heat transfer fins and the outer casing, **characterised in that**
the outer casing has a configuration such that a plurality of axial band-like members A (105a) and axial band-like members B have a plurality of grooves (30s) and radiating fins (30f), the fins being a protrusion between adjacent grooves, directed to at least one of the axial and circumferential directions of the trunk body formed thereon, the band-like members A and the band-like members B are welded together at the circumferential edges thereof, the heat transfer fin is respectively welded to one band-like member A at opposite circumferential sides so that opposite edges are left to protrude circumferentially outward on a second surface of the band-like member opposite to a first surface on which the grooves are formed, to form a unit (105c) of a U-shape in cross-section in a radial direction of the cask, the units are welded to the trunk body via the heat transfer fins at a predetermined interval on the outside of the unit, and band-like members B respectively span between the band-like members A of adjacent units and the band-like members A and the band-like members B are welded together at the edges thereof on the outside of the units.

2. The cask according to claim 1, wherein a step portion (202) is formed at the opposite circumferential edges of the bank-like members A and a step portion (203) of respective band-like members B is fitted to and welded to step portions of adjacent band-like members A that the band-like member B spans between.

3. The cask according to claim 1, wherein a weld (204') between the circumferential edges of adjacent band-like members A and respective band-like members B spanning them is a butt weld.

4. The cask according to claim 1, wherein respective band-like members B are piled or overlap with the edges of adjacent band-like members A that the band-like member B spans between.

5. The cask according to any one of the preceding claims, comprising an aluminium honeycomb material (207) for forming a void layer fitted to the second surface of each of the band like members A and the band-like members B.

6. The cask according to any one of the preceding claims, wherein the cross-sectional shape of the groove perpendicular to the formation direction of the grooves is rectangular.

7. The cask according to any one of claims 1 to 5, wherein at least one of the cross-sectional shape of the groove perpendicular to the formation direction of the grooves, and the cross-sectional shape of radiating fins perpendicular to the formation direction of the protrusions is circular arc.

8. The cask according to any one of claims 1 to 5, wherein the cross-sectional shape perpendicular to the formation direction of the grooves is trapezoidal with the radial outside of the outer casing being enlarged.

9. The cask according to any one of the preceding claims, wherein the band-like member is bent in an inverted-V shape or a V shape in cross section.

10. The cask according to any one of the preceding claims, wherein the grooves directed to the axial direction of the trunk body are inclined with respect to the axial direction of the trunk body.

11. The cask according to any one of the preceding claims, the basket having:
square pipes (320); and
elements (330), each having an L-shape in cross section perpendicular to the axial direction, having an inside surface of the L-shape, an inside of a corner (330ci) of the L-shape, an outside surface of the L-shape, an outside of a corner (330co) of the L-shape and ends of the L-shape, the L-shape element being provided with protrusions (330t) directed to the axial direction on the inside surface thereof, wherein
an outside surface of one of the square pipes and the protrusions provided on the inside surface of one of the elements are made to abut against each other to form one of the cells for storing a spent fuel assembly, wherein the cells are combined so that another outside surface of the square pipe and one of the ends of the element constituting one of the cells are made to abut against the outside surface of the L-shape element constituting another one of the cells.

12. The cask according to any one of claims 1 to 10, the basket having:
square pipes (320) ; and
elements (330), each having an L-shape in cross section perpendicular to the axial direction, having an inside surface of the L-shape, an inside of a corner (330ci) of the L-shape, an outside surface of the L-shape, an outside of a corner (330co) of the L-shape and ends of the L-shape, the L-shape element being provided with protrusions (330t) directed to the axial direction on the inside surface thereof, with the outside surface of the L-shape element formed in a flat surface, wherein
an outside surface of one of the square pipes and the protrusions provided on the inside surface of one of the elements are made to abut against each other to form one of the cells for storing a spent fuel assembly, wherein the cells are combined so that another outside surface of the square pipe and one of the ends of the element constituting one cell are made to abut against the flat outside surface of the element constituting another one of the cells.

13. The cask according to claim 11 or 12, in which the outside of the corner (331co) of the element is formed in a flat surface over the whole region of the element in the axial direction, and one of the ends of the element is formed in a flat surface parallel to the flat surface of the outside of the corner, so that when the cells are combined, the outside of the corner of one element is made to abut against one of the ends of another element.

14. The cask according to claim 11 or 12, in which the outside of the corner (330c) of the element is formed such that a cross section perpendicular to the axial direction of the element becomes stepwise, to form a step portion extending in the axial direction of the element, one of the ends of the element is also formed stepwise so that when the cells are combined, the outside of the corner of one element is made to engage with one of the ends of another element.

15. The cask according to any one of claims 1 to 10, the basket having:
square pipes (320); and
elements (330), each having an L-shape in cross section perpendicular to the axial direction, having an inside surface of the L-shape, an inside of a corner (330ci) of the L-shape, an outside surface of the L-shape, an outside of a corner (300co) of the L-shape and ends of the L-shape, the L-shape element being provided with protrusions (330t) extending in the axial direction on the outside surface thereof, wherein
one of the elements is arranged inside of one of the square pipes, and an inside surface of the square pipe and the protrusions provided on the element are made to abut against each other to form one of the cells for storing a spent fuel assembly, and the plurality of the cells are combined by making the outside surface of one of the square pipes on the side where the element exists abut against the outside surface of another of the square pipes on the side where only the wall of the square pipe exists.

16. The cask according to any one of claims 1 to 10, wherein the basket is formed by combining a plurality of square pipes (320) having four sides and four corners in which an outside of a corner (330c) is formed stepwise, wherein the sides include an outer wall, an inner wall and a space (370) separating the outer wall and the inner wall, wherein the outsides of the corners of the square pipes are brought face-to-face to stagger the square pipes and to provide the plurality of cells, and a spent fuel assembly is stored in the space in the square pipe and in the space enclosed by the sides of the square pipe.

17. The cask according to claim 16, wherein the outside of the corner of the square pipe is formed stepwise in at least two stages.

18. The cask according to any one of the preceding claims, wherein
the basket has an angular cross-sectional shape formed by providing notches (312) on opposite edges of rectangular plate members (309) having a neutron absorbing property at a predetermined interval, and the plate members are made to be orthogonal to each other and alternately piled by inserting the notches to each other,
the inner face of the cavity (102) formed in the trunk body is matched with the external shape of the basket, so that the outer circumference of the basket is inserted in the trunk body substantially in an adhered state, and the angular cross-sectional portion of the outside plate member constituting the basket comes in contact with the inner face of the cavity.

19. The cask according to any one of claims 1 to 17, wherein
the basket has an angular cross-sectional shape formed by providing notches (312) on opposite edges of rectangular plate members (309) having a neutron absorbing property at a predetermined interval, and the plate members are made to be orthogonal to each other and alternately piled by inserting the notches to each other, the outer circumference of the basket being provided with a heat exchanger plate,
the inner face of the cavity (102) formed in the trunk body is matched with the external shape of the basket, and the inner shape of the cavity is formed so as to substantially adhere to the heat exchanger plate.

20. A method of manufacturing a cask (100) in which a plurality of heat transfer fins (107) are provided on the outer circumference of a trunk body (101) that stores a spent fuel assembly, and an outer casing (10) is fitted to the outer circumference of the heat transfer fins, the method **characterised by** comprising:
forming grooves (30s) extending in at least one of the axial and circumferential directions of the trunk body of the cask, on one side of an axial band-like member A (105a) and an axial band-like member B (105 b);
welding the heat transfer fin respectively to the band-like member A at opposite sides in the circumferential direction of the trunk body so that opposite edges are left to protrude circumferentially outward, on the surface of the band-like member A opposite to the surface on which the grooves are formed to form a unit of a U-shape in cross-section in a radial direction of the cask;
welding a plurality of units axially to the outer circumference of the trunk body via the heat transfer fins at a predetermined interval from outside of the unit; and
fitting respective band-like members B axially between adjacent band-like members A so that the second band-like members B respectively span therebetween, and welding the band-like members A and B together at the edges thereof from outside of the units.

21. The production method of the casks according to claim 20, wherein a plurality of cutting tools (321) are arranged in an array in a direction that the grooves are arranged and at a pitch of the grooves, so as to form the grooves on the band-like member at the same time.

## Patentansprüche

1. Behälter (100), der einen Ladekörper (101) aufweist, der darin einen Korb (301a) aufnimmt, in dem eine Vielzahl von Zellen (310) zum Lagern abgebrannter Brennelemente ausgebildet ist, wobei eine Vielzahl von Wärmeübertragungslamellen (107) am äußeren Umfang des Ladekörpers vorgesehen ist, wobei ein äußeres Gehäuse (10) an den äußeren Umfang der Wärmeübertragungslamellen angepasst ist und ein Neutronenabsorber in dem Raum zwischen den Wärmeübertragungslamellen und dem äußeren Gehäuse vorgesehen ist,
**dadurch gekennzeichnet, dass**
das äußere Gehäuse einen derartigen Aufbau aufweist, dass eine Vielzahl von axialen bandähnlichen Elementen A (105a) und axialen bandähnlichen Elementen B eine Vielzahl von Nuten (30s) und Abstrahllamellen (30f) aufweisen, wobei die Lamellen ein Vorsprung zwischen benachbarten Nuten sind, die in der axialen und/oder der umlaufenden Richtung des Ladekörpers ausgerichtet sind und darauf ausgebildet sind, wobei die bandähnlichen Elemente A und die bandähnlichen Elemente B an ihren Umfangskanten zusammengeschweißt sind, wobei die Wärmeübertragungslamelle jeweils an ein bandähnliches Element A an gegenüberliegende Umfangsseiten geschweißt ist, so dass gegenüberliegende Kanten so belassen sind, dass sie umlaufend nach außen an einer zweiten Oberfläche des bandähnlichen Elements gegenüber einer ersten Oberfläche, an der die Nuten ausgebildet sind, hervorstehen, so dass eine Einheit (105c) mit einem U-förmigen Querschnitt in einer Radialrichtung des Behälters ausgebildet ist, wobei die Einheiten an den Ladekörper mittels der Wärmeübertragungslamellen in vorbestimmten Abständen an der Außenseite der Einheit geschweißt sind, und die bandähnlichen Elemente B sich jeweils zwischen den bandähnlichen Elementen A von benachbarten Einheiten aufspannen und die bandähnlichen Elemente A und die bandähnlichen Elemente B an deren Kanten an der Außenseite der Einheiten zusammengeschweißt sind.

2. Behälter nach Anspruch 1, bei dem ein Stufenabschnitt (202) an den gegenüberliegenden Umfangskanten der bandähnlichen Elemente A ausgebildet ist und ein Stufenabschnitt (203) der jeweiligen bandähnlichen Elemente B an die Stufenabschnitte der benachbarten bandähnlichen Elemente A angepasst und geschweißt wird, zwischen denen sich das bandähnliche Element B aufspannt.

3. Behälter nach Anspruch 1, bei dem eine Schweißnaht (204') zwischen den Umfangskanten der benachbarten bandähnlichen Elemente A und den jeweiligen bandähnlichen Elementen B, die sich zwischen diesen aufspannen, eine Stumpfschweißnaht ist.

4. Behälter nach Anspruch 1, bei dem die jeweiligen bandähnlichen Elemente B mit den Kanten der benachbarten bandähnlichen Elemente A, zwischen denen sich das bandähnliche Element B aufspannt, gestapelt sind oder überlappen.

5. Behälter nach einem der vorhergehenden Ansprüche, umfassend ein Aluminium-Wabenstruktur-Material (207) zum Ausbilden einer Hohlschicht, die an die zweite Oberfläche von jedem der bandähnlichen Elemente A und der bandähnlichen Elemente B angepasst ist.

6. Behälter nach einem der vorhergehenden Ansprüche, bei dem die Querschnittsform der Nut senkrecht zur Ausbildungsrichtung der Nuten rechtwinklig ist.

7. Behälter nach einem der Ansprüche 1 bis 5, bei dem die Querschnittsform der Nut senkrecht zur Ausbildungsrichtung der Nuten und/oder die Querschnittsform der Abstrahllamellen senkrecht zur Ausbildungsrichtung der Vorsprünge ein Kreisbogen ist.

8. Behälter nach einem der Ansprüche 1 bis 5, bei dem die Querschnittsform senkrecht zur Ausbildungsrichtung der Nuten trapezoidal ist, wobei die radiale Außenseite des äußeren Gehäuses vergrößert ist.

9. Behälter nach einem der vorhergehenden Ansprüche, bei dem das bandähnliche Element im Querschnitt in einer invertierten V-Gestalt oder einer V-Gestalt gebogen ist.

10. Behälter nach einem der vorhergehenden Ansprüche, bei dem die Nuten, die in die axiale Richtung des Ladekörpers gerichtet sind, in Bezug auf die axiale Richtung des Ladekörpers geneigt sind.

11. Behälter nach einem der vorhergehenden Ansprüche, wobei der Korb aufweist:
quadratische Rohre (320); und
Elemente (330), von denen jedes im Querschnitt senkrecht zur Axialrichtung eine L-Form aufweist, die eine Innenseitenoberfläche der L-Form, eine Innenseite einer Ecke (330ci) der L-Form, eine Außenseitenoberfläche der L-Form, eine Außenseite einer Ecke (330co) der L-Form und Enden der L-Form aufweisen, wobei das L-Form-Element mit Vorsprüngen (330t) versehen ist, die an dessen Innenseitenoberfläche zur Axialrichtung gerichtet sind, bei dem
eine Außenseitenoberfläche eines der quadratischen Rohre und die Vorsprünge, die an der Innenseitenoberfläche eines der Elemente vorgesehen sind, dazu ausgebildet sind, dass sie so aneinander anstoßen, dass sie eine der Zellen zum Lagern eines leeren Brennelements ausbildet, bei dem die Zellen so kombiniert werden, dass eine andere Außenseitenoberfläche der quadratischen Rohre und eines der Enden des Elements, das eine der Zellen ausbildet, dazu ausgebildet sind, dass sie gegen die Außenseitenoberfläche des L-Form-Elements anstoßen, das eine andere der Zellen ausbildet.

12. Behälter nach einem der Ansprüche 1 bis 10, wobei der Korb aufweist:
quadratische Rohre (320); und
Elemente (330), von denen jedes im Querschnitt senkrecht zur Axialrichtung eine L-Form aufweist, die eine Innenseitenoberfläche der L-Form, eine Innenseite einer Ecke (330ci) der L-Form, eine Außenseitenoberfläche der L-Form, eine Außenseite einer Ecke (330co) der L-Form und Enden der L-Form aufweisen, wobei das L-Form-Element mit Vorsprüngen (330t) versehen ist, die an dessen Innenseitenoberfläche zur Axialrichtung gerichtet sind, wobei die Außenseitenoberfläche des L-Form-Elements in einer flachen Oberfläche ausgebildet ist, bei dem
eine Außenseitenoberfläche eines der quadratischen Rohre und die Vorsprünge, die an der Innenseitenoberfläche eines der Elemente vorgesehen sind, dazu ausgebildet sind, dass sie so aneinander anstoßen, dass sie eine der Zellen zum Lagern eines leeren Brennelements ausbildet, bei dem die Zellen so kombiniert werden, dass eine andere Außenseitenoberfläche der quadratischen Rohre und eines der Enden des Elements, das eine der Zellen ausbildet, dazu ausgebildet sind, dass sie gegen die flache Außenseitenoberfläche des L-Form-Elements anstoßen, das eine andere der Zellen ausbildet.

13. Behälter nach Anspruch 11 oder 12, bei dem die Außenseite der Ecke (331co) des Elements über den gesamten Bereich des Elements in Axialrichtung in einer flachen Oberfläche ausgebildet ist, und eines der Enden des Elements in einer flachen Oberfläche parallel zu flachen Oberfläche der Außenseite der Ecke ausgebildet ist, so dass wenn die Zellen kombiniert sind, die Außenseite der Ecke eines Elements dazu ausgebildet ist, gegen eines der Enden eines anderen Elements anzustoßen.

14. Behälter nach Anspruch 11 oder 12, bei dem bei dem die Außenseite der Ecke (331c) des Elements so ausgebildet ist, dass ein Querschnitt senkrecht zur Axialrichtung des Elements stufenartig wird, so dass ein Stufenabschnitt ausgebildet ist, der sich in Axialrichtung des Elements erstreckt, wobei eines der Enden des Elements ebenfalls stufenartig ausgebildet ist, so dass wenn die Zellen kombiniert werden, die Außenseite der Ecke eines Elements so ausgebildet ist, dass es mit einem der Enden eines anderen Elements eingreift.

15. Behälter nach einem der Ansprüche 1 bis 10, wobei der Korb aufweist:
quadratische Rohre (320); und
Elemente (330), von denen jedes im Querschnitt senkrecht zur Axialrichtung eine L-Form aufweist, die eine Innenseitenoberfläche der L-Form, eine Innenseite einer Ecke (330ci) der L-Form, eine Außenseitenoberfläche der L-Form, eine Außenseite einer Ecke (330co) der L-Form und Enden der L-Form aufweisen, wobei das L-Form-Element mit Vorsprüngen (330t) versehen ist, die sich in Axialrichtung an dessen Außenseite erstrecken, bei dem
eines der Elemente an der Innenseite von einem der quadratischen Rohre angeordnet ist, und eine Innenseitenoberfläche des quadratischen Rohrs und die Vorsprünge, die an dem Element vorgesehen sind, dazu ausgebildet sind, gegeneinander anzustoßen, so dass eine Zelle zum Lagern eines leeren Brennelements ausgebildet ist, und wobei die Vielzahl der Zellen kombiniert werden, indem die Außenseitenoberfläche eines der quadratischen Rohre an der Seite, an der das Element existiert, dazu ausgebildet ist, gegen die Außenseitenoberfläche eines anderen der quadratischen Rohre an der Seite anzustoßen, an der nur die Wand des quadratischen Rohrs existiert.

16. Behälter nach einem der Ansprüche 1 bis 10, bei dem der Korb durch kombinieren einer Vielzahl von quadratischen Rohren (320) ausgebildet ist, die vier Seiten und vier Ecken aufweisen, in welchen eine Außenseite einer Ecke (330c) stufenartig ausgebildet ist, bei dem die Seiten eine äußere Wand, eine innere Wand und einen Raum (370) umfassen, der die äußere Wand und die innere Wand trennt, bei dem die Außenseiten der Ecken der quadratischen Rohre aufeinander gerichtet sind, so dass die quadratischen Rohre abwechselnd gesetzt sind und die Vielzahl der Zellen bereitgestellt ist, und wobei ein leeres Brennelement in dem Raum in dem quadratischen Rohr und in dem Raum, der durch die Seiten des quadratischen Rohrs eingeschlossen ist, gelagert wird.

17. Behälter nach Anspruch 16, bei dem die Außenseite der Ecke des quadratischen Rohrs in zumindest zwei Stadien stufenartig ausgebildet ist.

18. Behälter nach einem der vorhergehenden Ansprüche, bei dem
der Korb eine eckige Querschnittsform aufweist, die durch Bereitstellen von Aussparungen (312) an gegenüberliegenden Kanten der rechteckigen Plattenelemente (309), die neutronenabsorbierende Eigenschaften aufweisen, in vorbestimmten Abständen ausgebildet sind, und wobei die Plattenelemente dazu ausgebildet sind, dass sie orthogonal zueinander und abwechselnd durch Einsetzen der Aussparungen ineinander gestapelt werden,
wobei die innere Fläche des im Ladekörper ausgebildeten Hohlraums (102) mit der äußeren gestalt des Korbs so übereinstimmt, dass der äußere Umfang des Korbs im Wesentlichen in einem anhaftenden Zustand in den Ladekörper eingesetzt wird und der eckige Querschnittsabschnitt des Außenseitenplattenelements, das den Korb darstellt, in Kontakt mit der inneren Fläche des Hohlraums gelangt.

19. Behälter nach einem der Ansprüche 1 bis 17, bei dem
der Korb eine eckige Querschnittsform aufweist, die durch Bereitstellen von Aussparungen (312) an gegenüberliegenden Kanten der rechtwinkligen Plattenelemente (309), die neutronenabsorbierende Eigenschaften aufweisen, in vorbestimmten Abständen ausgebildet ist, und wobei die Plattenelemente so ausgebildet sind, dass sie zueinander orthogonal und abwechselnd durch Einsetzen der Aussparungen ineinander gestapelt werden, wobei der äußere Umfang des Korbs mit einer Wärmetauscherplatte versehen ist, und
wobei die innere Fläche des Hohlraums (102), die in den Ladekörper ausgebildet ist, mit der äußeren Form des Korbs zusammenpasst, und die innere Form des Hohlraums so ausgebildet ist, dass sie im Wesentlichen an der Wärmetauscherplatte anhaftet.

20. Verfahren zum Herstellen eines Behälters (100), in dem eine Vielzahl von Wärmeübertragungslamellen (107) an der äußeren Oberfläche des Ladekörpers (101) vorgesehen sind, der ein der ein leeres Brennelement lagert, und ein äußeres Gehäuse (10) an den äußeren Umfang der Wärmeübertragungslamellen angepasst ist, wobei das Verfahren umfasst:
Ausbilden von Nuten (30s), die sich in axialer und/oder umfänglicher Richtung des Ladekörpers des Behälters erstrecken, an einer Seite eines bandähnlichen Elements A (105a) und eines bandähnlichen Elements B (105b);
jeweiliges Verschweißen der Wärmeübertragungslamelle mit dem bandähnlichen Element A an gegenüberliegenden Seiten in Umfangsrichtung des Ladekörpers, so dass gegenüberliegende Kanten belassen werden, die umlaufend nach außen hervorstehen, an der Oberfläche des bandähnlichen Elements A gegenüber der Oberfläche, an welcher die Nuten ausgebildet sind, so dass eine Einheit in einer U-Form im Querschnitt in einer Radialrichtung des Korbs ausgebildet ist;
Verschweißen einer Vielzahl von Einheiten axial an den äußeren Umfang des Ladekörpers über die Wärmeübertragungslamellen in einem vorbestimmten Abstand von der Außenseite der Einheit; und
Anpassen des bandähnlichen Elements B axial zwischen benachbarten bandähnlichen Elementen A, so dass das zweite bandähnliche Element B sich jeweils zwischen diesen aufspannt, und Zusammenschweißen der bandähnlichen Elemente A und der bandähnlichen Elemente B an deren Kanten von der Außenseite der Einheiten.

21. Produktionsverfahren von Behältern nach Anspruch 20, bei dem eine Vielzahl von Scheidwerkzeugen (321) in einer Reihe in einer Richtung angeordnet sind, in der die Nuten angeordnet sind, und in einer Neigung der Nuten, so dass sie gleichzeitig die Nuten an dem bandähnlichen Element ausbilden.

## Revendications

1. Château de transport (100) comportant un corps de coffre (101) qui loge un panier (301a) dans celui-ci, dans lequel sont formées une pluralité de cellules (310) pour le stockage d'un assemblage irradié, une pluralité d'ailettes (107) de transfert thermique prévues sur une périphérie externe du corps de coffre, un carter externe (10) étant adapté sur la périphérie externe des ailettes de transfert thermique, et un absorbeur de neutrons étant prévu dans l'espace compris entre les ailettes de transfert thermique et le carter externe, **caractérisé en ce que**
le carter externe a une configuration telle qu'une pluralité d'éléments A (105a) de type bande axiale et une pluralité d'éléments B de type bande axiale ont une pluralité de rainures (30s) et d'ailettes rayonnantes (30f), les ailettes étant une saillie entre rainures adjacentes, dirigées vers au moins une des directions axiale et périphérique du corps de coffre formée celles-ci, les éléments A de type bande et les éléments B de type bande sont soudés ensemble au niveau des bords périphériques de ceux-ci, l'ailette de transfert thermique est respectivement soudée à un élément A de type bande sur des côtés périphériques opposés de telle sorte que des bords opposés sont laissés faire saillie périphériquement vers l'extérieur sur une deuxième surface de l'élément de type bande à l'opposé d'une première surface sur laquelle les rainures sont formées, pour former une unité (105c) ayant une forme de U en coupe transversale dans une direction radiale du château de transport, les unités sont soudées au corps de coffre par l'intermédiaire des ailettes de transfert thermique à un intervalle prédéterminé sur l'extérieur de l'unité, et des éléments B de type bande s'étendent respectivement entre les éléments A de type bande d'unités adjacentes et les éléments A de type bande et les éléments B de type bande sont soudés ensemble au niveau des bords de ceux-ci sur l'extérieur des unités.

2. Château de transport selon la revendication 1, dans lequel une partie en étage (202) est formée au niveau des bords circonférentiels opposés des éléments A de type bande et une partie en étage (203) d'éléments B de type bande respectifs est ajustée et soudée à des parties en étage d'éléments A de type bande adjacents entre lesquels les éléments B de type bande s'étendent.

3. Château de transport selon la revendication 1, dans lequel une soudure (204') entre les bords circonférentiels d'éléments A de type bande adjacents et d'éléments B de type bande respectifs les enjambant est une soudure en bout.

4. Château de transport selon la revendication 1, dans lequel des éléments B de type bande respectifs sont empilés ou se chevauchent avec les bords d'éléments A de type bande adjacents entre lesquels les éléments B de type bande s'étendent.

5. Château de transport selon l'une quelconque des revendications précédentes, comprenant un matériau d'aluminium en nid d'abeilles (207) pour former une couche de vide disposée sur la deuxième surface de chacun des éléments A de type bande et des éléments B de type bande.

6. Château de transport selon l'une quelconque des revendications précédentes, dans lequel la forme en coupe transversale de la rainure perpendiculaire à la direction de formation des rainures est rectangulaire.

7. Château de transport selon l'une quelconque des revendications 1 à 5, dans lequel au moins une forme parmi la forme en coupe transversale de la rainure perpendiculaire à la direction de formation des rainures, et la forme en coupe transversale d'ailettes de rayonnement perpendiculaires à la direction de formation des saillies est un arc de cercle.

8. Château de transport selon l'une quelconque des revendications 1 à 5, dans lequel la forme en coupe transversale perpendiculaire à la direction de formation des rainures est trapézoïdale avec la partie externe radiale du carter externe agrandie.

9. Château de transport selon l'une quelconque des revendications précédentes, dans lequel l'élément de type bande est cintré en forme de V inversé ou en en forme de V en coupe transversale.

10. Château de transport selon l'une quelconque des revendications précédentes, dans lequel les rainures dirigées vers la direction axiale du corps de coffre sont inclinées par rapport à la direction axiale du corps de coffre.

11. Château de transport selon l'une quelconque des revendications précédentes, le panier comportant :
des tuyaux carrés (320) ; et
des éléments (330), chacun ayant une forme de L en coupe transversale perpendiculaires à la direction axiale, ayant une surface intérieure de la forme de L, un intérieur d'un coin (330ci) de la forme de L, une surface extérieure de la forme de L, un extérieur d'un coin (330co) de la forme de L et des extrémités de la forme de L, l'élément en forme de L étant équipé de saillies (330t) dirigées vers la direction axiale sur la surface interne de celles-ci, dans lesquels
une surface externe de l'un des tuyaux carrés et les saillies prévues sur la surface interne de l'un des éléments sont conçues pour venir en butée l'une contre l'autre pour former une des cellules pour le stockage d'un assemblage irradié, dans lequel les cellules sont combinées de telle sorte qu'une autre surface externe du tuyau carré et une des extrémités de l'élément constituant une des cellules sont conçues pour venir en butée contre la surface externe de l'élément en forme de L constituant une autre des cellules.

12. Château de transport selon l'une quelconque des revendications 1 à 10, le panier comportant :
des tuyaux carrés (320) ; et
des éléments (330), chacun ayant une forme de L en coupe transversale perpendiculaires à la direction axiale, ayant une surface intérieure de la forme de L, un intérieur d'un coin (330i) de la forme de L, une surface extérieure de la forme de L, un extérieur d'un coin (330co) de la forme de L et des extrémités de la forme de L, l'élément en forme de L étant équipé de saillies (330t) dirigées vers la direction axiale sur la surface interne de celles-ci, dans lesquels
une surface externe de l'un des tuyaux carrés et les saillies prévues sur la surface interne de l'un des éléments sont conçues pour venir en butée l'une contre l'autre pour former une des cellules pour le stockage d'un assemblage irradié, dans lequel les cellules sont combinées de telle sorte qu'une autre surface externe du tuyau carré et une des extrémités de l'élément constituant une cellule sont conçues pour venir en butée contre la surface externe plane de l'élément constituant une autre des cellules.

13. Château de transport selon la revendication 11 ou 12, dans lequel l'extérieur du coin (331co) de l'élément est formé dans une surface plane sur la totalité de la région de l'élément dans la direction axiale, et l'une des extrémités de l'élément est formée dans une surface plane parallèle à la surface plane de l'extérieur du coin, de sorte que lorsque les cellules sont combinées, l'extérieur du coin d'un élément est conçu pour venir en butée contre une des extrémités d'un autre élément.

14. Château de transport selon la revendication 11 ou 12, dans lequel l'extérieur du coin (330c) de l'élément est formé de telle manière qu'une coupe transversale perpendiculaire à la direction axiale de l'élément devient en étage, pour former une partie en étage s'étendant dans la direction axiale de l'élément, l'une des extrémités de l'élément est également formée en étage, de sorte que lorsque les cellules sont combinées, l'extérieur du coin d'un élément est fait s'engager avec une des extrémités d'un autre élément.

15. Château de transport selon l'une quelconque des revendications 1 à 10, le panier comportant :
des tuyaux carrés (320) ; et
des éléments (330), chacun ayant une forme de L en coupe transversale perpendiculaires à la direction axiale, ayant une surfacé intérieure de la forme de L, un intérieur d'un coin (330ci) de la forme de L, une surface extérieure de la forme de L, un extérieur d'un coin (330co) de la forme de L et des extrémités de la forme de L, l'élément en forme de L étant équipé de saillies (330t) dirigées dans la direction axiale sur la surface externe de celles-ci, dans lesquels
un des éléments est agencé à l'intérieur d'un des tuyaux carrés, et une surface interne du tuyau carré et les saillies prévues sur l'élément sont conçues pour venir en butée l'une contre les autres pour former une des cellules pour le stockage d'un assemblage irradié, et la pluralité des cellules sont combinées en faisant venir la surface externe d'un des tuyaux carrés sur le côté où l'élément existe en butée contre la surface externe d'un autre des tuyaux carrés sur le côté où seule la paroi du tuyau carré existe.

16. Château de transport selon l'une quelconque des revendications 1 à 10, dans lequel le panier est formé en combinant une pluralité de tuyaux carrés (320) ayant quatre côtés et quatre coins, dans lesquels un extérieur d'un coin (330c) est formé en étage, dans lequel les côtés incluent une paroi externe, une paroi interne et un espace (370) séparant la paroi externe et la paroi interne, dans lequel les extérieurs des coins des tuyaux carrés sont amenés face à face pour disposer en quinconce les tuyaux carrés et pour créer la pluralité de cellules, et un assemblage irradié est stocké dans l'espace dans le tuyau carré et dans l'espace constitué par les côtés du tuyau carré.

17. Château de transport selon la revendication 16, dans lequel l'extérieur du coin du tuyau carré est formé en étage sur au moins deux étages.

18. Château de transport selon l'une quelconque des revendications précédentes, dans lequel
le panier comporte une forme angulaire en coupe transversale formée par la présence d'encoches (312) sur les bords opposés d'éléments de plaque rectangulaires (309) comportant une propriété d'absorption des neutrons selon un intervalle prédéterminé, et les éléments de plaque sont conçus pour être orthogonaux entre eux et empilés en alternance en insérant les encoches les unes dans les autres,
la face interne de la cavité (102) formée dans le corps de coffre est adaptée à la forme externe du panier, de sorte que la périphérie externe du panier est insérée dans le corps de coffre sensiblement dans un état collé, et la partie angulaire en coupe transversale de l'élément de plaque externe constituant le panier vient en contact avec la face interne de la cavité.

19. Château de transport selon l'une quelconque des revendications 1 à 17,
dans lequel le panier a une forme angulaire en coupe transversale formée par la présence d'encoches (312) sur les bords opposés d'éléments de plaque rectangulaires (309) ayant une propriété d'absorption des neutrons selon un intervalle prédéterminé, et les éléments de plaque sont conçus pour être orthogonaux entre eux et alternativement empilés en insérant les encoches les unes dans les autres, la périphérie externe du panier étant équipée d'une plaque d'échangeur thermique,
la surface interne de la cavité (102) formée dans le corps de coffre est adaptée à la forme externe du panier, et la forme interne de la cavité est formée de manière à coller sensiblement à la plaque d'échangeur thermique.

20. Procédé de fabrication d'un château de transport (100) dans lequel une pluralité d'ailettes de transfert thermique (107) est prévue sur la périphérie externe d'un corps de coffre (101) qui stocke un assemblage irradié, et un carter externe (10) est adapté à la périphérie externe des ailettes de transfert thermique, le procédé **caractérisé en ce que** comprenant :
la formation de rainures (30s) dirigées vers au moins une des directions axiale et périphérique du corps de coffre du château de transport, sur un côté d'un élément A de type bande (105a) axial et d'un élément B de type bande (105b) axial ;
le soudage de l'ailette de transfert thermique respectivement à l'élément A de type bande sur les côtés opposés dans la direction périphérique du corps de coffre de telle sorte que des bords opposés sont laissés faire saillie périphériquement vers l'extérieur, sur la surface de l'élément A de type bande à l'opposé de la surface sur laquelle les rainures sont formées pour former une unité ayant une forme de U en coupe transversale dans une direction radiale du château de transport ;
le soudage d'une pluralité d'unités axialement à la périphérie extérieure du corps de coffre via les ailettes de transfert thermique à un intervalle prédéterminé à partir de l'extérieur de l'unité ; et
le montage d'éléments B de type bande respectifs axialement entre des éléments A de type bande adjacents de telle sorte que les deuxièmes éléments B de type bande s'étendent respectivement entre ceux-ci, et le soudage des éléments A et B de type bande ensemble au niveau des bords de ceux-ci depuis l'extérieur des unités.

21. Procédé de fabrication des châteaux de transport selon la revendication 20, dans lequel une pluralité d'outils de découpe (321) est agencée en un ensemble dans une direction dans laquelle les rainures sont agencées et selon un pas des rainures, de manière à former les rainures sur l'élément de type bande simultanément.
